(19) Europäisches Patentamt
European Patent Office
Office européen des brevets

(11) EP 3 450 209 B1

(12) # EUROPEAN PATENT SPECIFICATION

(45) Date of publication and mention of the grant of the patent:
**05.01.2022 Bulletin 2022/01**

(21) Application number: **18190304.8**

(22) Date of filing: **22.08.2018**

(51) Int Cl.:
***B60C 11/03*** *(2006.01)*

(54) **PNEUMATIC RADIAL TIRE**

RADIALLUFTREIFEN

PNEU RADIAL PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**30.08.2017 JP 2017165931**
**30.08.2017 JP 2017165933**
**30.08.2017 JP 2017165938**
**30.08.2017 JP 2017165936**
**30.08.2017 JP 2017165932**
**30.08.2017 JP 2017165935**
**30.08.2017 JP 2017165934**

(43) Date of publication of application:
**06.03.2019 Bulletin 2019/10**

(73) Proprietor: **Sumitomo Rubber Industries, Ltd.**
**Kobe-shi, Hyogo-ken (JP)**

(72) Inventors:
- **KAMIGORI, Atsushi**
  **Kobe-shi, Hyogo 651-0072 (JP)**
- **UEDA, Kenji**
  **Kobe-shi, Hyogo 651-0072 (JP)**
- **SONODA, Makoto**
  **Kobe-shi, Hyogo 651-0072 (JP)**
- **TAKENAKA, Hiroto**
  **Kobe-shi, Hyogo 651-0072 (JP)**
- **OSAWA, Takuya**
  **Kobe-shi, Hyogo 651-0072 (JP)**
- **HAYASHI, Kota**
  **Kobe-shi, Hyogo 651-0072 (JP)**
- **NAGASE, Masahiro**
  **Kobe-shi, Hyogo 651-0072 (JP)**
- **KURIYAMA, Tomohisa**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A2- 2 732 981**
**EP-A2- 2 907 677**
**US-A1- 2012 060 987**
**US-A1- 2014 238 566**
**US-A1- 2016 318 349**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 450 209 B1

## Description

### Technical Field

The present invention relates to a pneumatic radial tire for a passenger car, and in particular to a pneumatic radial tire which is useful for improving cornering performance of a four-wheeled vehicle.

### Background Art

Fig. 30 shows a time-series change in cornering motions of a general four-wheeled vehicle having a steering mechanism on front wheels thereof. First, as in a state (A), when the steering wheel is operated by the driver during running straight, a slip angle is given to tires (b) of the front wheels, therefore, cornering force is generated at the tires (b) of the front wheels (state (B)). Here, the "slip angle" is an angle between the running direction of the vehicle body (c) and each of the tires (b). Further, the "cornering force" is a component of force applied in a lateral direction with respect to the running direction of frictional force generated on a ground contacting surface of each of the tires (b) when a four-wheeled vehicle (a) turns, and particularly when the slip angle is 1 degree, the cornering force may be referred to as cornering power.

The cornering force generated at the tires (b) of the front wheels brings about a turning motion of the vehicle body (c) accompanied by yawing. This turning motion gives the slip angle to the tires (b) of the rear wheels, therefore, the cornering force is also generated at the tires (b) of the rear wheels (state (C)). Then, when a moment based on the cornering force of the tires (b) of the front wheels and the moment based on the cornering force of the tires (b) of the rear wheels are substantially balanced about a point of center of gravity CG of the vehicle (state (D)), the vehicle body (c) is in a steady state in which the vehicle body (c) moves obliquely at approximately zero yaw acceleration (hereinafter, such a running state may be referred to as a "revolution running state").

The inventors have recognized that it is important to shift the vehicle body to the revolution running state as soon as possible after cornering steering in order to improve the cornering performance of a four-wheeled vehicle, and then under the above recognition, the inventors conducted various kinds of research repeatedly on the tires.

Generally, the cornering power generated by a tire in a state in which the tire is mounted on a vehicle is called equivalent cornering power (hereinafter referred to as "equivalent CP"). This equivalent CP satisfies a relation of a following expression (2) with the cornering power of a tire alone measured by a bench test or the like (hereinafter referred to as "on-bench CP").

Equivalent CP = On-bench CP x CP amplification factor…(2)

The equivalent CP is the cornering power including the influence of so-called roll steer, compliance steer, and the like and is the cornering power when assuming that rolling characteristics and suspension characteristics and the like of the vehicle are incorporated in the tire. These characteristics are represented by the CP amplification factor.

Fig. 31 is a graph showing relationship between the on-bench CP of a general pneumatic radial tire and a load applied thereto. Normally, it can be seen that the on-bench CP increases as the load increases, reaches the peak, and then gradually decreases after reaching the peak. Further, this graph also shows the approximate load range of the tire mounted on a four-wheeled vehicle of FF (front engine front drive) during cornering. First, in a four-wheeled vehicle of FF, a larger load tends to be applied to the front wheel tires than to the rear wheel tires. Further, in each pair of the front wheels and the rear wheels, a larger load tends to be applied to the tire located on an inner side of the cornering than the tire located on an outer side of the cornering. Therefore, between the tires on a side of the front wheels and the tires on a side of the rear wheels, there is a relatively large difference with respect to Ff and Fr which are average values of the on-bench CP generated at the time of cornering.

On the premise of the aforementioned load distribution on each of the tires, in order to improve the cornering performance by shifting to the revolution running state as soon as possible during the cornering motion of the vehicle, it is considered effective to relatively decrease the equivalent CP of the tires of the front wheels and to relatively increase the equivalent CP of the tires of the rear wheels on the other hand, that is, to make the equivalent CP of them closer, or to improve these so that they become close to each other at an early stage.

In order to relatively decrease the equivalent CP of the tires of the front wheels, the inventors focused on self-aligning torque (hereinafter may be simply referred to as "SAT") which had not been focused so far.

Here, SAT will be briefly described. Fig. 32 is an explanatory diagram showing a ground contacting surface of one of the tires (b) as viewed from the road surface during cornering at a slip angle $\alpha$ with respect to running direction (Y). As shown in Fig. 32, tread rubber of a ground contacting surface (P) is elastically deformed, therefore, lateral CF (cornering force) is generated. when a working point (G) of the CF (corresponding to a centroid of the hatched ground contacting surface) is located on a rear side of a ground contacting surface center (Pc) of the tire, the SAT which is a moment in a direction such that the slip angle $\alpha$ decreases is applied to the tire around its ground contacting surface center (Pc). That is, the SAT acts in a direction to decrease the slip angle around the ground contacting surface center (Pc) of the tire. Note that a distance NT along the running direction (Y) between the ground contacting surface center (Pc) and the working point (G) of the CF is defined as a pneumatic trail.

Further, as a result of various experiments by the inventors, it has been found that the CP amplification factor of the above expression (1) is substantially proportional to the reciprocal of the SAT. Thereby, a tire with a large SAT results in relatively low equivalent CP.

On the other hand, the rear wheels have no steering mechanism, therefore, there is no influence of the SAT, thereby, as a tire, by increasing the on-bench CP itself, it is possible that its equivalent CP is increased.

As is clear from the above, in order to promptly shift a four-wheeled vehicle, in particular a four-wheeled vehicle of FF (front engine front drive) in which larger load is applied to the front wheels, to the revolution running state during cornering, the tires are required to have characteristics to generate large SAT.

The inventors further conducted research on the relationship between the SAT and a tread pattern of the tire, then it became clear that a shoulder portion contributed most to the SAT in a tread portion of the tire. Further, the inventors found that making rigidity in a tire circumferential direction and the rigidity in a tire axial direction of outer shoulder land regions which were located on outer sides of the vehicle during cornering higher than those of inner shoulder land regions which were located on inner sides of the vehicle during cornering was especially effective.

A pneumatic tire in accordance with the preamble of claim 1 is known from document US 2016/318349 A1. A pneumatic tire comprising an asymmetric tread portion provided with circumferential main grooves which define a plurality of land portions including an outer shoulder land portion, a middle land portion and an inner shoulder land portion are known from documents US 2012/060987 A1, EP 2 907 677 A2, EP 2 732 981 A2 and US 2014/238566 A1.

## Summary of the Invention

The present invention was made in view of the above problems, and a primary object thereof is to provide a pneumatic radial tire useful for improving the cornering performance of a four-wheeled vehicle. The object is satisfied by claim 1.

In one aspect of the present invention, a pneumatic radial tire for a passenger car comprises a carcass having a radial structure, a belt layer arranged on an outer side of the carcass and formed of at least two belt plies, and a tread portion whose position when mounted on a vehicle is specified, wherein the tread portion has an outer tread edge and an inner tread edge respectively located, when the tire is mounted on a vehicle, on an outer side and an inner side of the vehicle, the tread portion has a tread pattern formed in an asymmetric shape with respect to a tire equator, the tread portion is divided into a plurality of circumferential land regions by a plurality of main grooves extending continuously in a tire circumferential direction, the circumferential land regions include an outer shoulder land region including the outer tread edge, an inner shoulder land region including the inner tread edge, and at least one middle land region arranged therebetween, and the outer shoulder land region is larger than the inner shoulder land region with respect to rigidity in the tire circumferential direction and the rigidity in a tire axial direction.

In another aspect of the invention, it is preferred that the pneumatic radial tire satisfies the following expression (1) under the following running conditions:

tire rim: standard rim
tire inner pressure: standard inner pressure
tire load: 70% of standard tire load
speed: 10 km/h
slip angle: 0.7 degrees
camber angle: -1.0 degrees

$$SAT \geq 0.18 \times L \times CF \ldots (1)$$

wherein "SAT" is self-aligning torque [N·m], "L" is a maximum ground contacting length [m] in the tire circumferential direction of the tread portion, and "CF" is cornering force [N].

In the pneumatic radial tire according to the invention, the outer shoulder land region is provided with a plurality of outer shoulder lateral grooves extending axially inwardly from the outer tread edge and terminating within the outer shoulder land region, the inner shoulder land region is provided with a plurality of inner shoulder lateral grooves extending axially inwardly from the inner tread edge and terminating within the inner shoulder land region, number of the inner shoulder lateral grooves is not less than 1.1 times number of the outer shoulder lateral grooves, and an angle of each of the outer shoulder lateral grooves with respect to the tire axial direction is smaller than an angle of each of the inner shoulder lateral grooves with respect to the tire axial direction.

In another aspect of the invention, it is preferred that the number of the inner shoulder lateral grooves is not more than 2.0 times the number of the outer shoulder lateral grooves.

In another aspect of the invention, it is preferred that a sum of the angle of each of the outer shoulder lateral grooves with respect to the tire axial direction and the angle of each of the inner shoulder lateral grooves with respect to the tire axial direction is in the range of from 30 to 60 degrees.

In another aspect of the invention, it is preferred that the outer shoulder land region is provided with a plurality of outer shoulder lateral grooves extending axially inwardly from the outer tread edge and terminating within the outer shoulder land region, and outer shoulder block pieces each defined between a pair of the outer shoulder lateral grooves adjacent to each other in the tire circumferential direction and having a tire circumferential direction length (Sbo), the inner shoulder land region is provided with a plurality of inner shoulder lateral grooves extending axially inwardly from the inner tread edge and terminating within the inner shoulder land region, and inner shoulder block pieces each defined between a pair of the inner shoulder lateral grooves adjacent to each other in the tire circumferential direction and having a tire circumferential direction length (Sbi), and a ratio Sbi/Sbo of the tire circumferential direction lengths is in the range of from 0.60 to 0.90.

In another aspect of the invention, it is preferred that the middle land region includes an outer middle land region adjacent to the outer shoulder land region and an inner middle land region adjacent to the inner shoulder land region, the outer middle land region is provided with a plurality of outer middle lateral grooves extending from an edge thereof on a side of the inner tread edge toward the outer tread edge and terminating within the outer middle land region, and outer middle block pieces each defined between a pair of the outer middle lateral grooves adjacent to each other in the tire circumferential direction and having a tire circumferential direction length (Mbo), the inner middle land region is provided with a plurality of inner middle lateral grooves extending from an edge thereof on a side of the inner tread edge toward the outer tread edge and terminating within the inner middle land region, and inner middle block pieces each defined between a pair of the inner middle lateral grooves adjacent to each other in the tire circumferential direction and having a tire circumferential direction length (Mbi), and a ratio Mbi/Mbo of the tire circumferential direction lengths is in the range of from 0.70 to 0.90.

In another aspect of the invention, it is preferred that the tire circumferential direction length (Mbo) is smaller than the tire circumferential direction length (Sbo). In another aspect of the invention, it is preferred that the middle land region includes an inner middle land region adjacent to the inner shoulder land region and an outer middle land region adjacent to the outer shoulder land region, the inner middle land region is provided with a plurality of inner middle lateral grooves extending from an edge thereof on a side of the inner tread edge toward the outer tread edge, the outer middle land region is provided with a plurality of outer middle lateral grooves extending from an edge thereof on a side of the inner tread edge toward the outer tread edge, number N4 of the outer middle lateral grooves is in the range of from 0.5 to 0.7 times number N3 of the inner middle lateral grooves, a ratio L3/W10 of a length L3 in the tire axial direction of each of the inner middle lateral grooves and a width W10 in the tire axial direction of the inner middle land region is larger than a ratio L4/W13 of a length L4 in the tire axial direction of each of the outer middle lateral grooves and a width W13 in the tire axial direction of the outer middle land region, a groove depth (d6) of each of the inner middle lateral grooves is larger than a groove depth (d7) of each of the outer middle lateral grooves, and a groove width W11 of each of the inner middle lateral grooves is not less than a groove width W14 of each of the outer middle lateral grooves.

In another aspect of the invention, it is preferred that the inner middle lateral grooves extend from the edge on the side of the inner tread edge of the inner middle land region and terminate within the inner middle land region, and the outer middle lateral grooves extend from the edge on the side of the inner tread edge of the outer middle land region and terminate within the outer middle land region.

In another aspect of the invention, it is preferred that a total ΣL4 of the lengths L4 in the tire axial direction of all the outer middle lateral grooves provided in the outer middle land region is in the range of from 0.33 to 0.70 times a total ΣL3 of the lengths L3 in the tire axial direction of all the inner middle lateral grooves provided in the inner middle land region.

In another aspect of the invention, it is preferred that the middle land region is provided with a plurality of middle lateral grooves extending from an edge thereof on a side of the inner tread edge toward the outer tread edge and terminate within the middle land region, and a plurality of middle sipes completely crossing the middle land region.

In another aspect of the invention, it is preferred that the middle land region includes an inner middle land region located on a side of the inner tread edge and an outer middle land region located on a side of the outer tread edge of the inner middle land region, the middle lateral grooves include a plurality of inner middle lateral grooves provided in the inner middle land region and a plurality of outer middle lateral grooves provided in the outer middle land region, a ratio (L3/W10) of a length (L3) in the tire axial direction of each of the inner middle lateral grooves and a width (W10) in the tire axial direction of the inner middle land region is larger than a ratio (L4/W13) of a length (L4) in the tire axial direction of each of the outer middle lateral grooves and a width (W13) in the tire axial direction of the outer middle land region.

In another aspect of the invention, it is preferred that a groove depth of each of the inner middle lateral grooves is larger than a groove depth of each of the outer middle lateral grooves.

In another aspect of the invention, it is preferred that the circumferential land regions include an inner middle land region adjacent to the inner shoulder land region, the inner shoulder land region is provided with a plurality of inner shoulder lateral grooves extending axially inwardly from the inner tread edge and terminating within the inner shoulder land region, the inner middle land region is provided with a plurality of inner middle lateral grooves extending from an edge thereof on a side of the inner tread edge toward the outer tread edge and terminating within the inner middle land region, and number of the inner shoulder lateral grooves is larger than number of the inner middle lateral grooves.

In another aspect of the invention, it is preferred that the number of the inner middle lateral grooves is in the range of from 0.70 to 0.80 times the number of the inner shoulder lateral grooves.

In another aspect of the invention, it is preferred that a length in the tire axial direction of each of the inner shoulder lateral grooves is in the range of from 0.70 to 0.80 times a width in the tire axial direction of the inner shoulder land region.

In another aspect of the invention, it is preferred that the circumferential land regions include an outer middle land region adjacent to the outer shoulder land region, the outer shoulder land region is provided with a plurality of outer shoulder lateral grooves extending axially inwardly from the outer tread edge and terminating within the outer shoulder land region, the outer middle land region is provided with a plurality of outer middle lateral grooves extending from an edge thereof on a side of the inner tread edge toward the outer tread edge and terminating within the outer middle land region.

In another aspect of the invention, it is preferred that a length in the tire axial direction of each of the outer shoulder lateral grooves is in the range of from 0.70 to 0.80 times a width in the tire axial direction of the outer shoulder land region.

In another aspect of the invention, it is preferred that number of the outer middle lateral grooves is in the range of from 2.00 to 3.50 times number of the outer shoulder lateral grooves.

## Brief Description of the Drawings

Fig. 1 is a lateral cross-sectional view of a pneumatic radial tire as an embodiment of the present invention.
Fig. 2 is a development view of a tread portion of the tire of Fig. 1.
Fig. 3 is an explanatory diagram showing SAT applied to front wheel tires when a vehicle is cornering to the left.
Fig. 4A is an explanatory diagram of a method of measuring rigidity of a land region.
Fig. 4B is an explanatory diagram of the method of measuring the rigidity of the land region.
Fig. 5 is an enlarged view of an inner shoulder land region of Fig. 2.
Fig. 6 is a cross-sectional view taken along B-B line of Fig. 5.
Fig. 7 is an enlarged view of an outer shoulder land region of Fig. 2.
Fig. 8 is a cross-sectional view taken along C-C line of Fig. 7.
Fig. 9 is an enlarged view of a middle land region of Fig. 2.
Fig. 10A is a cross-sectional view taken along D-D line of Fig. 9.
Fig. 10B is a cross-sectional view taken along E-E line of Fig. 9.
Fig. 11 is a development view of the tread portion of the tire according to another embodiment of the present invention.
Fig. 12 is an enlarged view of an outer middle land region of Fig. 11.
Fig. 13A is a cross-sectional view taken along F-F line of Fig. 12.
Fig. 13B is a cross-sectional view taken along G-G line of Fig. 12.
Fig. 14 is an enlarged view of the inner middle land region and an outer middle land region of Fig. 11.
Fig. 15 is an enlarged view of the inner shoulder land region of the tire according to yet another embodiment of the present invention.
Fig. 16 is a development view of the tread portion of the tire according to yet another embodiment of the present invention.
Fig. 17 is an enlarged view of the inner middle land region and the outer middle land region of Fig. 16.
Fig. 18A is a cross-sectional view taken along H-H line of Fig. 17.
Fig. 18B is a cross-sectional view taken along I-I line of Fig. 17.
Fig. 19 is a development view of the tread portion of the tire according to yet another embodiment of the present invention.

Fig. 20 is an enlarged view of the inner shoulder land region of Fig. 19.
Fig. 21 is a cross-sectional view taken along J-J line of Fig. 20.
Fig. 22 is a cross-sectional view taken along K-K line of Fig. 19.
Fig. 23 is a development view of the tread portion of the tire according to yet another embodiment of the present invention.
Fig. 24 is an enlarged view of the outer shoulder land region and the outer middle land region of Fig. 23.
Fig. 25A is a cross-sectional view taken along L-L line of Fig. 24.
Fig. 25B is a cross-sectional view taken along M-M line of Fig. 24.
Fig. 26 is a development view of the tread portion of the tire according to yet another embodiment of the present invention.
Fig. 27 is a development view of the tread portion of the tire as Comparative Example 1.
Fig. 28 is a development view of the tread portion of the tire as Reference 8.
Fig. 29 is a development view of the tread portion of the tire as Reference 11.
Fig. 30 is an explanatory diagram showing cornering motions of a four-wheeled vehicle.
Fig. 31 is a graph showing relationship between on-bench CP of a general pneumatic radial tire and a load applied thereto.
Fig. 32 is an explanatory diagram showing a ground contacting surface of the tire of a front wheel of a vehicle during cornering.

## Description of the Preferred Embodiment

An embodiment of the present invention will now be described in detail in conjunction with accompanying drawings.

Fig. 1 is a lateral cross-sectional view of a pneumatic radial tire (hereinafter, may be simply referred to as "tire") 1 in this embodiment passing through a tire rotational axis thereof. Fig. 2 is a development view of a tread portion 2 of the tire 1 of Fig. 1. Fig. 1 corresponds to a cross-sectional view taken along A-A line of Fig. 2. The tire 1 in this embodiment is configured as a pneumatic radial tire for a passenger car. The tire 1 in this embodiment is suitable for a passenger car in which vertical load applied to the front wheels is larger than the vertical load applied to the rear wheels in a stationary state, and is particularly preferably used for a passenger car of FF.

As shown in Fig. 1, the tire 1 in this embodiment is provided with a carcass 6 having a radial structure and a belt layer 7.

The carcass 6 extends between bead cores 5 of bead portions 4 via the tread portion 2 and sidewall portions 3. The carcass 6 is formed of a single carcass ply 6A, for example.

The carcass ply 6A is formed of carcass cords made of organic fibers arranged at angles each in a range of from 75 to 90 degrees with respect to the tire circumferential direction, for example.

The belt layer 7 is composed of at least two belt plies 7A and 7B. The belt plies 7A and 7B are formed of steel cords arranged at angles each in a range of from 10 to 45 degrees with respect to the tire circumferential direction, for example. The belt ply 7A is formed of the steel cords inclined in a direction opposite to the steel cords of the belt ply 7B adjacent thereto, for example. A reinforcing layer such as a band layer and the like may be further arranged on an outer side of the belt layer 7.

As shown in Fig. 2, a tread pattern whose position when mounted on a vehicle is specified is formed in the tread portion 2. The tread pattern of the tread portion 2 is formed in an asymmetric shape with respect to a tire equator (C). The mounting position of the tire 1 on a vehicle is indicated by a letter or a symbol on one of the sidewall portions 3 or the like, for example.

The tread portion 2 has an outer tread edge (To) and an inner tread edge (Ti). The outer tread edge (To) is located, when the tire is mounted on a vehicle, on the outer side (right side in Fig. 2) of the vehicle. The inner tread edge (Ti) is located, when the tire is mounted on a vehicle, on the inner side (left side in Fig. 2) of the vehicle.

The tread edges (To) and (Ti) are defined as outermost ground contacting positions in the tire axial direction when the tire 1 in a standard state is in contact with a flat surface with zero camber angles by being loaded with a standard tire load. The standard state is a state in which the tire is mounted on a standard rim, inflated to a standard inner pressure, and loaded with no tire load. In this specification, unless otherwise noted, dimensions and the like of various parts of the tire are values measured in the standard state. In the standard state, a distance in the tire axial direction between the outer tread edge (To) and the inner tread edge (Ti) is defined as a tread width TW.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The tread portion 2 in this embodiment is divided into a plurality of circumferential land regions by a plurality of main grooves 10 extending continuously in the tire circumferential direction. The main grooves 10 include an inner shoulder main groove 11 and an outer shoulder main groove 12. The main grooves 10 in this embodiment further include a crown main groove 13.

The inner shoulder main groove 11 is provided closest to the inner tread edge (Ti) among the plurality of the main grooves 10, for example. The inner shoulder main groove 11 is provided on a side of the inner tread edge (Ti) of the tire equator (C).

The outer shoulder main groove 12 is provided closest to the outer tread edge (To) among the plurality of the main grooves 10, for example. The outer shoulder main groove 12 is provided on a side of the outer tread edge (To) of the tire equator (C).

The crown main groove 13 is provided between the inner shoulder main groove 11 and the outer shoulder main groove 12. One crown main groove 13 is provided on the tire equator (C), for example. In another embodiment, the crown main grooves 13 may be provided one on each side of the tire equator (C) in the tire axial direction, for example.

The main grooves 10 in this embodiment extend linearly along the tire circumferential direction, for example. In another embodiment, the main grooves 10 may extend in a wavy or zigzag manner, for example. Groove widths of the main grooves (a groove width W1 of the inner shoulder main groove 11, a groove width w2 of the outer shoulder main groove 12, and a groove width w3 of the crown main groove 13) can be arbitrarily determined according to the custom. In order to provide sufficient drainage performance while maintaining pattern rigidity of the tread portion 2, it is preferred that each of the groove widths W1, W2, and w3 is in about a range of from 2.5% to 5.0% of the tread width TW, for example. In a case of a radial tire for a passenger car, it is preferred that a groove depth of each of the main grooves 11 to 13 is in about a range of from 5 to 10mm, for example.

The tread portion 2 in this embodiment includes, as the circumferential land regions, an outer shoulder land region 16, an inner shoulder land region 17, and at least one middle land region 18 arranged therebetween.

One of the characteristics of the present invention is that the outer shoulder land region 16 is configured to be larger than the inner shoulder land region 17 with respect to the rigidity in the tire circumferential direction (front-rear) and the rigidity in the tire axial direction (lateral).

As described above, during cornering of a four-wheeled vehicle, it is effective to generate a large SAT in order to improve the cornering performance by shifting the vehicle to the revolution running state as soon as possible. The inventors made a detailed analysis of pressure distribution of the ground contacting surface of a tire during cornering, and then they found that the rigidity in the tire circumferential direction and the rigidity in the tire axial direction of the outer shoulder land region 16 and the inner shoulder land region 17 of the tread portion had the greatest contribution to the SAT. Hereinafter, in this regard, as shown in Fig. 3, explanation will be made on a case where the vehicle is cornering to the left as an example.

In the front wheel tires having a slip angle with respect to the running direction, the circumferential land regions are deformed counterclockwise by the friction between the road surface and tread faces of the tires. when the slip angle becomes substantially constant, each of the deformed circumferential land regions try to return to their original state, therefore, they generate reaction force, that is, the SAT in the clockwise direction as indicated by arrows in the figure. In order to increase the SAT, i.e., the clockwise torque around the ground contacting surface center (Pc) of the tread portion, it is effective to generate large force in a driving direction in a rear region x1 of a ground contacting region of the outer shoulder land region 16 of the tire located on an outer side of the cornering (the tire on the right side) which has great contribution to the SAT. In order to generate such a force, it is important to increase the rigidity in the tire circumferential direction of the outer shoulder land region 16.

On the other hand, regarding the inner shoulder land region 17, in order to increase the SAT, it is effective to generate large force in a braking direction in a front region x2 of a ground contacting region of the inner shoulder land region 17 of the tire located on the outer side of the cornering (the tire on the right side) which has great contribution to the SAT. In order to generate such force in the braking direction, contrary to the outer shoulder land region 16, in the inner shoulder land region 17, it is effective to decrease the rigidity in the tire circumferential direction to improve a ground contacting property so as to flexibly follow the road surface.

Therefore, as in the present invention, the tire 1 in which the outer shoulder land region 16 is configured to be larger than the inner shoulder land region 17 with respect to the rigidity in the tire circumferential direction can effectively increase the SAT. Thereby, a four-wheeled vehicle with the tires 1 of the present invention mounted on four wheels thereof promptly shifts to the revolution running state during cornering, therefore, it is possible that excellent cornering performance is provided.

In the pneumatic radial tire, an outer diameter thereof gradually decreases axially outwardly in the shoulder land region. Thereby, in the tire located on the outer side of the cornering of the front wheels, the outer shoulder land region 16 generates camber thrust which is force in the opposite direction to the cornering force of the tire. The inner shoulder land region 17 generates the camber thrust in the same direction as the cornering force of the tire. The outer shoulder land region 16 is configured to be larger than the inner shoulder land region 17 with respect to the rigidity in the tire axial direction, therefore, larger camber thrust is generated than the inner shoulder land region 17. Thereby, the camber thrust generated by the outer shoulder land region 16 is helpful for decreasing the cornering force of the front wheel tires, therefore, it is possible that the vehicle is shifted to the revolution running state more quickly during cornering.

In a preferred embodiment, in order to prevent occurrence of uneven wear while generating larger SAT, with respect to the rigidity in the tire circumferential direction, it is preferred that the outer shoulder land region 16 has a rigidity ratio $\sigma 1$ in a range of from 1.05 to 1.40 times that of the inner shoulder land region 17. Similarly, with respect to the rigidity in the tire axial direction, it is preferred that the outer shoulder land region 16 has a rigidity ratio $\sigma 2$ in a range of from 1.05 to 1.40 times that of the inner shoulder land region 17.

The rigidity in the tire circumferential direction and the rigidity in the tire axial direction of each of the land regions 16 and 17 are indicated by the force required to generate a unit deformation amount in respective direction. Specific measurement methods include the following. Fig. 4A shows the inner shoulder land region 17 as an example of the land region. As shown in Fig. 4A, the inner shoulder land region 17, which is a measuring object, having a length not less than 2 pitches in the tire circumferential direction is cut out from the tire 1. At this time, a land region test piece TP is cut out by a surface PS1 passing through a groove bottom (10b) of the main groove 10 and extending in parallel with the ground contacting surface of the tread portion and a surface PS2 passing through the inner tread edge (Ti) and extending along a tire radial direction (shown in Fig. 4B). Next, a ground contacting surface of the land region test piece TP is pressed against a flat test surface with the standard tire load to maintain the ground contacting state, for example. Next, the test surface is moved with force (F) in the tire circumferential direction (Y) or the tire axial direction (x), and then the displacement of the land region in the direction (Y) or (x) is measured. Then, the land portion rigidity in each of the directions (Y) and (x) is obtained by dividing the force (F) by the amount of displacement in respective direction of the land region test piece TP.

In a preferred embodiment, in a bench test, for example (in a test by using a flat belt type tire testing machine, for example), it is preferred that the tire 1 satisfies the following expression (1) under the following running conditions.

Tire rim: standard rim
Tire inner pressure: standard inner pressure
Load applied to tire: 70% of standard load
Speed: 10 km/h
Slip angle: 0.7 degrees
camber angle: - (minus) 1.0 degree

$$SAT \geq 0.18 \times L \times CF \ldots (1)$$

Here, "SAT" is the self-aligning torque (N·m), "L" is a maximum ground contacting length (m) in the tire circumferential direction of the tread portion, and "CF" is the cornering force (N). Further, "minus" of the camber angle means that the upper portion of the tire leans toward the center of the vehicle.

The measurement conditions shown above are based on conditions of the front wheels during cornering (lateral acceleration: approximately 0.2 G) which tend to occur frequently in a four-wheeled vehicle. The inventors mounted various sensors on a four-wheeled vehicle and measured the above-mentioned conditions of the tire during cornering (load, camber angle, slip angle, and angle), and approximated these in the bench test to obtain the above running conditions. Thereby, the tire 1 which satisfies the above expression (1) can reliably and sufficiently generate the SAT in a normal cornering state. That is, it is possible that the vehicle is shifted to the revolution running state more quickly during cornering.

The tire 1 of the present invention can be easily realized by improving the tread pattern of the tread portion 2 on the premise of the basic radial structure described above. Some embodiments of such a tread pattern will be described below.

[ Configuration of Inner Shoulder Land Region ]

Fig. 5 is an enlarged view of the inner shoulder land region 17. As shown in Fig. 5, the inner shoulder land region 17 includes the inner tread edge (Ti). That is, the inner shoulder land region 17 is formed between the inner tread edge (Ti) and the inner shoulder main groove 11. The inner shoulder land region 17 has a width w4 in the tire axial direction in a range of from 0.25 to 0.35 times the tread width TW, for example.

The inner shoulder land region 17 is provided with a plurality of inner shoulder lateral grooves 21. Each of the inner shoulder lateral grooves 21 extends axially inwardly from the inner tread edge (Ti) and terminates within the inner shoulder land region 17, Further, the inner shoulder lateral grooves 21 are inclined with respect to the tire axial direction.

In a preferred embodiment, each of the inner shoulder lateral grooves 21 is inclined at an angle $\theta 1$ in a range of from 10 to 30 degrees with respect to the tire axial direction, for example. However, the present invention is not limited to such an embodiment, and each of the inner shoulder lateral grooves 21 may be inclined at an angle in a range of from 30 to 50 degrees with respect to the tire axial direction, for example. The inner shoulder lateral grooves 21 in this embodiment extend linearly so as to be inclined each at a constant angle with respect to the tire axial direction. The inner shoulder lateral grooves 21 configured as such are helpful for increasing the rigidity in the tire circumferential direction relative to the rigidity in the tire axial direction.

A length L1 of each of the inner shoulder lateral grooves 21 in the tire axial direction is in a range of from 0.50 to 0.90 times, more preferably in a range of from 0.70 to 0.85 times, further preferably in a range of from 0.70 to 0.80 times the width w4 in the tire axial direction of the inner shoulder land region 17, for example. It is preferred that a groove width w5 of each of the inner shoulder lateral grooves 21 is in a range of from 0.30 to 0.45 times the groove width W1 of the inner shoulder main groove 11, for example. The groove width w5 in this embodiment is set to be constant, but it may vary. when the lengths L1 and the groove widths w5 of the inner shoulder lateral grooves 21 are set as above, it is possible that good wet performance is provided while decreasing the rigidity in the tire circumferential direction and the rigidity in the tire axial direction of the inner shoulder land region 17 in a more preferred range.

Fig. 6 is a cross-sectional view of one of the inner shoulder lateral grooves 21 taken along B-B line of Fig. 5. As shown in Fig. 6, each of the inner shoulder lateral grooves 21 has a groove depth gradually decreasing toward the inner shoulder main groove 11 in a region between the inner tread edge (Ti) and the inner shoulder main groove 11, for example. As described above, when a lot of the inner shoulder lateral grooves 21 are arranged so as to decrease the rigidity of the inner shoulder land region 17, pumping noise during running tends to increase. However, it is possible that sound pressure of such pumping noise is decreased by significantly decreasing groove volume of the inner shoulder lateral grooves 21 on an inner side in the tire axial direction as in this embodiment.

In a particularly preferred embodiment, it is preferred that a depth (d1) of the inner shoulder lateral groove 21 at an inner end thereof is in a range of from 40% to 60% of a depth (d2) of the inner shoulder lateral groove 21 at the inner tread edge (Ti). Note that the depth d2 at the inner end is measured at a position axially outwardly away from the inner end of the inner shoulder lateral groove 21 by a length L5 which is 25% of the length L1 thereof in the tire axial direction.

As shown in Fig. 5, in order to decrease the rigidity in the tire circumferential direction and the rigidity in the tire axial direction of the inner shoulder land region 17 to a preferred range, it is preferred that number (total number) N1 of the inner shoulder lateral grooves 21 is in a range of from 65 to 85, for example. However, the present invention is not limited to such an embodiment, and the number (the total number) N1 of the inner shoulder lateral grooves 21 may be in a range of from 80 to 100, for example.

The inner shoulder land region 17 includes an inner shoulder rib-like portion 25 located between the inner shoulder main groove 11 and each of the inner shoulder lateral grooves 21 and inner shoulder block pieces 26 each defined between a pair of the inner shoulder lateral grooves adjacent to each other in the tire circumferential direction.

The inner shoulder rib-like portion 25 is not provided with a groove and extends continuously in the tire circumferential direction, for example. The inner shoulder rib-like portion 25 configured as such increases the rigidity in the tire circumferential direction of the inner shoulder land region 17 in an axially inner region thereof, therefore, it is helpful for obtaining large equivalent CP. A width w6 in the tire axial direction of the inner shoulder rib-like portion 25 is in a range of from 0.15 to 0.30 times, more preferably in a range of from 0.20 to 0.30 times the width w4 of the inner shoulder land region 17, for example.

Each of the inner shoulder block pieces 26 has a tire circumferential direction length (Sbi). It is preferred that the tire circumferential direction length (Sbi) of each of the inner shoulder block pieces 26 in this embodiment is in a range of from 0.9% to 1.2% of one tire circumferential length of the inner shoulder land region 17, for example. In a more preferred embodiment, each of the inner shoulder block pieces 26 extends obliquely in the tire axial direction with the constant tire circumferential direction length (Sbi).

It is preferred that the inner shoulder land region 17 has a land ratio in a range of from 75% to 85%, for example. In this specification, the "land ratio" is defined as a ratio Sb/Sa of a total ground contacting area (Sb) of the actual land region to a total area (Sa) of a virtual ground contacting surface obtained by filling all the grooves provided in the target land region.

[ Configuration of Outer Shoulder Land Region ]

Fig. 7 is an enlarged view of the outer shoulder land region 16. As shown in Fig. 7, the outer shoulder land region 16 includes the outer tread edge (To). That is, the outer shoulder land region 16 is formed between the outer tread edge (To) and the outer shoulder main groove 12. The outer shoulder land region 16 has a width w7 in the tire axial direction in a range of from 0.25 to 0.35 times the tread width TW, for example. As a preferred embodiment, the outer shoulder land region 16 in this embodiment is formed to have the same width as the inner shoulder land region 17 (shown in Fig. 5).

The outer shoulder land region 16 is provided with a plurality of outer shoulder lateral grooves 28. Each of the outer shoulder lateral grooves 28 extends axially inwardly from the outer tread edge (To) and terminates within the outer shoulder land region 16. Each of the outer shoulder lateral grooves 28 in this embodiment has the same shape, but they are not limited to such an embodiment.

Each of the outer shoulder lateral grooves 28 extends at a smaller angle $\theta 4$ (not shown) with respect to the tire axial direction than the inner shoulder lateral grooves 21 (shown in Fig. 5 and the same applies hereinafter)

The angle $\theta 4$ is preferably not more than 15 degrees, more preferably in a range of from 0 to 10 degrees, for example. Each of the outer shoulder lateral grooves 28 in this embodiment extends linearly along the tire axial direction and the angle $\theta 4$ is zero degrees. The outer shoulder lateral grooves 28 effectively make the rigidity in the tire axial direction of the outer shoulder land region 16 larger than that of the inner shoulder land region 17 in particular, therefore, it is possible that the SAT is increased eventually.

In a particularly preferred embodiment, it is preferred that a sum (which is the sum of the absolute values) of the angle $\theta 4$ of the outer shoulder lateral groove 28 with respect to the tire axial direction and the angle $\theta 1$ of the inner shoulder lateral groove 21 with respect to the tire axial direction is in a range of from 30 to 60 degrees. By configuring the outer shoulder lateral grooves 28 as such, the rigidity in the tire axial direction of the outer shoulder land region 16 becomes effectively larger than that of the inner shoulder land region 17, which is helpful for increasing the SAT.

It is preferred that a length L2 in the tire axial direction of each of the outer shoulder lateral grooves 28 is smaller than the length L1 in the tire axial direction of each of the inner shoulder lateral grooves 21. It is preferred that the length L2 of the outer shoulder lateral groove 28 is in a range of from 0.90 to 0.98 times the length L1 of the inner shoulder lateral groove 21, for example. The outer shoulder lateral grooves 28 configured as such relatively increase the rigidity in the tire circumferential direction of the outer shoulder land region 16 as well, therefore, it is possible that the SAT is increased eventually.

It is preferred that each of the outer shoulder lateral grooves 28 has a groove width w8 which is equal to or smaller than the groove width w5 of each of the inner shoulder lateral groove 21, for example. Specifically, it is preferred that the groove width w8 of each of the outer shoulder lateral grooves 28 is in a range of from 0.80 to 1.0 times the groove width w5 of each of the inner shoulder lateral grooves 21. The groove width w8 in this embodiment is constant, but it may vary. Further, it is preferred that the groove width w8 of each of the outer shoulder lateral grooves 28 is in a range of from 0.30 to 0.50 times the groove width w3 of each of the outer shoulder main grooves 12, for example.

Fig. 8 is a cross-sectional view of one of the outer shoulder lateral grooves 28 taken along C-C line of Fig. 7. As shown in Fig. 8, each of the outer shoulder lateral grooves 28 has a groove depth gradually decreasing axially inwardly from the outer tread edge (To), for example. The outer shoulder lateral grooves 28 configured as such are helpful for decreasing the pumping noise during running as described above. In order to further increase the above-mentioned effect, it is preferred that groove volume greatly varies such that a depth (d3) of each of the outer shoulder lateral grooves 28 at an inner end thereof is in a range of from 40% to 60% of a depth (d4) of each of the outer shoulder lateral grooves 28 at the outer tread edge (To). Note that the depth (d3) at the inner end is measured at a position axially outwardly away from the inner end of the outer shoulder lateral groove 28 by a length L6 which is 25% of the length L2 in the tire axial direction.

From the same point of view, it is preferred that an area S4 of a cross section of each of the outer shoulder lateral grooves 28 taken along a groove center line thereof is smaller than an area S3 of a cross section of each of the inner shoulder lateral grooves 21 taken along a groove center line thereof. It is preferred that the area S4 of the outer shoulder lateral groove 28 is in a range of from 0.85 to 0.95 times the area S3 of the inner shoulder lateral groove 21, for example.

As shown in Fig. 7, the number (total number) N2 of the outer shoulder lateral grooves 28 provided in the outer shoulder land region 16 is smaller than the number N1 of the inner shoulder lateral grooves 21. The number N1 of the inner shoulder lateral grooves 21 in this embodiment is set to be not less than 1.1 times, more preferably 1.2 times, further preferably 1.3 times the number N2 of the outer shoulder lateral grooves 28, for example. On the other hand, if the number of the inner shoulder lateral grooves 21 is remarkably larger than the number of the outer shoulder lateral grooves 28, it is possible that the basic performance required for the tire such as steering stability and uneven wear resistance performance is deteriorated. From such a point of view, it is preferred that the number of the inner shoulder lateral grooves 21 is not more than 2.0 times the number of the outer shoulder lateral grooves 28.

In particular, it is preferred that the number N2 of the outer shoulder lateral grooves 28 is in the range of from 55 to 75 and in the range of from 0.5 to 0.7 times the number N1. By providing a difference between the number N1 of the inner shoulder lateral grooves 21 and the number N2 of the outer shoulder lateral grooves 28, it is possible that the rigidity in the tire circumferential direction and the rigidity in the tire axial direction of the outer shoulder land region 16 are increased relative to those of the inner shoulder land region 17.

The outer shoulder land region 16 includes an outer shoulder rib-like portion 33 located between the outer shoulder main groove 12 and each of the outer shoulder lateral grooves 28 and outer shoulder block pieces 34 each defined between a pair of the outer shoulder lateral grooves 28 adjacent to each other in the tire circumferential direction, for example.

The outer shoulder rib-like portion 33 is not provided with a groove and extends continuously in the tire circumferential direction, for example. The outer shoulder rib-like portion 33 configured as such can effectively increase the rigidity in the tire circumferential direction of the outer shoulder land region 16.

It is preferred that the outer shoulder rib-like portion 33 has a width w9 in the tire axial direction larger than that of the inner shoulder rib-like portion 25, for example. It is preferred that the width w9 of the outer shoulder rib-like portion 33 is in the range of from 1.10 to 1.20 times the width w6 of the inner shoulder rib-like portion 25, for example. Thereby, the outer shoulder land region 16 has a relatively higher rigidity than the inner shoulder land region 17, therefore, it is possible that the high SAT is eventually generated.

Each of the outer shoulder block pieces 34 has a tire circumferential direction length (Sbo). The tire circumferential direction length (Sbo) of each of the outer shoulder block pieces 34 in this embodiment is configured to be larger than the tire circumferential direction length (Sbi) of each of the inner shoulder block pieces 26. In a preferred embodiment, a ratio Sbi/Sbo of the tire circumferential direction lengths of the inner shoulder block piece 26 and the outer shoulder block piece 34 is set to be in the range of from 0.60 to 0.90, for example. Thereby, the high SAT can be obtained, therefore, it is possible that the excellent cornering performance is eventually obtained.

From the same point of view, it is preferred that the outer shoulder land region 16 has a larger land ratio than the inner shoulder land region 17, for example. It is preferred that the land ratio of the outer shoulder land region 16 is in the range of from 1.05 to 1.10 times the land ratio of the inner shoulder land region 17, for example.

[ Configuration of Middle Land Region ]

Fig. 9 is an enlarged view of the middle land region 18. As shown in Fig. 9, the middle land region 18 in this embodiment includes an outer middle land region 19 and an inner middle land region 20. The outer middle land region 19 is defined between the crown main groove 13 and the outer shoulder main groove 12, for example. The outer middle land region 19 and the inner middle land region 20 respectively has a width W13 and a width W10 in the tire axial direction in the range of from 0.10 to 0.20 times the tread width TW. The width W13 in this embodiment is set to be equal to the width W10 but it may be set to be larger than the width W13.

As a result of various experiments by the inventors shown in Fig. 3, in order to generate larger SAT, the inventors found that the rigidity in the tire circumferential direction and the rigidity in the tire axial direction of the outer middle land region 19 had great contribution to the SAT as well and that, by making them larger than those of the inner middle land region 20, the SAT was increased by substantially the same mechanism as the above.

In a preferred embodiment, the outer middle land region 19 is also configured to be equal to or larger than the inner middle land region 20 with respect to the rigidity in the tire circumferential direction and the rigidity in the tire axial direction. The outer middle land region 19 in this embodiment is configured to be larger than the inner middle land region 20 with respect to the rigidity in the tire circumferential direction and the rigidity in the tire axial direction. In this case, in a typical embodiment, the outer middle land region 19 has a larger land ratio than the inner middle land region 20, for example.

As shown in Fig. 9, in a preferred embodiment, in order to prevent occurrence of the uneven wear while generating larger SAT, with respect to the rigidity in the tire circumferential direction, it is preferred that the outer middle land region 19 has a rigidity ratio $\sigma3$ in the range of from 1.05 to 1.40 times that of the inner middle land region 20. Similarly, with respect to the rigidity in the tire axial direction, it is preferred that the outer middle land region 19 has a rigidity ratio $\sigma4$ in the range of from 1.05 to 1.40 times that of the inner middle land region 20. Hereinafter, a specific pattern configuration capable of realizing the rigidity difference as described above will be explained.

[ Configuration of Inner Middle Land Region ]

The inner middle land region 20 is provided with a plurality of inner middle lateral grooves 36, for example. Each of the inner middle lateral grooves 36 extends from an edge 20A located on a side of the inner tread edge (Ti) of the inner middle land region 20 toward the outer tread edge (To) and terminates within the inner middle land region 20. Thereby, an outer half portion (20o) of the inner middle land region 20 is formed to be equal to or larger than an inner half portion (20i) of the inner middle land region 20 with respect to the rigidity in the tire circumferential direction and the rigidity in the tire axial direction. As described above, by providing the rigidity difference in the inner middle land region 20 alone, the SAT is further increased, therefore, it is possible that the cornering performance is consequently improved.

In a preferred embodiment, in order to prevent occurrence of the uneven wear while generating larger SAT, with respect to the rigidity in the tire circumferential direction, it is preferred that the outer half portion (20o) of the inner middle land region 20 has a rigidity ratio $\sigma 5$ in the range of from 1.05 to 1.50 times that of the inner half portion (20i). Similarly, with respect to the rigidity in the tire axial direction, it is preferred that the outer half portion (20o) of the inner middle land region 20 has a rigidity ratio $\sigma 6$ in the range of from 1.05 to 1.20 times that of the inner half portion (20i).
Here, the outer half portion (20o) is a portion located on a side of the outer tread edge (To) of a center position 20C in the tire axial direction of the inner middle land region 20. Further, the inner half portion (20i) is a portion located on a side of the inner tread edge (Ti) of the center position 20C in the tire axial direction of the inner middle land region 20. Furthermore, each of the rigidity in the tire circumferential direction and the rigidity in the tire axial direction of the outer half portion (20o) and the inner half portion (20i) of the inner middle land region 20 is measured by cutting out respective land region from the tread portion 2 as described above.
Each of the inner middle lateral grooves 36 extends at an angle $\theta 7$ (not shown) smaller than that of each of the inner shoulder lateral grooves 21 with respect to the tire axial direction, for example. It is preferred that the angle $\theta 7$ of each of the inner middle lateral grooves 36 is in the rage of from 0 to 10 degrees, for example, and each of the inner middle lateral grooves 36 in this embodiment extends linearly along the tire axial direction (i.e. angle $\theta 7$ = 0 degrees). The inner middle lateral grooves 36 configured as such sufficiently maintain the rigidity in the tire axial direction of the inner middle land region 20, therefore, it is possible that the large equivalent CP is provided especially when the tire 1 is mounted on a rear wheel of a vehicle.
A length L3 in the tire axial direction of each of the inner middle lateral grooves 36 is preferably in the range of from 0.45 to 0.85 times, more preferably in the range of from 0.45 to 0.55 times a width W10 of the inner middle land region 20, for example. A groove width W11 of each of the inner middle lateral grooves 36 is configured to be the same as the groove width w5 (shown in Fig. 5) of each of the inner shoulder lateral grooves 21, for example, but they may be different. Fig. 10A is a cross-sectional view of one of the inner middle lateral grooves 36 taken along D-D line of Fig. 9. As shown in Fig. 10A, it is preferred that a depth (d6) of each of the inner middle lateral grooves 36 is in about the range of from 0.20 to 0.90 times a groove depth (d5) of the crown main groove 13, for example.
As shown in Fig. 9, it is preferred that number (total number) N3 of the inner middle lateral grooves 36 provided in the inner middle land region 20 is in the range of from 80 to 100, for example.
It is preferred that the number N1 of the inner shoulder lateral grooves 21 is larger than the number of the inner middle lateral grooves 36. The number N3 of the inner middle lateral grooves 36 is preferably not less than 0.6 times, more preferably not less than 0.70 times, and preferably not more than 0.85 times, more preferably not more than 0.80 times the number N1 of the inner shoulder lateral grooves 21. Thereby, it is possible that the SAT is increased while maintaining the wet performance.
The inner middle land region 20 includes an inner middle rib-like portion 37 located between the crown main groove 13 and each of the inner middle lateral grooves 36 and inner middle block pieces 38 each defined between a pair of the inner middle lateral grooves 36 adjacent to each other in the tire circumferential direction, for example.
The inner middle rib-like portion 37 is not provided with a groove and extends continuously in the tire circumferential direction, for example. The inner middle rib-like portion 37 configured as such increases the rigidity of a part on a side of the tire equator of the inner middle land region 20, therefore, it is possible that the SAT is increased consequently.
Each of the inner middle block piece 38 has a tire circumferential direction length (Mbi). By setting the groove number N3 as described above, the tire circumferential direction length (Mbi) of each of the inner middle block pieces 38 is set to be in about the range of from 0.7% to 1.5%, more preferably in about the range of from 0.7% to 0.9% of the one tire circumferential length, for example.
It is preferred that the inner middle land region 20 has the land ratio in the range of from 75% to 85%, for example. The inner middle land region 20 configured as such can improve the wet performance and the steering stability in a good balance.

[ Configuration of Outer Middle Land Region ]

The outer middle land region 19 is provided with a plurality of outer middle lateral grooves 40, for example. Each of the outer middle lateral grooves 40 extends from an edge on a side of the inner tread edge (Ti) of the outer middle land region 19 toward the outer tread edge (To) and terminates within the outer middle land region 19, for example. Thereby, with respect to the rigidity in the tire circumferential direction and the rigidity in the tire axial direction, an outer half portion (19o) of the outer middle land region 19 is formed to be equal to or larger than an inner half portion (19i) of the outer middle land region 19 (larger in this embodiment). The outer middle land region 19 configured as such further contributes to increasing the SAT, therefore, it is possible that the cornering performance is improved consequently.
In a preferred embodiment, in order to prevent occurrence of the uneven wear while generating the larger SAT, with respect to the rigidity in the tire circumferential direction, it is preferred that the outer half portion (19o) of the outer middle land region has a rigidity ratio σ7 in the range of from 1.05 to 1.50 times that of the inner half portion (19i). Similarly, with respect to the rigidity in the tire axial direction, the outer half portion (19o) of the outer middle land region has a rigidity ratio σ8 in the range of from 1.05 to 1.20 times that of the inner half portion (19i).

Here, the outer half portion (19o) is a portion located on a side of the outer tread edge (To) of a center position 19C in the tire axial direction of the outer middle land region 19. Further, the inner half portion (19i) is a portion located on a side of the inner tread edge (Ti) of the center position 19C in the tire axial direction of the outer middle land region 19. Furthermore, each of the rigidity in the tire circumferential direction and the rigidity in the tire axial direction of the outer half portion (19o) and the inner half portion (19i) of the outer middle land region 19 is measured by cutting out respective land region from the tread portion 2 as described above.

Each of the outer middle lateral grooves 40 extends at an angle θ8 (not shown) smaller than that of each of the inner shoulder lateral grooves 21 with respect to the tire axial direction, for example. It is preferred that the angle θ8 of each of the outer middle lateral grooves 40 is in the rage of from 0 to 10 degrees, for example, and each of the outer middle lateral grooves 40 in this embodiment extends linearly along the tire axial direction (i.e. angle θ8 = 0 degrees).

It is preferred that each of the outer middle lateral grooves 40 has a length L4 in the tire axial direction smaller than that of each of the inner middle lateral grooves 36, for example. It is preferred that the length L4 of each of the outer middle lateral grooves 40 is in the range of from 0.70 to 0.80 times the length L3 of each of the inner middle lateral grooves 36, for example. A groove width w14 of each of the outer middle lateral grooves 40 is configured to be the same as the groove width w11 of each of the inner middle lateral groove 36, for example, but they may be different. Fig. 10B is a cross-sectional view of one of the outer middle lateral grooves 40 taken along E-E line of Fig. 9. As shown in Fig. 10B, it is preferred that a groove depth (d7) of each of the outer middle lateral grooves 40 is smaller than the groove depth (d6) of each of the inner middle lateral grooves 36, for example. It is preferred that the groove depth (d7) is in the range of from 0.80 to 0.95 times the groove depth (d6), for example.

It is preferred that the area S4 of a cross section taken along a groove center line of each of the outer middle lateral grooves 40 is smaller than the area S3 of a cross section taken along a groove center line of each of the inner middle lateral grooves 36. It is preferred that the area S4 is in the range of from 0.80 to 0.95 times the area S3, for example.

It is preferred that number (total number) N4 of the outer middle lateral grooves 40 provided in the outer middle land region 19 is smaller than the number N3 of the inner middle lateral grooves 36, and it is particularly preferred that the number N4 is in the range of from 0.5 to 0.7 times the number N3, for example. The outer middle lateral grooves 40 configured as such relatively increase the rigidity of the outer middle land region 19, therefore, it is possible that the high SAT is provided.

In a more preferred embodiment, a ratio N4/N3 of the number N4 of the outer middle lateral grooves 40 and the number N3 of the inner middle lateral grooves is smaller than a ratio N2/N1 of the number N2 of the outer shoulder lateral grooves 28 and the number N1 of the inner shoulder lateral grooves 21. In such an embodiment, it is possible that the rigidity difference between the outer middle land region 19 and the inner middle land region 20 is made relatively small, therefore, it is possible that the uneven wear of these is suppressed.

The outer middle land region 19 includes an outer middle rib-like portion 41 located between the outer shoulder main groove 12 and each of the outer middle lateral grooves 40 and outer middle block pieces 42 each defined between a pair of the outer middle lateral grooves 40 adjacent to each other in the tire circumferential direction, for example.

It is preferred that the outer middle rib-like portion 41 is not provided with a groove and extends continuously in the tire circumferential direction, for example. The outer middle rib-like portion 41 configured as such has high rigidity, therefore, it is possible that high SAT is provided. From the similar point of view, it is preferred that the outer middle rib-like portion 41 has a width w15 in the tire axial direction larger than that of the inner middle rib-like portion 37, for example.

Each of the outer middle block pieces 42 has a tire circumferential direction length (Mbo). In a preferred embodiment, by setting the groove number N4 as described above, it is preferred that the tire circumferential direction length (Mbo) of each of the outer middle block pieces 42 is configured to be larger than the tire circumferential direction length (Mbi) of each of the inner middle block pieces 38. In a particularly preferred embodiment, it is preferred that a ratio Mbi/Mbo of the tire circumferential direction lengths of each of the inner middle block pieces 38 and each of the outer middle block pieces 42 is in the range of from 0.70 to 0.90. Thereby, rigidity balance between the inner middle land region 20 and the outer middle land region 19 is further improved.

In a preferred embodiment, it is preferred that the tire circumferential direction length (Mbo) of each of the outer middle block pieces 42 is smaller than the tire circumferential direction length (Sbo) (shown in Fig. 7) of each of the outer shoulder block pieces 34. Specifically, it is preferred that the tire circumferential direction length (Mbo) is in the range of from 0.60 to 0.70 times the tire circumferential direction length (Sbo), for example. Thereby, it is possible that the uneven wear of each of the block pieces is suppressed while exerting the above-mentioned effects.

[ Other Embodiments ]

Fig. 11 is a development view of the tread portion 2 of the tire 1 according to another embodiment of the present invention. In Fig. 11, the same reference numerals are given to the elements common to the above-described embodiment, and the explanation thereof is omitted here.

The tire 1 in this embodiment is additionally provided with middle sipes 44. The middle sipes 44 include inner middle sipes 45 provided in the inner middle land region 20, for example. Each of the inner middle sipes 45 in this embodiment is formed between respective pair of the inner middle lateral grooves 36 adjacent to each other in the tire circumferential direction and extends in the tire axial direction.

It is preferred that at least one end of each of the inner middle sipes 45 is connected with one of the main grooves 10. The inner middle sipes 45 in this embodiment completely cross the inner middle land region 20 in the tire axial direction. The inner middle sipes 45 can increase frictional force during running on a wet road by edges thereof without excessively decreasing the rigidity in the tire circumferential direction of the inner middle land region 20. Note that in this specification, the "sipe" is defined as a cut or a groove having a width not more than 0.8 mm and is distinguished from a "groove" having a width larger than this.

Each of the inner middle sipes 45 in this embodiment extends linearly but may extend in a wavy or a zigzag manner, for example. Each of the inner middle sipes 45 is arranged at an angle not more than 10 degrees with respect to the tire axial direction. Thereby, even when lateral force is applied when the vehicle starts cornering, the lateral force applied to the inner middle land region 20 is not dispersed in the tire circumferential direction, therefore, the decrease of the CF is suppressed. Each of the inner middle sipes 45 in this embodiment is arranged at zero degrees with respect to the tire axial direction.

Fig. 12 is an enlarged view of the outer middle land region 19 of Fig. 11 as a figure for explaining the configuration of each of the middle land regions 18 of Fig. 11. As shown in Fig. 12, middle lateral grooves 43 provided in each of the middle land regions 18 in this embodiment include first middle lateral grooves (43a) and second middle lateral grooves (43b) each having a greater length in the tire axial direction than each of the first middle lateral grooves (43a). The second middle lateral grooves (43b) improve the wet performance and the first middle lateral grooves (43a) suppress excessive decrease of the rigidity of the middle land regions 18. The first middle lateral grooves (43a) and the second middle lateral grooves (43b) in this embodiment are arranged alternately in the tire circumferential direction. Note that the middle lateral grooves 43 are not limited to such an embodiment, and they may be configured to have the same lengths in the tire axial direction, for example.

In order to effectively exert the above-described effects, it is preferred that a length (L4a) in the tire axial direction of each of the first middle lateral grooves (43a) is in the range of from 30% to 50% of a width (wm) in the tire axial direction of one of the middle land regions 18. Further, it is preferred that a length (L4b) in the tire axial direction of each of the second middle lateral grooves (43b) is in the range of from 50% to 80% of the width (wm) in the tire axial direction of one of the middle land regions 18.

Fig. 13A is a cross-sectional view of one of the middle lateral grooves 43 taken along F-F line of Fig. 12. As shown in Fig. 13A, each of the middle lateral grooves 43 is configured to include a first portion 43A, a second portion 43B, and a tapered portion 43C. The first portion 43A in this embodiment is arranged on a side of the inner tread edge (Ti). The second portion 43B in this embodiment is arranged on a side of the outer tread edge (To) of the first portion 43A. The tapered portion 43C in this embodiment has a groove depth gradually decreasing from the first portion 43A toward the second portion 43B. with the middle lateral grooves 43 configured as such, it is possible that the rigidity of an outer half portion (18o) and the rigidity of an inner half portion (18i) are more effectively set in the preferred range and at the same time it is possible that the excellent wet performance is provided. Further, the tapered portions 43C suppress excessive decrease of the rigidity of the middle land regions 18.

It is preferred that a groove depth (d17) of the second portion 43B is not more than 50% of a groove depth (d16) of the first portion 43A. Thereby, the above-described effects are effectively exerted. When the depth (d17) of the second portion 43B is excessively small, it is possible that the wet performance cannot be improved. Thereby, it is preferred that the depth (d17) of the second portion 43B is not less than 20% of the groove depth (d16) of the first portion 43A. Note that it is preferred that the groove depth (d16) of the first portion 43A is in about the range of from 20% to 90% of a groove depth (d) of the inner shoulder main groove 11.

Further, in order to effectively exert the above-described effects, it is preferred that a length (La) in the tire axial direction of the first portion 43A is in the range of from 20% to 50% of the width (wm) in the tire axial direction of each of the middle land regions 18, for example. It is preferred that a length (Lb) in the tire axial direction of the second portion 43B is in the range of from 20% to 40% of the width (wm) in the tire axial direction of each of the middle land regions 18, for example.

Fig. 13B is a cross-sectional view taken along G-G line of Fig. 12. As shown in Fig. 13B, each of the middle sipes 44 is configured to include a first sipe portion 44A, a second sipe portion 44B, and a tapered part 44C. The first sipe portion 44A is arranged on a side of the inner tread edge (Ti). The second sipe portion 44B is arranged on a side of the outer tread edge (To) of the first sipe portion 44A. The tapered part 44C extends to connect between the first sipe portion 44A and the second sipe portion 44B and has a depth gradually decreasing from the first sipe portion 44A toward the second sipe portion 44B. with the middle sipes 44 configured as such, it is possible that the rigidity of the outer half portion (18o) and the rigidity of the inner half portion (18i) are more effectively set in the preferred range. Further, the tapered parts 44C suppress excessive decrease of the rigidity of each of the middle land regions 18.

The first sipe portion 44A in this embodiment is connected with an edge (18d) on the side of the inner tread edge (Ti). The second sipe portion 44B in this embodiment is connected with an edge (18e) on the side of the outer tread edge (TO).

It is preferred that a depth (d19) of the second sipe portion 44B is not more than 50% of a depth (d18) of the first sipe portion 44A. Thereby, the above-described effects are effectively exerted. when the depth (d19) of the second sipe portion 44B is excessively small, edge effects become small and it is possible that the wet performance cannot be improved. Thereby, it is preferred that the depth (d19) of the second sipe portion 44B is not less than 20% of the depth (d18) of the first sipe portion 44A. Note that it is preferred that the depth (d18) of the first sipe portion 44A is in about the range of from 20% to 90% of the groove depth (d) of the inner shoulder main groove 11.

Further, in order to effectively exert the above-described effects, it is preferred that a length (Lc) in the tire axial direction of the first sipe portion 44A is in the range of from 20% to 60% of the width (Wm) in the tire axial direction of one of the middle land regions 18, for example. It is preferred that a length (Ld) in the tire axial direction of the second sipe portion 44B in the range of from 40% to 80% of the width (wm) in the tire axial direction of one of the middle land regions 18, for example.

Fig. 14 is an enlarged view of the inner middle land region 20 and the outer middle land region 19 of the embodiment shown in Fig. 11. As shown in Fig. 14, in this embodiment, a length ratio (L3/W10) of the inner middle lateral grooves 36 is set to be larger than a length ratio (L4/W13) of the outer middle lateral grooves 40, therefore, the rigidity in the tire axial direction of the outer middle land region 19 is made higher than the rigidity in the tire axial direction of the inner middle land region 20. Thereby, it is possible that the cornering performance and ride comfort are improved in a good balance. It is more preferred that a ratio (L3/W1O)/(L4/W13) is in the range of from 1.1 to 1.4.

The "length ratio (L3/W10) of the inner middle lateral grooves 36" is the ratio of a length (L3) in the tire axial direction of each of the inner middle lateral grooves 36 and a width (W10) in the tire axial direction of the inner middle land region 20. The "length ratio (L4/W13) of the outer middle lateral grooves 40" is the ratio of a length (L4) in the tire axial direction of each of the outer middle lateral grooves 40 and a width (W13) in the tire axial direction of the outer middle land region 19. Further, as in this embodiment, in the case where the inner middle lateral grooves 36 include first inner middle lateral grooves (36a) and second inner middle lateral grooves (36b) having different lengths, the above ratio is calculated by using the respective averages of the lengths of the first inner middle lateral grooves (36a) and the second inner middle lateral grooves (36b).

It is preferred that a groove depth (not shown) of each of the inner middle lateral grooves 36 is larger than a groove depth (not shown) of each of the outer middle lateral grooves 40. Further, it is preferred that a groove width (wa) of each of the inner middle lateral grooves 36 is larger than a groove width (wb) of each of the outer middle lateral grooves 40. It is preferred that a sum of the lengths in the tire axial direction of all the outer middle lateral grooves 40 of the outer middle land region 19 is in the range of from 70% to 90% of a sum of the lengths in the tire axial direction of all the inner middle lateral grooves 36 of the inner middle land region 20. The groove depth is the maximum groove depth.

In order to more effectively exert the above-described effects, it is preferred that the groove depth of each of the outer middle lateral grooves 40 is in about the range of from 20% to 95% of the groove depth of each of the inner middle lateral grooves 36. It is preferred that the groove width (wb) of each of the outer middle lateral grooves 40 is in about the range of from 80% to 95% of the groove width (wa) of each of the inner middle lateral grooves 36.

It is preferred that an area S2 of the cross section taken along the groove center line of each of the outer middle lateral grooves 40 is smaller than an area S1 of the cross section taken along the groove center line of each of the inner middle lateral grooves 36. It is preferred that the area S2 is in the range of from 0.80 to 0.95 times the area S1, for example.

The number (the total number) N4 of the outer middle lateral grooves 40 in this embodiment is the same as the number N3 of the inner middle lateral grooves 36. Thereby, the difference in the rigidity between the outer middle land region 19 and the inner middle land region 20 is suppressed from becoming excessively large, therefore, the above-described effects are effectively exerted. It is preferred that the number N4 of the outer middle lateral grooves 40 is in the range of from 65 to 85, for example.

It is preferred that the outer middle land region 19 has a larger land ratio than the inner middle land region 20, for example. It is preferred that the land ratio of the outer middle land region 19 is in the range of from 1.05 to 1.10 times the land ratio of the inner middle land region 20, for example. Thereby, it is possible that larger SAT is generated.

Fig. 15 is an enlarged view of the inner shoulder land region 17 of the tire 1 according to yet another embodiment of the present invention. In Fig. 15, the same reference numerals are given to the elements common to the above-described embodiments, and the explanation thereof is omitted here.

The inner shoulder land region 17 in this embodiment is provided with a plurality of inner shoulder sipes 47 each extending without being connected with the inner shoulder lateral grooves 21. The inner shoulder sipes 47 configured as such moderately decrease the rigidity of the inner shoulder land region 17, therefore, it is possible that the SAT is increased consequently. Further, the inner shoulder sipes 47 decrease impact sound when the inner shoulder land region 17 comes into contact with a road surface, therefore, it is possible that excellent noise performance is exerted.

It is preferred that each of the inner shoulder sipes 47 has an inner end (47i) in the tire axial direction which terminates within the inner shoulder land region 17. Further, it is preferred that each of the inner shoulder sipes 47 has an outer end (47o) in the tire axial direction which terminates within the inner shoulder land region 17. In a preferred embodiment, each of the inner shoulder sipes 47 terminates within the inner shoulder land region 17 without being connected with other sipes or grooves. The inner shoulder sipes 47 configured as such can obtain the above-described effects while suppressing the uneven wear of the inner shoulder land region 17.

In order to improve the uneven wear resistance performance and the cornering performance in a good balance, it is preferred that a length L7 in the tire axial direction of each of the inner shoulder sipes 47 is in the range of from 0.65 to 0.80 times the width w4 of the inner shoulder land region 17, for example.

Fig. 16 is a development view of the tread portion 2 of the tire 1 according to yet another embodiment of the present invention. Fig. 17 is an enlarged view of the inner middle land region 20 and the outer middle land region 19 of Fig. 16. In Figs. 17 and 16, the same reference numerals are given to the elements common to the above-described embodiments, and the explanation thereof is omitted here.

As shown in Fig. 17, in this embodiment, in order to provide a rigidity difference between the inner middle land region 20 and the outer middle land region 19, the inner middle lateral grooves 36 and the outer middle lateral grooves 40 are configured to satisfy the following requirements (A) to (D).

(A) The number N4 of the outer middle lateral grooves 40 is in the range of from 0.5 to 0.7 times the number N3 of the inner middle lateral grooves 36:

(B) A ratio L3/W10 of the length L3 in the tire axial direction of each of the inner middle lateral grooves 36 and the width w10 in the tire axial direction of the inner middle land region 20 is larger than a ratio L4/W13 of the length L4 in the tire axial direction of each of the outer middle lateral grooves 40 and the width W13 in the tire axial direction of the outer middle land region 19:

(C) The groove depth (d6) (shown in Fig. 18A) of each of the inner middle lateral grooves 36 is larger than the groove depth (d7) (shown in Fig. 18B) of each of the outer middle lateral grooves 40:

(D) The groove width W11 of each of the inner middle lateral grooves 36 is not less than the groove width W14 of each of the outer middle lateral grooves.

Specifically, it is preferred that the total number N3 of the inner middle lateral grooves 36 formed in the inner middle land region 20 is in the range of from 80 to 150, for example.

It is preferred that the groove width W11 of each of the inner middle lateral grooves 36 is in the range of from 0.5% to 2.0% of the tread width TW, for example. Fig. 18A is a cross-sectional view of one of the inner middle lateral grooves 36 taken along H-H line of Fig. 17. As shown in Fig. 18A, it is preferred that the depth (d6) of each of the inner middle lateral grooves 36 is in the range of from 0.20 to 0.90 times the groove depth (d5) of the crown main groove 13, for example.

Next, the total number N4 of the outer middle lateral grooves 40 formed in the outer middle land region 19 is set to be in the range of from 0.5 to 0.7 times the total number N3 of the inner middle lateral grooves 36.

As shown in Fig. 17, with respect to the length L4 in the tire axial direction of each of the outer middle lateral grooves 40, the ratio L3/W10 of the length L3 in the tire axial direction of each of the inner middle lateral grooves 36 and the width W10 in the tire axial direction of the inner middle land region 20 is set to be larger than the ratio L4/W13 of the length L4 and the width w13 in the tire axial direction of the outer middle land region 19, that is, $L3/W10 > L4/W13$. Preferably, the ratio L3/W10 is not less than 1.25 times, more preferably not less than 1.5 times the ratio L4/W13.

Note that it is preferred that the width w13 in the tire axial direction of the outer middle land region 19 is in the range of from 0.10 to 0.20 times the tread width TW. In this embodiment, an example in which the width W13 is smaller than the width W10 ($W13 < W10$) is shown, but the width W13 may be equal to the width W10 ($W13 = W10$).

Further, with respect to the groove width W14 of each of the outer middle lateral grooves 40, the groove width W11 of each of the inner middle lateral grooves 36 is set to be not less than the groove width W14 of each of the outer middle lateral grooves, that is, $W11 \geq W14$.

Fig. 18B is a cross-sectional view of one of the outer middle lateral grooves 40 taken along I-I line of Fig. 17. As shown in Fig. 18B, with respect to a depth (d7) of each of the outer middle lateral grooves 40, the depth (d6) of each of the inner middle lateral grooves 36 is set to be larger than the depth (d7) of each of the outer middle lateral grooves 40, that is, $d6 > d7$. Preferably, a depth ratio d6/d7 is not less than 1.2, more preferably not less than 1.4.

As described above, by satisfying the requirements (A) to (D), it is possible that a sufficient difference of the rigidity between the inner middle land region 20 and the outer middle land region 19 is provided, therefore, it is possible that large SAT is generated.

Here, when the ratio N4/N3 of the numbers of the lateral grooves is less than 0.5, the rigidity difference between the inner middle land region 20 and the outer middle land region 19 becomes excessive. Thereby, although linearity (shift property to the revolution running state) during a lane change and during cornering is improved, responsiveness immediately after steering is deteriorated. Conversely, when the ratio N4/N3 is more than 0.7, the difference of the rigidity becomes small, that is, the SAT becomes small, therefore, the effect of improving the linearity (the shift property to the revolution running state) cannot be sufficiently obtained.

As shown in Fig. 17, when the ratio L3/W10 of the length L3 of each of the inner middle lateral grooves 36 and the width w10 of the inner middle land region 20 is not more than the ratio L4/W13 of the length L4 of each of the outer middle lateral grooves 40 and the width W13 of the outer middle land region 19, when the groove depth (d6) is not more than the groove depth (d7), and when the groove width W11 is smaller than the groove width W14, the difference of the rigidity becomes small, therefore, improvement effect of the linearity (the shift property to the revolution running state) cannot be sufficiently obtained.

In this embodiment, it is preferred that a total ΣL4 of the lengths L4 in the tire axial direction of all the outer middle lateral grooves 40 provided in the outer middle land region 19 is in the range of from 0.33 to 0.70 times a total ΣL3 of the lengths L3 in the tire axial direction of all the inner middle lateral grooves 36 provided in the inner middle land region 20. when the ΣL4 is less than 0.33 times the ΣL3, the difference of the rigidity becomes excessive, therefore, although the linearity (the shift property to the revolution running state) is improved, the responsiveness immediately after steering is deteriorated. Conversely when the ΣL4 is more than 0.70 times the ΣL3, the difference of the rigidity becomes small, therefore, the improvement effect of the linearity (the shift property to the revolution running state) cannot be obtained sufficiently.

It is possible that the inner middle land region 20 and the outer middle land region 19 are provided with the inner middle sipes 45 and outer middle sipes 46.

Each of the inner middle sipes 45 extends from the side of the inner tread edge (Ti) to the side of the outer tread edge (To) between a pair of the inner middle lateral grooves 36 adjacent to each other in the tire circumferential direction. Similarly to the inner middle lateral grooves 36, the inner middle sipes 45 in this embodiment extend from the edge (18e) on the side of the inner tread edge (Ti) of the inner middle land region 20 and terminate within the inner middle land region 20. Note that it is preferred that a formation number (ni) of the inner middle sipes 45 is not more than the number N3 of the inner middle lateral grooves 36. In this embodiment, ni:N3 is 1:2, and two inner middle lateral grooves 36 are arranged between a pair of the inner middle sipes 45 adjacent to each other.

Similarly, each of the outer middle sipes 46 extends from the side of the inner tread edge (Ti) to the side of the outer tread edge (To) between a pair of the outer middle lateral grooves 40 adjacent to each other in the tire circumferential direction. Similarly to the outer middle lateral grooves 40, the outer middle sipes 46 in this embodiment extend from an edge (19e) on the side of the inner tread edge (Ti) of the outer middle land region 19 and terminate within the outer middle land region 19. Note that it is preferred that a formation number (no) of the outer middle sipes 46 is not more than the number N4 of the outer middle lateral grooves 40. In this embodiment, no:N4 is equal to ni:N3, and two outer middle lateral grooves 40 are arranged between a pair of the outer middle sipes 46 adjacent to each other.

It is preferred that a ratio L10/W10 of a length L10 in the tire axial direction of each of the inner middle sipes 45 and the width W10 the tire axial direction of the inner middle land region 20 is larger than a ratio L11/W13 of a length L11 in the tire axial direction of each of the outer middle sipes 46 and the width W13 in the tire axial direction of the outer middle land region 19. Thereby, more difference in the rigidity is provided between the inner middle land region 20 and the outer middle land region 19, therefore, it is possible that the SAT is increased. Note that it is preferred that the length L10 in the tire axial direction of each of the inner middle sipes 45 is smaller than the length L3 in the tire axial direction of each of the inner middle lateral grooves 36. Further, it is preferred that the length L11 in the tire axial direction of each of the outer middle sipes 46 is smaller than the length L4 in the tire axial direction of each of the outer middle lateral grooves 40.

It is preferred that a depth (d10) (shown in Fig. 18A) of each of the inner middle sipes 45 is larger than a depth (d11) (shown in Fig. 18B) of each of the outer middle sipes 46. Thereby, more difference in the rigidity is provided between the inner middle land region 20 and the outer middle land region 19, therefore, it is possible that the SAT is increased.

Fig. 19 is a development view of the tread portion 2 of the tire 1 according to yet another embodiment of the present invention. Fig. 20 is an enlarged view of the inner shoulder land region 17 of Fig. 19. In Figs. 19 and 20, the same reference numerals are given to elements common to the above-described embodiments, and the explanation thereof is omitted here.

As shown in Fig. 20, each of the inner shoulder lateral groove 21 in this embodiment is inclined at the angle θ1 in the range of from 10 to 45 degrees with respect to the tire axial direction, for example. Further, each of the inner shoulder lateral grooves 21 extend linearly and obliquely at a constant angle with respect to the tire axial direction.

Each of the inner shoulder lateral grooves 21 in this embodiment extends with a constant groove width, for example. However, the present invention is not limited to such an embodiment. In another embodiment of the present invention, each of the inner shoulder lateral grooves 21 may have a groove width gradually decreasing axially inwardly, for example. The inner shoulder lateral grooves 21 configured as such are helpful for adjusting the rigidity of the inner shoulder land region 17 so as to be in the preferred range.

It is preferred that the inner shoulder land region 17 is provided with at least one, a plurality of in this embodiment, inner shoulder sipe 35. Each of the inner shoulder sipes 35 extends from an inner end of respective one of the inner shoulder lateral grooves 21 to an edge on the side of the outer tread edge (To) of the inner shoulder land region 17, for example. The inner shoulder sipe(s) 35 configured as such is(are) helpful for adjusting the rigidity of the inner shoulder land region 17 so as to be in the preferred range.

Each of the inner shoulder sipes 35 is inclined at an angle θ2 in the range of from 10 to 45 degrees with respect to the tire axial direction, for example. Each of the inner shoulder sipes 35 in this embodiment is inclined at the same angle as each of the inner shoulder lateral grooves 21 with respect to the tire axial direction, for example. In another embodiment of the present invention, the angle θ2 of each of the inner shoulder sipes 35 may be larger than the angle θ1 of each of the inner shoulder lateral grooves 21 with respect to the tire axial direction, for example.

Fig. 21 is a cross-sectional view of one of the inner shoulder lateral grooves 21 and the corresponding one of the inner shoulder sipes 35 taken along J-J line of Fig. 20. As shown in Fig. 21, it is preferred that each of the inner shoulder sipes 35 has a depth gradually decreasing toward the outer tread edge (To). The inner shoulder sipes 35 configured as such maintain the rigidity of the inner shoulder land region 17, therefor, they are helpful for exerting large SAT.

Fig. 22 is a cross-sectional view of one of the outer shoulder lateral grooves 28 taken along K-K line of Fig. 19. As shown in Fig. 22, it is preferred that a maximum depth (d2a) of each of the outer shoulder lateral grooves 28 is smaller than a maximum depth (dla) (shown in Fig. 21) of each of the inner shoulder lateral grooves 21. It is preferred that the depth (d2a) of each of the outer shoulder lateral grooves 28 is in the range of from 0.85 to 0.95 times the depth (dla) of each of the inner shoulder lateral grooves 21, for example. Thereby, the rigidity of the outer shoulder land region 16 becomes relatively large, therefore, it is possible that large SAT is obtained consequently.

Fig. 23 is a development view of the tread portion 2 of the tire 1 according to yet another embodiment of the present invention. Fig. 24 is an enlarged view of the outer shoulder land region 16 and the outer middle land region 19 of Fig. 23. In Figs. 23 and 24, the same reference numerals are given to elements common to the above-described embodiments, and the explanation thereof is omitted here.

As shown in Fig. 24, each of the outer shoulder lateral grooves 28 terminates within the outer shoulder land region 16 without being connected with other grooves, for example. In a preferred embodiment, each of the outer shoulder lateral grooves 28 is arranged at the angle θ4 in the range of from 0 to 30 degrees with respect to the tire axial direction, for example. Each of the outer shoulder lateral grooves 28 in this embodiment extends linearly and obliquely at a constant angle with respect to the tire axial direction, for example.

The length L2 in the tire axial direction of each of the outer shoulder lateral grooves 28 is preferably in the range of from 0.65 to 0.85 times, more preferably in the range of from 0.70 to 0.80 times the width w7 in the tire axial direction of the outer shoulder land region 16. It is preferred that the groove width w8 of each of the outer shoulder lateral grooves 28 is in the range of from 0.30 to 0.50 times the groove width w2 of the outer shoulder main groove 12, for example. The groove width w8 in this embodiment is configured to be constant, but it may be configured to vary. when the length L2 and the groove width w8 of each of the outer shoulder lateral grooves 28 are set, it is possible that good wet performance is provided while increasing the SAT.

Fig. 25A is a cross-sectional view of one of the outer shoulder lateral grooves 28 taken along L-L line of Fig. 24. As shown in Fig. 25A, each of the outer shoulder lateral grooves 28 is configured to have a groove depth gradually decreasing toward the side of the outer shoulder main groove 12 in a region between the outer tread edge (To) and the outer shoulder main grooves 12, for example. Thereby, it is possible that the sound pressure of the pumping noise is decreased by significantly decreasing groove volume of a part on the side of an inner end in the tire axial direction of each of the outer shoulder lateral grooves 28. In a particularly preferred embodiment, it is preferred that the depth (d3) at the inner end of each of the outer shoulder lateral grooves 28 is in the range of from 40% to 60% of the depth (d4) at the outer tread edge (To) of each of the outer shoulder lateral grooves 28. Note that the depth (d3) of the inner end is measured at a position axially outwardly away from the inner end of the outer shoulder lateral groove 28 by the length L5 which is 25% of the length L2 thereof in the tire axial direction.

As shown in Fig. 24, in order to decrease the rigidity in the tire circumferential direction and in the tire axial direction of the outer shoulder land region 16 so as to be in the preferred range, it is preferred that the number (the total number) N2 of the outer shoulder lateral grooves 28 is in the range of from 30 to 70, for example.

The outer shoulder rib-like portion 33 is not provided with grooves and extends continuously in the tire circumferential direction, for example. The outer shoulder rib-like portion 33 configured as such increases the rigidity in the tire circumferential direction of an axially inner portion of the outer shoulder land region 16, therefore, it is helpful for obtaining the large equivalent CP. It is preferred that the width w9 in the tire axial direction of the outer shoulder rib-like portion 33 is in the range of from 0.20 to 0.30 times the width W7 of the outer shoulder land region 16, for example.

Each of the outer shoulder block pieces 34 has the tire circumferential direction length (Sbo). It is preferred that the tire circumferential direction length (Sbo) of each of the outer shoulder block pieces 34 in this embodiment is in the range of from 1.6% to 2.5% of the one tire circumferential length of the outer shoulder land region 16, for example. In a more preferred embodiment, each of the outer shoulder block pieces 34 extends obliquely in the tire axial direction with the constant tire circumferential direction length (Sbo).

It is preferred that the outer shoulder land region 16 has a land ratio in the range of from 85% to 95%, for example.

Each of the outer middle lateral grooves 40 terminates within the outer middle land region 19 without being connected with other grooves, for example. It is preferred that each of the outer middle lateral grooves 40 is arranged at the angle θ8 in the range of from zero to 20 degrees with respect to the tire axial direction, for example. It is preferred that the outer middle lateral grooves 40 in this embodiment are inclined in a direction opposite to the outer shoulder lateral grooves 28, for example. The outer middle lateral grooves 40 configured as such sufficiently maintain the rigidity in the tire axial direction of the outer middle land region 19 and it is possible that large equivalent CP is provided particularly when the tire 1 is mounted on a rear wheel of a vehicle.

The length L4 in the tire axial direction of each of the outer middle lateral grooves 40 is preferably in the range of from 0.65 to 0.85 times the width W13 in the tire axial direction of the outer middle land region 19, and more preferably in the range of from 0.70 to 0.80 times the width W13.

Fig. 25B is a cross-sectional view of one of the outer middle lateral grooves 40 taken along M-M line of Fig. 24. As shown in Fig. 25B, it is preferred that the depth (d7) of each of the outer middle lateral grooves 40 is in about the range of from 0.20 to 0.90 times the groove depth (d5) of the crown main groove 13, for example.

As shown in Fig. 24, the number (the total number) N4 of the outer middle lateral grooves 40 provided in the outer middle land region 19 is preferably not less than 2.00 times, more preferably not less than 2.30 times, and preferably not more than 3.50 times, more preferably not more than 3.20 times the number N2 of the outer shoulder lateral grooves 28. Such an arrangement of the outer middle lateral grooves 40 moderates the rigidity of the outer middle land region 19 more than the outer shoulder land region 16, therefore, it is helpful for increasing the SAT eventually.

Each of the outer middle block pieces 42 has the tire circumferential direction length (Mbo). By setting the number N4 of the grooves as described above, the tire circumferential direction length (Mbo) of each of the outer middle block pieces 42 is set to be in about the range of from 0.8% to 1.0% of the one tire circumferential length of the outer middle land region 19, for example.

It is preferred that the outer middle land region 19 has a land ratio in the range of from 70% to 80%, for example. The outer middle land region 19 configured as such can improve the wet performance and the steering stability in a good balance.

As shown in Fig. 23, it is preferred that the inner shoulder land region 17 has a smaller land ratio than the outer shoulder land region 16, for example. It is preferred that the land ratio of the inner shoulder land region 17 is in the range of from 0.85 to 0.95 times the land ratio of the outer shoulder land region 16, for example.

Each of the inner middle lateral grooves 36 extends at an angle θ7 (not shown) smaller than each of the inner shoulder lateral grooves 21 with respect to the tire axial direction, for example. It is preferred that the angle θ7 of each of the inner middle lateral grooves 36 is in the range of from 0 to 10 degrees, for example, and each of the inner middle lateral grooves 36 in this embodiment extends linearly along the tire axial direction (that is, the angle θ7 = 0 degrees). The inner middle lateral grooves 36 configured as such sufficiently maintain the rigidity in the tire axial direction of the inner middle land region 20 and it is possible that large equivalent CP is provided especially when the tire 1 is mounted on a rear wheel of a vehicle.

It is preferred that the number (the total number) N3 of the inner middle lateral grooves 36 provided in the inner middle land region 20 is in the range of from 80 to 100, for example. in a preferred embodiment, it is preferred that the number N3 of the inner middle lateral grooves 36 is larger than the number N4 of the outer middle lateral grooves 40. Thereby, the SAT is further increased.

while detailed description has been made of embodiments of the present invention, the present invention can be embodied in various forms without being limited to the illustrated embodiments. The invention is only limited by the scope of the appended claims.

Working Example (Example)

Tires of size 205/55R16 having the basic pattern of Fig. 2 or Fig. 26 were made by way of test according to the specifications listed in Table 1. As Comparative Example 1, as shown in Fig. 27, a tire was made by way of test in which the outer shoulder land region and the inner shoulder land region have the same rigidity in the tire circumferential direction and the same rigidity in the tire axial direction. various tests were conducted for each of the test tires.

[ Bench Test ]

By using a flat belt type tire testing machine, the SAT, the maximum ground contacting length (L) in the tire circumferential direction of the tread portion, and the CF were measured under the following conditions.

Tire rim: 16x6.5JJ
Tire inner pressure: 220 kPa
Speed: 10 km/h
Slip angle: 0.7 degrees
Camber angle: -1.0 degrees
Tire load: 70% of Standard tire load

[ Cornering Performance ]

The test tires were mounted on four wheels of an FF passenger car with a displacement of 2000 cc, then a driver drove the test car on a dry road surface with the driver being the only member on the test car, and the cornering performance during the test drive was evaluated by the driver's feeling. The results are indicated by an evaluation point based on the Comparative Example 1 being 100, wherein the larger the numerical value, the more quickly the vehicle body shifted to the revolution running state during cornering.

The test results are shown in Table 1.

Table 1. (1/4)

| | Comp.Ex.1 | Ex.1 | Ex.2 | Ex.3 | Ex.4 |
|---|---|---|---|---|---|
| Figure showing tread pattern | Fig.27 | Fig.26 | Fig.2 | Fig.2 | Fig.2 |
| Circumferential rigidity ratio σ1 of Shoulder land region | 1.00 | 1.10 | 1.10 | 1.10 | 1.05 |
| Axial rigidity ratio σ2 of Shoulder land region | 1.00 | 1.10 | 1.10 | 1.10 | 1.10 |
| Circumferential rigidity ratio σ3 of Middle land region | 1.00 | 1.10 | 1.10 | 1.10 | 1.10 |
| Axial rigidity ratio σ4 of Middle land region | 1.00 | 1.10 | 1.10 | 1.10 | 1.10 |
| Circumferential rigidity ratio σ5 of Outer half portion and Inner half portion of Outer middle land region | 1.00 | 1.00 | 1.10 | 1.10 | 1.10 |
| Axial rigidity ratio σ6 of Outer half portion and Inner half portion of Outer middle land region | 1.00 | 1.00 | 1.10 | 1.10 | 1.10 |
| Circumferential rigidity ratio σ7 of Outer half portion and Inner half portion of Inner middle land region | 1.00 | 1.00 | 1.10 | 1.10 | 1.10 |
| Axial rigidity ratio σ8 of Outer half portion and Inner half portion of Inner middle land region | 1.00 | 1.00 | 1.10 | 1.10 | 1.10 |
| Number N1 of Inner shoulder lateral grooves | 65 | 65 | 65 | 70 | 65 |
| Number N2 of Outer shoulder lateral grooves | 65 | 65 | 65 | 60 | 65 |
| Ratio N1/N2 | 1.00 | 1.00 | 1.00 | 1.17 | 1.00 |
| Maximum ground contacting length (L) [m] | 0.14 | 0.14 | 0.14 | 0.14 | 0.14 |
| Pneumatic trail NT [m] | 0.022 | 0.026 | 0.026 | 0.028 | 0.023 |
| Cornering force (CF) [N] | 1000 | 1080 | 1020 | 1050 | 1010 |
| Self-aligning torque (SAT) [N·m] | 21 | 28 | 24 | 28 | 23 |
| Ratio NT/L | 0.157 | 0.185 | 0.185 | 0.197 | 0.163 |
| 0.18xLxCF [N·m] | 25.2 | 27.2 | 25.7 | 26.5 | 25.5 |
| Cornering performance [evaluation point] | 100 | 110 | 112 | 115 | 111 |

Table 1. (2/4)

| | | Ex.5 | Ex.6 | Ex.7 | Ex.8 | Ex.9 |
|---|---|---|---|---|---|---|
| Figure showing tread pattern | | Fig.2 | Fig.2 | Fig.2 | Fig.2 | Fig.2 |
| Circumferential rigidity ratio σ1 of Shoulder land region | | 1.40 | 1.10 | 1.10 | 1.10 | 1.10 |
| Axial rigidity ratio σ2 of Shoulder land region | | 1.10 | 1.05 | 1.40 | 1.10 | 1.10 |
| Circumferential rigidity ratio σ3 of Middle land region | | 1.10 | 1.10 | 1.10 | 1.05 | 1.40 |
| Axial rigidity ratio σ4 of Middle land region | | 1.10 | 1.10 | 1.10 | 1.10 | 1.10 |
| Circumferential rigidity ratio σ5 of Outer half portion and Inner half portion of Outer middle land region | | 1.10 | 1.10 | 1.10 | 1.10 | 1.10 |
| Axial rigidity ratio σ6 of Outer half portion and Inner half portion of Outer middle land region | | 1.10 | 1.10 | 1.10 | 1.10 | 1.10 |
| Circumferential rigidity ratio σ7 of Outer half portion and Inner half portion of Inner middle land region | | 1.10 | 1.10 | 1.10 | 1.10 | 1.10 |
| Axial rigidity ratio σ8 of Outer half portion and Inner half portion of Inner middle land region | | 1.10 | 1.10 | 1.10 | 1.10 | 1.10 |
| Number N1 of Inner shoulder lateral grooves | | 65 | 65 | 65 | 65 | 65 |
| Number N2 of Outer shoulder lateral grooves | | 65 | 65 | 65 | 65 | 65 |
| Ratio N1/N2 | | 1.00 | 1.00 | 1.00 | 1.00 | 1.00 |
| Maximum ground contacting length (L) | [m] | 0.14 | 0.14 | 0.14 | 0.14 | 0.14 |
| Pneumatic trail NT | [m] | 0.025 | 0.024 | 0.023 | 0.022 | 0.024 |
| Cornering force (CF) | [N] | 1040 | 1000 | 1025 | 1015 | 1030 |
| Self-aligning torque (SAT) | [N·m] | 27 | 25 | 26 | 22 | 25 |
| Ratio NT/L | | 0.179 | 0.171 | 0.165 | 0.155 | 0.173 |
| 0.18xLxCF | [N·m] | 26.2 | 25.2 | 25.8 | 25.6 | 26.0 |
| Cornering performance | [evaluation point] | 114 | 112 | 114 | 111 | 113 |

Table 1. (3/4)

| | | Ex.10 | Ex.11 | Ex.12 | Ex.13 | Ex.14 |
|---|---|---|---|---|---|---|
| Figure showing tread pattern | | Fig.2 | Fig.2 | Fig.2 | Fig.2 | Fig.2 |
| Circumferential rigidity ratio σ1 of Shoulder land region | | 1.10 | 1.10 | 1.10 | 1.10 | 1.10 |
| Axial rigidity ratio σ2 of Shoulder land region | | 1.10 | 1.10 | 1.10 | 1.10 | 1.10 |
| Circumferential rigidity ratio σ3 of Middle land region | | 1.10 | 1.10 | 1.10 | 1.10 | 1.10 |
| Axial rigidity ratio σ4 of Middle land region | | 1.05 | 1.40 | 1.10 | 1.10 | 1.10 |
| Circumferential rigidity ratio σ5 of Outer half portion and Inner half portion of Outer middle land region | | 1.10 | 1.10 | 1.05 | 1.50 | 1.10 |
| Axial rigidity ratio σ6 of Outer half portion and Inner half portion of Outer middle land region | | 1.10 | 1.10 | 1.10 | 1.10 | 1.05 |
| Circumferential rigidity ratio σ7 of Outer half portion and Inner half portion of Inner middle land region | | 1.10 | 1.10 | 1.10 | 1.10 | 1.10 |
| Axial rigidity ratio σ8 of Outer half portion and Inner half portion of Inner middle land region | | 1.10 | 1.10 | 1.10 | 1.10 | 1.10 |
| Number N1 of Inner shoulder lateral grooves | | 65 | 65 | 65 | 65 | 65 |
| Number N2 of Outer shoulder lateral grooves | | 65 | 65 | 65 | 65 | 65 |
| Ratio N1/N2 | | 1.00 | 1.00 | 1.00 | 1.00 | 1.00 |
| Maximum ground contacting length (L) | [m] | 0.14 | 0.14 | 0.14 | 0.14 | 0.14 |
| Pneumatic trail NT | [m] | 0.024 | 0.023 | 0.023 | 0.024 | 0.024 |
| Cornering force (CF) | [N] | 1015 | 1030 | 1020 | 1025 | 1015 |
| Self-aligning torque (SAT) | [N·m] | 24 | 24 | 23 | 25 | 24 |
| Ratio NT/L | | 0.169 | 0.180 | 0.161 | 0.174 | 0.169 |
| 0.18xLxCF | [N·m] | 25.6 | 26.0 | 25.7 | 25.8 | 25.6 |
| Cornering performance | [evaluation point] | 111 | 114 | 111 | 113 | 111 |

Table 1. (4/4)

| | | Ex.15 | Ex.16 | Ex.17 | Ex.18 | Ex.19 |
|---|---|---|---|---|---|---|
| Figure showing tread pattern | | Fig.2 | Fig.2 | Fig.2 | Fig.2 | Fig.2 |
| Circumferential rigidity ratio σ1 of Shoulder land region | | 1.10 | 1.10 | 1.10 | 1.10 | 1.10 |
| Axial rigidity ratio σ2 of Shoulder land region | | 1.10 | 1.10 | 1.10 | 1.10 | 1.10 |
| Circumferential rigidity ratio σ3 of Middle land region | | 1.10 | 1.10 | 1.10 | 1.10 | 1.10 |
| Axial rigidity ratio σ4 of Middle land region | | 1.10 | 1.10 | 1.10 | 1.10 | 1.10 |
| Circumferential rigidity ratio σ5 of Outer half portion and Inner half portion of Outer middle land region | | 1.10 | 1.10 | 1.10 | 1.10 | 1.10 |
| Axial rigidity ratio σ6 of Outer half portion and Inner half portion of Outer middle land region | | 1.20 | 1.10 | 1.10 | 1.10 | 1.10 |
| Circumferential rigidity ratio σ7 of Outer half portion and Inner half portion of Inner middle land region | | 1.10 | 1.05 | 1.50 | 1.10 | 1.10 |
| Axial rigidity ratio σ8 of Outer half portion and Inner half portion of Inner middle land region | | 1.10 | 1.10 | 1.10 | 1.05 | 1.20 |
| Number N1 of Inner shoulder lateral grooves | | 65 | 65 | 65 | 65 | 65 |
| Number N2 of Outer shoulder lateral grooves | | 65 | 65 | 65 | 65 | 65 |
| Ratio N1/N2 | | 1.00 | 1.00 | 1.00 | 1.00 | 1.00 |
| Maximum ground contacting length (L) | [m] | 0.14 | 0.14 | 0.14 | 0.14 | 0.14 |
| Pneumatic trail NT | [m] | 0.023 | 0.022 | 0.025 | 0.024 | 0.023 |
| Cornering force (CF) | [N] | 1030 | 1015 | 1030 | 1010 | 1040 |
| Self-aligning torque (SAT) | [N·m] | 24 | 22 | 26 | 24 | 24 |
| Ratio NT/L | | 0.166 | 0.155 | 0.180 | 0.170 | 0.165 |
| 0.18xLxCF | [N·m] | 26.0 | 25.6 | 26.0 | 25.5 | 26.2 |
| Cornering performance | [evaluation point] | 113 | 111 | 113 | 111 | 113 |

From the test results, it was confirmed that the tires as Examples 1 to 19 exerted excellent cornering performance as compared with the tires as the Comparative Example 1.

Pneumatic tires of size 235/45R18 were made by way of test according to the specifications listed in Table 2. For each of the test tires, the following tests were conducted.

[ Specifications of Tire ]

with respect to Comparative Example 2 and Examples 20 to 26, the middle land regions are configured as plane ribs having essentially no grooves and the other parts are essentially as shown in Fig. 2. with respect to Example 27, the middle land regions were further provided with the lateral grooves according to Fig. 2.

[ Bench Test ]

By using a flat belt type tire testing machine, the SAT, the maximum ground contacting length (L) in the tire circumferential direction of the tread portion, and the CF were measured under the following conditions, and then each of the test tires was investigated as to whether it satisfied the following expression (1).

The test results are shown in Table 2.

Tire rim: 18x6.5JJ
Tire inner pressure: 220 kPa
Speed: 10 km/h
Slip angle: 0.7 degrees
Camber angle: -1.0 degrees
Tire load: 70% of Standard tire load

$$SAT \geq 0.18 \times L \times CF \ldots(1)$$

[ Cornering Performance ]

The test tires were mounted on four wheels of an FF passenger car with a displacement of 2000 cc, then a driver cornered the test car on a dry road surface with the driver being the only member on the test car, and the cornering performance during the test drive was evaluated by the driver’s feeling. The results are indicated by an evaluation point based on the Comparative Example 2 being 100, wherein the larger the numerical value, the more quickly the vehicle body shifted to the revolution running state during cornering.

The test results are shown in Table 2.

Table 2.

| | Comp.Ex.2 | Ex.20 | Ex.21 | Ex.22 | Ex.23 | Ex.24 | Ex.25 | Ex.26 | Ex.27 |
|---|---|---|---|---|---|---|---|---|---|
| Number N1 ot Inner shoulder lateral grooves | 75 | 75 | 75 | 90 | 95 | 75 | 75 | 75 | 75 |
| Number N2 ot Outer shoulder lateral grooves | 75 | 68 | 57 | 45 | 43 | 57 | 57 | 57 | 57 |
| Ratio N1/N2 | 1.0 | 1.1 | 1.3 | 2.0 | 2.2 | 1.3 | 1.3 | 1.3 | 1.3 |
| Angle θ1 of Inner shoulder lateral groove [degree] | 0 | 45 | 45 | 45 | 45 | 30 | 60 | 45 | 45 |
| Angle θ4 of Outer shoulder lateral groove [degree] | 0 | 0 | 0 | 0 | 0 | 0 | 0 | 15 | 0 |
| Sum of Angles (θ1+θ4) [degree] | 0 | 45 | 45 | 45 | 45 | 30 | 60 | 60 | 45 |
| Contiguration of Middle lateral grooves | NA | NA | NA | NA | NA | NA | NA | NA | Fig.2 |
| 0.18xLxCF [N·m] | 25.2 | 26.7 | 27.2 | 25.1 | 24.9 | 26.9 | 27.4 | 27.0 | 27.1 |
| Self-aligning torque (SAT) [N·m] | 21.8 | 27.3 | 28.0 | 24.8 | 24.5 | 27.5 | 28.0 | 27.8 | 28.3 |
| Cornering performance [evaluation point] | 100 | 107 | 110 | 107 | 106 | 108 | 108 | 109 | 112 |

From the test results, it was confirmed that the tires as Examples 20 to 27 exerted excellent cornering performance as compared with the tires as the Comparative Example 2.

Tires of size 205/55R16 having the basic pattern shown in Fig. 11 were made by way of test according to the specifications listed in Table 3. various tests were conducted for each of the test tires. The ratio of the length of each of the middle lateral grooves and the width in the tire axial direction of the middle land region is the same for both of the inner middle land region and the outer middle land region. The ratio of the length of each of the first middle lateral grooves and the length of each of the second middle lateral grooves is the same for both of the inner middle lateral grooves and the outer middle lateral grooves.

Groove depth (d1) of first portion/ groove depth (d) of inner shoulder main groove: 50%
Depth (d3) of first sipe portion/ groove depth (d) of inner shoulder main groove: 50%

[ Bench Test ]

By using a flat belt type tire testing machine, the SAT, the maximum ground contacting length (L) in the tire circumferential direction of the tread portion, and the CF were measured under the following conditions, and then each of the test tires was investigated as to whether it satisfied the following expression (1).

Tire rim: 16x6.5JJ
Tire inner pressure: 200 kPa
Speed: 10 km/h
Slip angle: 0.7 degrees
Camber angle: -1.0 degrees
Tire load: 70% of Standard tire load

$$SAT \geq 0.18 \times L \times CF \ldots (1)$$

[ Cornering Performance ]

The test tires were mounted on four wheels of an FF passenger car with a displacement of 2000 cc, then a driver cornered the test car on a dry road surface from a high speed (100 to 120 km/h) to a low speed (40 to 80 km/h) with the driver being the only member on the test car, and the cornering performance during the test drive was evaluated by the driver's feeling. The results are indicated by an evaluation point based on the Reference 1 being 100, wherein the larger the numerical value, the more quickly the vehicle body shifted to the revolution running state during cornering.
The test results are shown in Table 3.

Table 3.

| | Ref. 1 | Ex. 28 | Ex. 29 | Ex. 30 | Ex. 31 | Ex. 32 | Ex. 33 | Ex. 34 | Ex. 35 | Ex. 36 | Ex. 37 |
|---|---|---|---|---|---|---|---|---|---|---|---|
| Length L4 of Middle lateral groove/ width (Wm) [%] | 100 | 55 | 20 | 30 | 80 | 90 | 55 | 55 | 55 | 55 | 55 |
| Presence (P) or Absence (A) of Tapered portion | (P) | (P) | (P) | (P) | (P) | (P) | (A) | (P) | (P) | (P) | (P) |
| Groove depth (d17) of second portion/ Groove depth (d16) of First portion [%] | 40 | 40 | 40 | 40 | 40 | 40 | 40 | 55 | 40 | 40 | 40 |
| Ratio (L3/W10)/(L4/W13) of lengths of Lateral grooves | 1< | 1< | 1< | 1< | 1< | 1< | 1< | 1< | <1 | 1< | 1< |
| Presence (P) or Absence (A) of Tapered part | (P) | (P) | (P) | (P) | (P) | (P) | (P) | (P) | (P) | (A) | (P) |
| Depth (d19) of second sipe portion/ Depth (d18) of First sipe portion [%] | 40 | 40 | 40 | 40 | 40 | 40 | 40 | 40 | 40 | 40 | 55 |
| Cornering performance [evaluation point: larger is better] | 100 | 120 | 110 | 115 | 115 | 110 | 117 | 110 | 113 | 117 | 115 |

From the test results, it was confirmed that the tires as Examples 28 to 37 exerted excellent cornering performance while maintaining the wet performance.
Tires of size 205/55R16 having the basic pattern shown in Fig. 2 were made by way of test according to the specifications listed in Table 4. As a Reference 2, tires each having the same number of the inner shoulder lateral grooves and the inner middle lateral grooves were made by way of test. various tests were conducted for each of the test tires.

[ Bench Test ]

By using a flat belt type tire testing machine, the SAT, the maximum ground contacting length (L) in the tire circumferential direction of the tread portion, and the CF were measured under the following conditions, and then each of the test tires was investigated as to whether it satisfied the following expression (1).

Tire rim: 16x6.5JJ
Tire inner pressure: 220 kPa
Speed: 10 km/h
Slip angle: 0.7 degrees
Camber angle: -1.0 degrees
Tire load: 70% of Standard tire load

$$SAT \geq 0.18 \times L \times CF \ldots (1)$$

[ Cornering Performance ]

The test tires were mounted on four wheels of an FF passenger car with a displacement of 2000 cc, then a driver cornered the test car on a dry road surface with the driver being the only member on the test car, and the cornering performance during the test drive was evaluated by the driver's feeling. The results are indicated by an evaluation point based on the Reference 2 being 100, wherein the larger the numerical value, the more quickly the vehicle body shifted to the revolution running state during cornering.

[ Wet Performance ]

while driving the above test car on an asphalt road surface having a radius of 100 m with a paddle having a depth of 5 mm and a length of 20 m, lateral acceleration (lateral G) of the front wheels was measured.

The results are shown as average lateral G at a speed in the range of from 50 to 80 km/h and indicated as an index based on the Reference 2 being 100, wherein the larger the numerical value, the better the wet performance is.

The test results are shown in Table 4.

Table 4. (1/2)

| | Ref.2 | Ex.38 | Ex.39 | Ex.40 | Ex.41 | Ex.42 | Ex.43 | Ex.44 |
|---|---|---|---|---|---|---|---|---|
| Number N3 of Inner middle lateral grooves/ Number N1 of Inner shoulder lateral grooves | 1.00 | 0.75 | 0.60 | 0.65 | 0.70 | 0.80 | 0.85 | 0.90 |
| Length L1 of Inner shoulder lateral groove/ Width W4 of Inner shoulder land region | 0.75 | 0.75 | 0.75 | 0.75 | 0.75 | 0.75 | 0.75 | 0.75 |
| Angle θ1 of Inner shoulder lateral groove [degree] | 30 | 30 | 30 | 30 | 30 | 30 | 30 | 30 |
| 0.18xLxCF [N·m] | 25.2 | 25.0 | 25.7 | 25.7 | 25.6 | 26.7 | 26.2 | 25.7 |
| Self-aligning torque (SAT) [N·m] | 21 | 25 | 26 | 26 | 26 | 25 | 24 | 23 |
| Cornering performance [evaluation point] | 100 | 110 | 109 | 110 | 110 | 109 | 107 | 105 |
| Wet performance [index] | 100 | 98 | 97 | 97 | 98 | 99 | 100 | 100 |

Table 4. (2/2)

| | Ex.45 | Ex.46 | Ex.47 | Ex.48 | Ex.49 | Ex.50 | Ex.51 | Ex.52 |
|---|---|---|---|---|---|---|---|---|
| Number N3 of Inner middle lateral grooves/ Number N1 of Inner shoulder lateral grooves | 0.75 | 0.75 | 0.75 | 0.75 | 0.75 | 0.75 | 0.75 | 0.75 |
| Length L1 of Inner shoulder lateral groove/ Width W4 of Inner shoulder land region | 0.65 | 0.70 | 0.80 | 0.85 | 0.75 | 0.75 | 0.75 | 0.75 |
| Angle θ1 of Inner shoulder lateral groove [degree] | 30 | 30 | 30 | 30 | 10 | 20 | 40 | 50 |
| 0.18xLxCF [N·m] | 26.5 | 26.4 | 26.5 | 26.0 | 26.2 | 26.5 | 26.2 | 26.0 |
| Self-aligning torque (SAT) [N·m] | 21 | 21 | 27 | 24 | 21 | 23 | 26 | 25 |
| Cornering performance [evaluation point] | 108 | 109 | 110 | 108 | 106 | 107 | 109 | 108 |
| Wet performance [index] | 97 | 98 | 98 | 100 | 98 | 98 | 98 | 99 |

From the test results, it was confirmed that the tires as Examples 38 to 52 exerted excellent cornering performance while maintaining the wet performance.

Tires of size 225/65R17 having the basic pattern shown in Fig. 16 were made by way of test according to the specifications listed in Table 5. various tests were conducted for each of the test tires. Only the specifications of the inner middle lateral grooves, the outer middle lateral grooves, the inner middle sipes, and the outer middle sipes are different, and the other specifications are substantially the same for each of the test tires. Note that the angle of each of the inner middle lateral grooves, the outer middle lateral grooves, the inner middle sipes, and the outer middle sipes with respect to the tire axial direction is zero degrees.

[ Steering Stability Performance (Linearity) ]

The test tires were mounted on rims (17×7J) and mounted on all wheels of a test car (FF car with displacement of 2400 cc) under the condition of the inner pressure of 220 kPa, and the test car was driven on a dry asphalt road surface of a test course. Then, the linearity (shift property to the revolution running state: vehicle followability at the time of steering) during a lane change and during cornering was evaluated by the ten point method by the driver's feeling, wherein a larger numerical value is better.

[ Steering Stability Performance (Responsiveness) ]

In the above test drive, responsiveness (responsiveness immediately after steering) during a lane change and during cornering is evaluated by the ten point method by the driver's feeling, wherein a larger numerical value is better.

[ Bench Test ]

By using a flat belt type tire testing machine, the SAT, the maximum ground contacting length (L) in the tire circumferential direction of the tread portion, and the CF were measured under the following conditions, and then each of the test tires was investigated as to whether it satisfied the following expression (1). The examples satisfying the expression (1) are indicated as "Yes", and the examples not satisfying the expression (1) are indicated as "No".

Tire rim: standard rim
Tire inner pressure: standard inner pressure
Speed: 10 km/h
Slip angle: 0.7 degrees
Camber angle: -1.0 degrees
Tire load: 70% of standard tire load

$$SAT \geq 0.18 \times L \times CF \ldots (1)$$

Table 5.

| | Ex. 53 | Ex. 54 | Ref. 3 | Ref. 4 | Ref. 5 | Ref. 6 | Ref. 7 | Ex. 55 | Ex. 56 | Ex. 57 | Ex. 58 |
|---|---|---|---|---|---|---|---|---|---|---|---|
| Middle lateral grooves | | | | | | | | | | | |
| (inner) Number N3 | 132 | 132 | 132 | 132 | 132 | 132 | 132 | 132 | 132 | 132 | 132 |
| (Outer) Number N4 | 66 | 92 | 132 | 33 | 66 | 66 | 66 | 66 | 66 | 66 | 66 |
| Ratio N4/N3 | 0.5 | 0.7 | 1 | 0.25 | 0.5 | 0.5 | 0.5 | 0.5 | 0.5 | 0.5 | 0.5 |
| (inner) Ratio L3/W10 | 0.75 | 0.75 | 0.75 | 0.75 | 0.75 | 0.75 | 0.75 | 0.75 | 0.75 | 0.75 | 0.75 |
| (Outer) Ratio L4/W13 | 0.4 | 0.4 | 0.4 | 0.4 | 0.8 | 0.4 | 0.4 | 0.56 | 0.26 | 0.4 | 0.4 |
| (Inner) Groove depth (d6) [mm] | 5 | 5 | 5 | 5 | 5 | 5 | 5 | 5 | 5 | 5 | 5 |

(continued)

| | Ex. 53 | Ex. 54 | Ref. 3 | Ref. 4 | Ref. 5 | Ref. 6 | Ref. 7 | Ex. 55 | Ex. 56 | Ex. 57 | Ex. 58 |
|---|---|---|---|---|---|---|---|---|---|---|---|
| (Outer) Groove depth (d7) [mm] | 3 | 3 | 3 | 3 | 3 | 6 | 3 | 3 | 3 | 3 | 3 |
| (Inner) Groove width (W11) [mm] | 2 | 2 | 2 | 2 | 2 | 2 | 2 | 2 | 2 | 2 | 2 |
| (Outer) Groove width (W14) [mm] | 2 | 2 | 2 | 2 | 2 | 2 | 4 | 2 | 2 | 2 | 2 |
| Ratio of Total$\Sigma$L4/ Total $\Sigma$L3 | 0.5 | 0.7 | 1 | 0.25 | 1 | 0.5 | 0.5 | 0.7 | 0.33 | 0.5 | 0.5 |
| Middle sipes | | | | | | | | | | | |
| (inner) Ratio L10/W10 | 0.4 | 0.4 | 0.4 | 0.4 | 0.4 | 0.4 | 0.4 | 0.4 | 0.4 | 0.4 | 0.4 |
| (Outer) Ratio L11/W13 | 0.3 | 0.3 | 0.3 | 0.3 | 0.3 | 0.3 | 0.3 | 0.3 | 0.3 | 0.6 | 0.6 |
| (Inner) Depth (d10) of Inner middle sipe [mm] | 5 | 5 | 5 | 5 | 5 | 5 | 5 | 5 | 5 | 5 | 5 |
| (Outer) Depth (d11) of Outer middle sipe [mm] | 3 | 3 | 3 | 3 | 3 | 3 | 3 | 3 | 3 | 3 | 7 |
| Satisfying Expression (1) | Yes | Yes | No | No | No | No | No | No | Yes | No | No |
| Steering Stability Performance (Linearity) | 6.5 | 6.3 | 5.5 | 7 | 5.5 | 5.5 | 5.5 | 6 | 7 | 6.2 | 6 |
| Steering Stability Performance (Responsiveness) | 6.5 | 6.5 | 6.5 | 5.5 | 6.5 | 6.5 | 6.5 | 6.5 | 6 | 6.5 | 6.5 |

From the test results, it was confirmed that the tires as Examples 53 to 58 were excellent in the linearity and the responsiveness and was able to exert high cornering performance.

Tires of size 205/55R16 having the basic pattern shown in Fig. 19 were made by way of test according to the specifications listed in Table 6. As Reference 8, as shown in Fig. 28, a tire was made by way of test in which the ratio Sbi/Sbo of the tire circumferential direction length (Sbi) of each of the inner shoulder block pieces and the tire circumferential direction length (Sbo) of each of the outer shoulder block pieces is 1.0. various tests were conducted for each of the test tires.

[ Bench Test ]

By using a flat belt type tire testing machine, the SAT, the maximum ground contacting length (L) in the tire circumferential direction of the tread portion, and the CF were measured under the following conditions, and then each of the test tires was investigated as to whether it satisfied the following expression (1).

Tire rim: 16x6.5JJ
Tire inner pressure: 220 kPa
Speed: 10 km/h
Slip angle: 0.7 degrees
Camber angle: -1.0 degrees
Tire load: 70% of standard tire load

$$SAT \geq 0.18 \times L \times CF \ldots (1)$$

[ Cornering Performance ]

The test tires were mounted on four wheels of an FF passenger car with a displacement of 2000 cc, then a driver cornered the test car on a dry road surface with the driver being the only member on the test car, and the cornering performance during the test drive was evaluated by the driver's feeling. The results are indicated by an evaluation point based on the Reference 8 being 100, wherein the larger the numerical value, the more quickly the vehicle body shifted to the revolution running state during cornering.

[ Ride Comfort ]

The ride comfort of the test car during running was evaluated by the driver's feeling. The results are indicated by an evaluation point based on the reference 8 being 100, wherein the larger the numerical value, the better the ride comfort is.

The test results are shown in Table 6.

Table 6. (1/2)

| | Ref.8 | Ref.9 | Ref.10 | Ex.59 | Ex.60 | Ex.61 | Ex.62 | Ex.63 |
|---|---|---|---|---|---|---|---|---|
| Figure showing tread pattern | Fig.28 | Fig.19 | Fig.19 | Fig.19 | Fig.19 | Fig.19 | Fig.19 | Fig.19 |
| Ratio Sbi/Sbo of tire circumferential direction lengths | 1.00 | 0.55 | 0.95 | 0.75 | 0.60 | 0.65 | 0.70 | 0.80 |
| Ratio Mbi/Mbo of tire circumferential direction lengths | 1.00 | 0.80 | 0.80 | 0.80 | 0.80 | 0.80 | 0.80 | 0.80 |
| 0.18xLxCF [N·m] | 25.2 | 25.5 | 25.8 | 27.2 | 25.5 | 27.0 | 27.5 | 27.0 |
| Self-aligning torque (SAT) [N·m] | 21.0 | 20.0 | 22.0 | 28.0 | 25.0 | 26.0 | 29.0 | 28.0 |
| Cornering performance [evaluation point] | 100 | 105 | 102 | 110 | 107 | 110 | 111 | 110 |
| Ride comfort [evaluation point] | 100 | 96 | 100 | 103 | 100 | 101 | 102 | 102 |

Table 6. (2/2)

| | Ex.64 | Ex.65 | Ex.66 | Ex.67 | Ex.68 | Ex.69 | Ex.70 | Ex.71 |
|---|---|---|---|---|---|---|---|---|
| Figure showing tread pattern | Fig.19 | Fig.19 | Fig.19 | Fig.19 | Fig.19 | Fig.19 | Fig.19 | Fig.19 |
| Ratio Sbi/Sbo of tire circumferential direction lengths | 0.85 | 0.90 | 0.75 | 0.75 | 0.75 | 0.75 | 0.75 | 0.75 |
| Ratio Mbi/Mbo of tire circumferential direction lengths | 0.80 | 0.80 | 0.65 | 0.70 | 0.75 | 0.85 | 0.90 | 0.95 |
| 0.18xLxCF [N·m] | 26.2 | 26.0 | 26.0 | 26.2 | 27.2 | 27.2 | 26.2 | 26.0 |
| Self-aligning torque (SAT) [N·m] | 26.0 | 25.0 | 23.0 | 25.0 | 28.0 | 28.0 | 26.0 | 25.5 |
| Cornering performance [evaluation point] | 109 | 108 | 107 | 109 | 111 | 110 | 109 | 107 |
| Ride comfort [evaluation point] | 102 | 101 | 100 | 100 | 102 | 103 | 102 | 101 |

From the test results, it was confirmed that the tires as Examples 59 to 71 exerted excellent cornering performance as compared with the tires as the Reference 8. Further, it was confirmed that the tires as the Examples maintained the ride comfort. Furthermore, it was confirmed that the tires which satisfied the above expression (1) exerted better cornering performance among the tires as the Examples.

Tires of size 205/55R16 having the basic pattern shown in Fig. 23 were made by way of test according to the specifications listed in Table 7. As Reference 11, as shown in Fig. 29, tires were made by way of test in which the outer middle land region was provided with lateral grooves extending from the outer shoulder main groove and terminating within the land region. Various tests were conducted for each of the test tires.

[ Bench Test ]

By using a flat belt type tire testing machine, the SAT, the maximum ground contacting length (L) in the tire circumferential direction of the tread portion, and the CF were measured under the following conditions, and then each of the test tires was investigated as to whether it satisfied the following expression (1).

Tire rim: 16x6.5JJ
Tire inner pressure: 220 kPa
Speed: 10 km/h
Slip angle: 0.7 degrees
Camber angle: -1.0 degrees
Tire load: 70% of standard tire load

$$SAT \geq 0.18 \times L \times CF \ldots (1)$$

[ Cornering Performance ]

The test tires were mounted on four wheels of an FF passenger car with a displacement of 2000 cc, then a driver cornered the test car on a dry road surface with the driver being the only member in the test car, and the cornering performance during the test drive was evaluated by the driver's feeling. The results are indicated by an evaluation point based on the Reference 11 being 100, wherein the larger the numerical value, the more quickly the vehicle body shifted to the revolution running state during cornering.

[ Wet Performance ]

while driving the above test car on an asphalt road surface having a radius of 100 m with a paddle having a depth of 5 mm and a length of 20 m, lateral acceleration (lateral G) of the front wheels was measured. The results are shown as average lateral G at a speed in the range of from 50 to 80 km/h and indicated as an index based on the Reference 11 being 100, wherein the larger the numerical value, the better the wet performance is.

The test results are shown in Table 7.

Table 7. (1/2)

| | Ref.11 | Ex.72 | Ex.73 | Ex.74 | Ex.75 | Ex.76 | Ex.77 | Ex.78 |
|---|---|---|---|---|---|---|---|---|
| Figure showing tread pattern | Fig.29 | Fig.23 | Fig.23 | Fig.23 | Fig.23 | Fig.23 | Fig.23 | Fig.23 |
| Length L2 of Outer shoulder lateral groove/ Width W7 of Outer shoulder land region | 0.75 | 0.75 | 0.65 | 0.70 | 0.80 | 0.85 | 0.75 | 0.75 |
| Length L1 of Inner shoulder lateral groove/ Width W4 of Inner shoulder land region | 0.75 | 0.75 | 0.65 | 0.70 | 0.80 | 0.85 | 0.75 | 0.75 |
| Angle θ4 of Outer shoulder lateral groove [degree] | 10 | 10 | 10 | 10 | 10 | 10 | 0 | 15 |
| Angle θ8 of Outer middle lateral groove [degree] | 10 | 10 | 10 | 10 | 10 | 10 | 10 | 10 |
| Number N4 of Outer middle lateral grooves/ Number N2 of Outer shoulder lateral grooves | 2.50 | 2.50 | 2.50 | 2.50 | 2.50 | 2.50 | 2.50 | 2.50 |
| 0.18xLxCF [N·m] | 25.2 | 26.5 | 27.2 | 26.7 | 26.7 | 26.5 | 27.2 | 26.2 |
| Self-aligning torque (SAT) [N·m] | 24 | 27 | 26 | 27 | 27 | 26 | 27 | 26 |
| Cornering performance [evaluation point] | 100 | 108 | 108 | 108 | 107 | 105 | 108 | 107 |
| Wet performance [index] | 100 | 102 | 100 | 102 | 103 | 104 | 102 | 102 |

Table 7. (2/2)

| | Ex.79 | Ex.80 | Ex.81 | Ex.82 | Ex.83 | Ex.84 | Ex.85 | Ex.86 |
|---|---|---|---|---|---|---|---|---|
| Figure showing tread pattern | Fig.23 | Fig.23 | Fig.23 | Fig.23 | Fig.23 | Fig.23 | Fig.23 | Fig.23 |
| Length L2 of Outer shoulder lateral groove/ Width W7 of Outer shoulder land region | 0.75 | 0.75 | 0.75 | 0.75 | 0.75 | 0.75 | 0.75 | 0.75 |
| Length L1 of Inner shoulder lateral groove/ Width W4 of Inner shoulder land region | 0.75 | 0.75 | 0.75 | 0.75 | 0.75 | 0.75 | 0.75 | 0.75 |
| Angle θ4 of Outer shoulder lateral groove [degree] | 30 | 10 | 10 | 10 | 10 | 10 | 10 | 10 |
| Angle θ8 of Outer middle lateral groove [degree] | 10 | 0 | 5 | 20 | 10 | 10 | 10 | 10 |
| Number N4 of Outer middle lateral grooves/ Number N2 of Outer shoulder lateral grooves | 2.50 | 2.50 | 2.50 | 2.50 | 2.00 | 2.30 | 3.20 | 3.50 |
| 0.18xLxCF [N·m] | 25.7 | 27.0 | 26.5 | 26.2 | 27.7 | 27.0 | 26.5 | 26.0 |
| Self-aligning torque (SAT) [N·m] | 25 | 26 | 26 | 26 | 26 | 27 | 28 | 25 |
| Cornering performance [evaluation point] | 106 | 108 | 107 | 105 | 109 | 108 | 106 | 105 |
| Wet performance [index] | 103 | 102 | 102 | 103 | 100 | 102 | 103 | 103 |

From the test results, it was confirmed that the tires as Examples 72 to 86 exerted excellent cornering performance while maintaining the wet performance.

## Claims

1. A pneumatic radial tire (1) for a passenger car comprising a carcass (6) having a radial structure, a belt layer (7) arranged on an outer side of the carcass (6) and formed of at least two belt plies (7A, 7B), and a tread portion (2) whose position when mounted on a vehicle is specified, wherein

   the tread portion (2) has an outer tread edge (To) and an inner tread edge (Ti) respectively located, when the tire (1) is mounted on a vehicle, on an outer side and an inner side of the vehicle,
   the tread portion (2) has a tread pattern formed in an asymmetric shape with respect to a tire equator (C),
   the tread portion (2) is divided into a plurality of circumferential land regions by a plurality of main grooves (10) extending continuously in a tire circumferential direction,
   the circumferential land regions include an outer shoulder land region (16) including the outer tread edge (To), an inner shoulder land region (17) including the inner tread edge (Ti), and at least one middle land region (18) arranged therebetween,
   the outer shoulder land region (16) is larger than the inner shoulder land region (17) with respect to rigidity in the tire circumferential direction and the rigidity in a tire axial direction,
   the outer shoulder land region (16) is provided with a plurality of outer shoulder lateral grooves (28) extending axially inwardly from the outer tread edge (To) and terminating within the outer shoulder land region (16),
   the inner shoulder land region (17) is provided with a plurality of inner shoulder lateral grooves (21) extending axially inwardly from the inner tread edge (Ti) and terminating within the inner shoulder land region (17), and
   a number (N1) of the inner shoulder lateral grooves (21) is not less than 1.1 times a number (N2) of the outer shoulder lateral grooves (28),
   **characterized in that**
   an angle (θ4) of each of the outer shoulder lateral grooves (28) with respect to the tire axial direction is smaller than an angle (θ1) of each of the inner shoulder lateral grooves (21) with respect to the tire axial direction.

2. The pneumatic radial tire (1) according to claim 1 satisfying the following expression (E1)

$$SAT \geq 0.18 \times L \times CF \ldots (E1)$$

   under the following running conditions:

   tire rim: standard rim
   tire inner pressure: standard inner pressure

tire load: 70% of standard tire load
speed: 10 km/h
slip angle: 0.7 degrees
camber angle: -1.0 degrees
wherein "SAT" is self-aligning torque [N·m], "L" is a maximum ground contacting length [m] in the tire circumferential direction of the tread portion, and "CF" is cornering force [N].

**3.** The pneumatic radial tire (1) according to claims 1 or 2, wherein
the number (N1) of the inner shoulder lateral grooves (21) is not more than 2.0 times the number (N2) of the outer shoulder lateral grooves (28).

**4.** The pneumatic radial tire (1) according to any one of claims 1 to 3, wherein
a sum of the angle ($\theta$4) of each of the outer shoulder lateral grooves (28) with respect to the tire axial direction and the angle ($\theta$1) of each of the inner shoulder lateral grooves (21) with respect to the tire axial direction is in the range of from 30 to 60 degrees.

**5.** The pneumatic radial tire (1) according to any one of claims 1 to 4, wherein

the outer shoulder land region (16) is provided with a plurality of outer shoulder lateral grooves (28) extending axially inwardly from the outer tread edge (To) and terminating within the outer shoulder land region (16), and outer shoulder block pieces (34) each defined between a pair of the outer shoulder lateral grooves (28) adjacent to each other in the tire circumferential direction and having a tire circumferential direction length (Sbo),
the inner shoulder land region (17) is provided with a plurality of inner shoulder lateral grooves (21) extending axially inwardly from the inner tread edge (Ti) and terminating within the inner shoulder land region (17), and inner shoulder block pieces (26) each defined between a pair of the inner shoulder lateral grooves (21) adjacent to each other in the tire circumferential direction and having a tire circumferential direction length (Sbi), and
a ratio Sbi/Sbo of the tire circumferential direction lengths is in the range of from 0.60 to 0.90.

**6.** The pneumatic radial tire (1) according to claim 5, wherein

the middle land region (18) includes an outer middle land region (19) adjacent to the outer shoulder land region (16) and an inner middle land region (20) adjacent to the inner shoulder land region (17),
the outer middle land region (19) is provided with a plurality of outer middle lateral grooves (40) extending from an edge thereof on a side of the inner tread edge (Ti) toward the outer tread edge (To) and terminating within the outer middle land region (19), and outer middle block pieces (42) each defined between a pair of the outer middle lateral grooves (40) adjacent to each other in the tire circumferential direction and having a tire circumferential direction length (Mbo),
the inner middle land region (20) is provided with a plurality of inner middle lateral grooves (36) extending from an edge thereof on a side of the inner tread edge (Ti) toward the outer tread edge (To) and terminating within the inner middle land region (20), and inner middle block pieces (38) each defined between a pair of the inner middle lateral grooves (36) adjacent to each other in the tire circumferential direction and having a tire circumferential direction length (Mbi), and
a ratio Mbi/Mbo of the tire circumferential direction lengths is in the range of from 0.70 to 0.90.

**7.** The pneumatic radial tire (1) according to any one of claims 5 or 6, wherein

the middle land region (18) includes an inner middle land region (20) adjacent to the inner shoulder land region (21) and an outer middle land region (19) adjacent to the outer shoulder land region (28),
the inner middle land region (20) is provided with a plurality of inner middle lateral grooves (36) extending from an edge thereof on a side of the inner tread edge (ti) toward the outer tread edge (To),
the outer middle land region (19) is provided with a plurality of outer middle lateral grooves (40) extending from an edge thereof on a side of the inner tread edge (Ti) toward the outer tread edge (To),
number N4 of the outer middle lateral grooves (40) is in the range of from 0.5 to 0.7 times number N3 of the inner middle lateral grooves (36),
a ratio L3/W10 of a length L3 in the tire axial direction of each of the inner middle lateral grooves (36) and a width W10 in the tire axial direction of the inner middle land region (20) is larger than a ratio L4/W13 of a length L4 in the tire axial direction of each of the outer middle lateral grooves (40) and a width W13 in the tire axial direction of the outer middle land region (19),

a groove depth (d6) of each of the inner middle lateral grooves (36) is larger than a groove depth (d7) of each of the outer middle lateral grooves (40), and
a groove width W11 of each of the inner middle lateral grooves (36) is not less than a groove width W14 of each of the outer middle lateral grooves (40).

**8.** The pneumatic radial tire (1) according to claim 7, wherein

the inner middle lateral grooves (36) extend from the edge on the side of the inner tread edge (Ti) of the inner middle land region (20) and terminate within the inner middle land region (20), and
the outer middle lateral grooves (40) extend from the edge on the side of the inner tread edge (Ti) of the outer middle land region (19) and terminate within the outer middle land region (19).

**9.** The pneumatic radial tire (1) according to any one of claims 1 to 8, wherein
the middle land region is provided with a plurality of middle lateral grooves extending from an edge thereof on a side of the inner tread edge (Ti) toward the outer tread edge (To) and terminate within the middle land region, and a plurality of middle sipes (44) completely crossing the middle land region.

**10.** The pneumatic radial tire (1) according to any one of claims 1 to 9, wherein

the middle land region includes an inner middle land region (20) located on a side of the inner tread edge (Ti) and an outer middle land region (19) located on a side of the outer tread edge (To) of the inner middle land region,
the middle lateral grooves include a plurality of inner middle lateral grooves (36) provided in the inner middle land region (20) and a plurality of outer middle lateral grooves (40) provided in the outer middle land region (19),
a ratio (L3/W10) of a length (L3) in the tire axial direction of each of the inner middle lateral grooves (36) and a width (W10) in the tire axial direction of the inner middle land region (20) is larger than a ratio (L4/W13) of a length (L4) in the tire axial direction of each of the outer middle lateral grooves (40) and a width (W13) in the tire axial direction of the outer middle land region (19).

**11.** The pneumatic radial tire (1) according to any one of claims 1 to 10, wherein

the circumferential land regions include an inner middle land region (20) adjacent to the inner shoulder land region (17),
the inner shoulder land region (17) is provided with a plurality of inner shoulder lateral grooves (21) extending axially inwardly from the inner tread edge (Ti) and terminating within the inner shoulder land region (17),
the inner middle land region (20) is provided with a plurality of inner middle lateral grooves (36) extending from an edge thereof on a side of the inner tread edge (Ti) toward the outer tread edge (To) and terminating within the inner middle land region (20), and
number (N1) of the inner shoulder lateral grooves (21) is larger than number (N3) of the inner middle lateral grooves (36).

**12.** The pneumatic radial tire (1) according to claim 11, wherein
the number (N3) of the inner middle lateral grooves (36) is in the range of from 0.70 to 0.80 times the number (N1) of the inner shoulder lateral grooves (21).

**13.** The pneumatic radial tire (1) according to any one of claims 1 to 12, wherein

the circumferential land regions include an outer middle land region (19) adjacent to the outer shoulder land region (16),
the outer shoulder land region (16) is provided with a plurality of outer shoulder lateral grooves (28) extending axially inwardly from the outer tread edge (To) and terminating within the outer shoulder land region (16),
the outer middle land region (19) is provided with a plurality of outer middle lateral grooves (40) extending from an edge thereof on a side of the inner tread edge (Ti) toward the outer tread edge (To) and terminating within the outer middle land region (40).

**14.** The pneumatic radial tire (1) according to claim 13, wherein
a length (Sbo) in the tire axial direction of each of the outer shoulder lateral grooves (28) is in the range of from 0.70 to 0.80 times a width (W7) in the tire axial direction of the outer shoulder land region (16).

**Patentansprüche**

1. Radialluftreifen (1) für einen Personenkraftwagen, umfassend eine Karkasse (6) mit einer radialen Struktur, eine Gürtelschicht (7), die an einer Außenseite der Karkasse (6) angeordnet ist und aus mindestens zwei Gürtellagen (7A, 7B) gebildet ist, und einen Laufflächenabschnitt (2), dessen Position, wenn er an einem Fahrzeug montiert ist, festgelegt ist, wobei

   der Laufflächenabschnitt (2) eine äußere Laufflächenkante (To) und eine innere Laufflächenkante (Ti) aufweist, die sich, wenn der Reifen (1) an einem Fahrzeug montiert ist, auf einer äußeren Seite bzw. einer inneren Seite des Fahrzeugs befinden,
   der Laufflächenabschnitt (2) ein Laufflächenprofil aufweist, das in einer asymmetrischen Form in Bezug auf einen Reifenäquator (C) ausgebildet ist,
   der Laufflächenabschnitt (2) durch eine Vielzahl von Hauptrillen (10), die sich kontinuierlich in einer Reifenumfangsrichtung erstrecken, in eine Vielzahl von Umfangslandbereichen unterteilt ist,
   die Umfangslandbereiche einen äußeren Schulterlandbereich (16), der die äußere Laufflächenkante (To) einschließt, einen inneren Schulterlandbereich (17), der die innere Laufflächenkante (Ti) einschließt, und mindestens einen dazwischen angeordneten mittleren Landbereich (18) umfassen,
   der äußere Schulterlandbereich (16) größer ist als der innere Schulterlandbereich (17) in Bezug auf die Steifigkeit in der Reifenumfangsrichtung und die Steifigkeit in einer axialen Richtung des Reifens,
   der äußere Schulterlandbereich (16) mit einer Vielzahl von äußeren Schulterquerrillen (28) versehen ist, die sich von der äußeren Laufflächenkante (To) axial nach innen erstrecken und innerhalb des äußeren Schulterlandbereichs (16) enden,
   der innere Schulterlandbereich (17) mit einer Vielzahl von inneren Schulterquerrillen (21) versehen ist, die sich von der inneren Laufflächenkante (Ti) axial nach innen erstrecken und innerhalb des inneren Schulterlandbereichs (17) enden, und
   eine Anzahl (N1) der inneren Schulterquerrillen (21) nicht weniger als das 1,1-fache einer Anzahl (N2) der äußeren Schulterquerrillen (28) beträgt,
   **dadurch gekennzeichnet, dass**
   ein Winkel (θ4) von jeder der äußeren Schulterquerrillen (28) in Bezug auf die axiale Richtung des Reifens kleiner ist als ein Winkel (θ1) von jeder der inneren Schulterquerrillen (21) in Bezug auf die axiale Richtung des Reifens.

2. Radialluftreifen (1) nach Anspruch 1, der den folgenden Ausdruck (E1) erfüllt

$$SAT \geq 0{,}18 \times L \times CF \ldots (E1)$$

   unter den folgenden Betriebsbedingungen:

   Felge: Standardfelge
   Reifeninnendruck: Standard-Innendruck
   Reifenbelastung: 70% der Standard-Reifenlast
   Drehzahl: 10 km/h
   Schräglaufwinkel: 0,7 Grad
   Sturzwinkel: -1,0 Grad
   wobei "SAT" das Selbstausrichtungsdrehmoment [N-m] ist, "L" die maximale Bodenaufstandslänge [m] in der Reifenumfangsrichtung des Laufflächenabschnitts ist, und "CF" die Kurvenkraft [N] ist.

3. Radialluftreifen (1) nach einem der Ansprüche 1 oder 2, wobei die Anzahl (N1) der inneren Schulterquerrillen (21) nicht mehr als das 2,0-fache der Anzahl (N2) der äußeren Schulterquerrillen (28) beträgt.

4. Radialluftreifen (1) nach einem der Ansprüche 1 bis 3, wobei eine Summe des Winkels (θ4) von jeder der äußeren Schulterquerrillen (28) in Bezug auf die axiale Richtung des Reifens und des Winkels (θ1) von jeder der inneren Schulterquerrillen (21) in Bezug auf die axiale Richtung des Reifens im Bereich von 30 bis 60 Grad liegt.

5. Radialluftreifen (1) nach einem der Ansprüche 1 bis 4, wobei

der äußere Schulterlandbereich (16) mit einer Vielzahl von äußeren Schulterquerrillen (28), die sich von der äußeren Laufflächenkante (To) axial nach innen erstrecken und innerhalb des äußeren Schulterlandbereichs (16) enden, und äußeren Schulterblockstücken (34) versehen ist, die jeweils zwischen einem Paar der äußeren Schulterquerrillen (28), die benachbart zueinander in der Reifenumfangsrichtung sind, definiert sind und eine Länge in Reifenumfangsrichtung (Sbo) aufweisen,
der innere Schulterlandbereich (17) mit einer Vielzahl von inneren Schulterquerrillen (21), die sich von der inneren Laufflächenkante (Ti) axial nach innen erstrecken und innerhalb des inneren Schulterlandbereichs (17) enden, und inneren Schulterblockstücken (26) versehen ist, die jeweils zwischen einem Paar der inneren Schulterquerrillen (21), die benachbart zueinander in der Reifenumfangsrichtung sind, definiert sind und eine Länge in Reifenumfangsrichtung (Sbi) aufweisen, und
ein Verhältnis Sbi/Sbo der Längen in Reifenumfangsrichtung im Bereich von 0,60 bis 0,90 liegt.

**6.** Radialluftreifen (1) nach Anspruch 5, wobei

der mittlere Landbereich (18) einen äußeren mittleren Landbereich (19) benachbart zu dem äußeren Schulterlandbereich (16) und einen inneren mittleren Landbereich (20) benachbart zu dem inneren Schulterlandbereich (17) umfasst,
der äußere mittlere Landbereich (19) mit einer Vielzahl von äußeren mittleren Querrillen (40), die sich von einer Kante davon auf einer Seite der inneren Laufflächenkante (Ti) in Richtung der äußeren Laufflächenkante (To) erstrecken und innerhalb des äußeren mittleren Landbereichs (19) enden, und äußeren mittleren Blockstücken (42) versehen ist, die jeweils zwischen einem Paar der äußeren mittleren Querrillen (40), die benachbart zueinander in der Reifenumfangsrichtung sind, definiert sind und eine Länge in Reifenumfangsrichtung (Mbo) aufweisen,
der innere mittlere Landbereich (20) mit einer Vielzahl von inneren mittleren Querrillen (36), die sich von einer Kante davon auf einer Seite der inneren Laufflächenkante (Ti) in Richtung der äußeren Laufflächenkante (To) erstrecken und innerhalb des inneren mittleren Landbereichs (20) enden, und inneren mittleren Blockstücken (38) versehen ist, die jeweils zwischen einem Paar der inneren mittleren Querrillen (36), die benachbart zueinander in der Reifenumfangsrichtung sind, definiert sind und eine Läge in Reifenumfangsrichtung (Mbi) aufweisen, und
ein Verhältnis Mbi/Mbo der Längen in Reifenumfangsrichtung im Bereich von 0,70 bis 0,90 liegt.

**7.** Radialluftreifen (1) nach Anspruch 5 oder 6, wobei

der mittlere Landbereich (18) einen inneren mittleren Landbereich (20) benachbart zu dem inneren Schulterlandbereich (21) und einen äußeren mittleren Landbereich (19) benachbart zu dem äußeren Schulterlandbereich (28) umfasst,
der innere mittlere Landbereich (20) mit einer Vielzahl von inneren mittleren Querrillen (36) versehen ist, die sich von einer Kante davon auf einer Seite der inneren Laufflächenkante (ti) in Richtung der äußeren Laufflächenkante (To) erstrecken,
der äußere mittlere Landbereich (19) mit einer Vielzahl von äußeren mittleren Querrillen (40) versehen ist, die sich von einer Kante davon auf einer Seite der inneren Laufflächenkante (Ti) in Richtung der äußeren Laufflächenkante (To) erstrecken,
die Anzahl N4 der äußeren mittleren Querrillen (40) im Bereich des 0,5- bis 0,7-fachen der Anzahl N3 der inneren mittleren Querrillen (36) liegt,
ein Verhältnis L3/W10 einer Länge L3 in der axialen Richtung des Reifens von jeder der inneren mittleren Querrillen (36) und einer Breite W10 in der axialen Richtung des Reifens des inneren mittleren Landbereichs (20) größer ist als ein Verhältnis L4/W13 einer Länge L4 in der axialen Richtung des Reifens von jeder der äußeren mittleren Querrillen (40) und einer Breite W13 in der axialen Richtung des Reifens des äußeren mittleren Landbereichs (19),
eine Rillentiefe (d6) von jeder der inneren mittleren Querrillen (36) größer ist als eine Rillentiefe (d7) von jeder der äußeren mittleren Querrillen (40), und
eine Rillenbreite W11 von jeder der inneren mittleren Querrillen (36) nicht kleiner ist als eine Rillenbreite W14 von jeder der äußeren mittleren Querrillen (40).

**8.** Radialluftreifen (1) nach Anspruch 7, wobei

die inneren mittleren Querrillen (36) sich von der Kante auf der Seite der inneren Laufflächenkante (Ti) des inneren mittleren Landbereichs (20) erstrecken und innerhalb des inneren mittleren Landbereichs (20) enden, und
die äußeren mittleren Querrillen (40) sich von der Kante auf der Seite der inneren Laufflächenkante (Ti) des äußeren mittleren Landbereichs (19) erstrecken und innerhalb des äußeren mittleren Landbereichs (19) enden.

**9.** Radialluftreifen (1) nach einem der Ansprüche 1 bis 8,
wobei der mittlere Landbereich mit einer Vielzahl von mittleren Querrillen, die sich von einer Kante davon auf einer Seite der inneren Laufflächenkante (Ti) in Richtung der äußeren Laufflächenkante (To) erstrecken und innerhalb des mittleren Landbereichs enden, und einer Vielzahl von mittleren Feinschnitten (44) versehen ist, die den mittleren Landbereich vollständig durchqueren.

**10.** Radialluftreifen (1) nach einem der Ansprüche 1 bis 9, wobei

der mittlere Landbereich einen inneren mittleren Landbereich (20), der sich auf einer Seite der inneren Laufflächenkante (Ti) befindet, und einen äußeren mittleren Landbereich (19) umfasst, der sich auf einer Seite der äußeren Laufflächenkante (To) des inneren mittleren Landbereichs befindet,
die mittleren Querrillen eine Vielzahl von inneren mittleren Querrillen (36), die in dem inneren mittleren Landbereich (20) vorgesehen sind, und eine Vielzahl von äußeren mittleren Querrillen (40) umfassen, die in dem äußeren mittleren Landbereich (19) vorgesehen sind,
ein Verhältnis (L3/W10) einer Länge (L3) in der axialen Richtung des Reifens von jeder der inneren mittleren Querrillen (36) und einer Breite (W10) in der axialen Richtung des Reifens des inneren mittleren Landbereichs (20) größer ist als ein Verhältnis (L4/W13) einer Länge (L4) in der axialen Richtung des Reifens von jeder der äußeren mittleren Querrillen (40) und einer Breite (W13) in der axialen Richtung des Reifens des äußeren mittleren Landbereichs (19).

**11.** Radialluftreifen (1) nach einem der Ansprüche 1 bis 10, wobei

die Umfangslandbereiche einen inneren mittleren Landbereich (20) benachbart zu dem inneren Schulterlandbereich (17) umfassen,
der innere Schulterlandbereich (17) mit einer Vielzahl von inneren Schulterquerrillen (21) versehen ist, die sich von der inneren Laufflächenkante (Ti) axial nach innen erstrecken und innerhalb des inneren Schulterlandbereichs (17) enden,
der innere mittlere Landbereich (20) mit einer Vielzahl von inneren mittleren Querrillen (36) versehen ist, die sich von einer Kante davon auf einer Seite der inneren Laufflächenkante (Ti) in Richtung der äußeren Laufflächenkante (To) erstrecken und innerhalb des inneren mittleren Landbereichs (20) enden, und
die Anzahl (N1) der inneren Schulterquerrillen (21) größer ist als die Anzahl (N3) der inneren mittleren Querrillen (36).

**12.** Radialluftreifen (1) nach Anspruch 11, wobei
die Anzahl (N3) der inneren mittleren Querrillen (36) im Bereich des 0,70-bis 0,80-fachen der Anzahl (N1) der inneren Schulterquerrillen (21) liegt.

**13.** Radialluftreifen (1) nach einem der Ansprüche 1 bis 12, wobei

die Umfangslandbereiche einen äußeren mittleren Landbereich (19) benachbart zu dem äußeren Schulterlandbereich (16) umfassen,
der äußere Schulterlandbereich (16) mit einer Vielzahl von äußeren Schulterquerrillen (28) versehen ist, die sich von der äußeren Laufflächenkante (To) axial nach innen erstrecken und innerhalb des äußeren Schulterlandbereichs (16) enden,
der äußere mittlere Landbereich (19) mit einer Vielzahl von äußeren mittleren Querrillen (40) versehen ist, die sich von einer Kante davon auf einer Seite der inneren Laufflächenkante (Ti) in Richtung der äußeren Laufflächenkante (To) erstrecken und innerhalb des äußeren mittleren Landbereichs (40) enden.

**14.** Radialluftreifen (1) nach Anspruch 13, wobei
eine Länge (Sbo) in der axialen Richtung des Reifens von jeder der äußeren Schulterquerrillen (28) im Bereich des 0,70- bis 0,80-fachen einer Breite (W7) in der axialen Richtung des Reifens des äußeren Schulterlandbereichs (16) liegt.

## Revendications

1. Bandage radial pneumatique (1) pour une voiture particulière comprenant une carcasse (6) ayant une structure radiale, une couche de ceinture (7) agencée sur un côté extérieur de la carcasse (6) et formée d'au moins deux nappes de ceinture (7A, 7B), et une portion formant bande de roulement (2) dont une position est spécifiée quand le pneumatique est monté sur un véhicule, dans lequel

    la portion formant bande de roulement (2) a un bord de bande de roulement extérieur (To) et un bord de bande de roulement intérieur (Ti) respectivement situés, quand le pneumatique (1) est monté sur véhicule, sur un côté extérieur et un côté intérieur du véhicule,
    la portion formant bande de roulement (2) a un motif de bande de roulement formé dans une forme asymétrique par rapport à un équateur de pneumatique (C),
    la portion formant bande de roulement (2) est divisée en une pluralité de régions en relief circonférentielles par une pluralité de rainures principales (10) s'étendant en continu dans une direction circonférentielle du pneumatique,
    les régions en relief circonférentielles incluent une région en relief d'épaulement extérieure (16) incluant le bord de bande de roulement extérieur (To), une région en relief d'épaulement intérieure (17) incluant le bord de bande de roulement intérieur (Ti), et au moins une région en relief médiane (18) agencée entre celles-ci,
    la région en relief d'épaulement extérieure (16) est plus grande que la région en relief d'épaulement intérieure (17) en ce qui concerne une rigidité dans la direction circonférentielle du pneumatique et la rigidité dans une direction radiale du pneumatique,
    la région en relief d'épaulement extérieure (16) est dotée d'une pluralité de rainures latérales d'épaulement extérieures (28) s'étendant axialement vers l'intérieur depuis le bord de bande de roulement extérieur (To) et se terminant à l'intérieur de la région en relief d'épaulement extérieure (16),
    la région en relief d'épaulement intérieure (17) est dotée d'une pluralité de rainures latérales d'épaulement intérieures (17) s'étendant axialement vers l'intérieur depuis le bord de bande de roulement intérieur (Ti) et se terminant à l'intérieur de la région en relief d'épaulement intérieure (16), et un nombre (N1) des rainures latérales d'épaulement intérieures (21) n'est pas inférieur à 1,1 fois un nombre (N2) des rainures latérales d'épaulement extérieures (28),
    **caractérisé en ce que**
    un angle ($\theta 4$) de chacune des rainures latérales d'épaulement extérieures (28) par rapport à la direction axiale du pneumatique est plus petit qu'un angle ($\theta 1$) de chacune des rainures latérales d'épaulement intérieures (21) par rapport à la direction axiale du pneumatique.

2. Bandage radial pneumatique (1) selon la revendication 1, satisfaisant l'expression (E1) suivante

$$SAT \geq 0{,}18 \times L \times CF \ldots \text{(E1)}$$

    dans les conditions de circulation suivantes :

    jante de pneumatique : jante standard
    pression interne de pneumatique : pression interne standard
    charge de pneumatique : 70 % de charge de pneumatique standard
    vitesse : 10 km/h
    angle de glissement: 0,7 degré
    angle de cambrure : -1,0 degré

    dans lequel « SAT » est un couple d'auto-alignement [N·m], « L » est une longueur de contact au sol maximum [m] dans la direction circonférentielle du pneumatique de la portion formant bande de roulement, et « CF » et une force de virage [N].

3. Bandage radial pneumatique (1) selon la revendication 1 ou 2, dans lequel
    le nombre (N1) des rainures latérales d'épaulement intérieures (21) n'est pas supérieur à 2,0 fois le nombre (N2) des rainures latérales d'épaulement extérieures (28).

4. Bandage radial pneumatique (1) selon l'une quelconque des revendications 1 à 3, dans lequel
    une somme de l'angle ($\theta 4$) de chacune des rainures latérales d'épaulement extérieures (28) par rapport à la direction axiale du pneumatique et de l'angle (θ1) de chacune des rainures latérales d'épaulement intérieures (21) par rapport à la direction axiale du pneumatique est dans la plage allant de 30 à 60 degrés.

**5.** Bandage radial pneumatique (1) selon l'une quelconque des revendications 1 à 4, dans lequel

la région en relief d'épaulement extérieure (16) est dotée d'une pluralité de rainures latérales d'épaulement extérieures (28) s'étendant axialement vers l'intérieur depuis le bord de bande de roulement extérieur (To) et se terminant à l'intérieur de la région en relief d'épaulement extérieure (16), et de pièces de bloc d'épaulement extérieures (34) définies chacune entre une paire des rainures latérales d'épaulement extérieures (28) adjacente l'une à l'autre dans la direction circonférentielle du pneumatique et ayant une longueur dans la direction circonférentielle du pneumatique (Sbo),
la région en relief d'épaulement intérieure (17) est dotée d'une pluralité de rainures latérales d'épaulement intérieures (21) s'étendant axialement vers l'intérieur depuis le bord de bande de roulement intérieur (Ti) et se terminant à l'intérieur de la région en relief d'épaulement intérieure (17), et de pièces de bloc d'épaulement intérieures (26) définies chacune entre une paire des rainures latérales d'épaulement intérieures (21) adjacente l'une à l'autre dans la direction circonférentielle du pneumatique et ayant une longueur dans la direction circonférentielle du pneumatique (Sb), et
un rapport Sbi/Sbo des longueurs dans la direction circonférentielle du pneumatique est dans la plage allant de 0,60 à 0,90.

**6.** Bandage radial pneumatique (1) selon la revendication 5, dans lequel la région en relief médiane (18) inclut une région en relief médiane extérieure (19) adjacente à la région en relief d'épaulement extérieure (16) et une région en relief médiane intérieure (20) adjacente à la région en relief d'épaulement intérieure (17),

la région en relief médiane extérieure (19) est dotée d'une pluralité de rainures latérales médianes extérieures (40) s'étendant depuis un bord de celle-ci sur un côté du bord de bande de roulement intérieur (Ti) vers le bord de bande de roulement extérieur (To) et se terminant à l'intérieur de la région en relief médiane extérieure (19), et des pièces de bloc médianes extérieures (42) définies chacune entre une paire des rainures latérales médianes extérieures (40) adjacente l'une à l'autre dans la direction circonférentielle du pneumatique et ayant une longueur dans la direction circonférentielle du pneumatique (Mbo),
la région en relief médiane intérieure (20) est dotée d'une pluralité de rainures latérales médianes intérieures (36) s'étendant depuis un bord de celle-ci sur un côté du bord de bande de roulement intérieur (Ti) vers le bord de bande de roulement extérieur (To) et se terminant à l'intérieur de la région en relief médiane intérieure (20), et des pièces de bloc médianes intérieures (38) définies chacune entre une paire de rainures latérales médianes intérieures (36) adjacente l'une à l'autre dans la direction circonférentielle du pneumatique et ayant une longueur dans la direction circonférentielle du pneumatique (Mbi), et
un rapport Mb1/Mbo des longueurs dans la direction circonférentielle du pneumatique est dans la plage allant de 0,70 à 0,90.

**7.** Bandage radial pneumatique (1) selon l'une quelconque des revendications 1 à 5, dans lequel

la région en relief médiane (18) inclut une région en relief médiane intérieure (20) adjacente à la région en relief d'épaulement intérieure (17) et une région en relief médiane extérieure (19) adjacente à la région en relief d'épaulement (16),
la région en relief médiane intérieure (20) est dotée d'une pluralité de rainures latérales médianes intérieures (36) s'étendant depuis un bord de celle-ci sur un côté du bord de bande de roulement intérieur (Ti) vers le bord de bande de roulement extérieur (To),
la région en relief médiane extérieure (19) est dotée d'une pluralité de rainures latérales médianes extérieures (40) s'étendant depuis un bord de celle-ci sur un côté du bord de bande de roulement intérieur (Ti) vers le bord de bande de roulement extérieur (To),
un nombre N4 des rainures latérales médianes extérieures (40) est dans la plage allant 0,5 à 0,7 fois un nombre N3 des rainures latérales médianes intérieures (36),
un rapport L3/W10 d'une longueur L3 dans la direction axiale du pneumatique de chacune des rainures latérales médianes intérieures (36) et d'une largeur W10 dans la direction axiale du pneumatique de la région en relief médiane intérieure (20) est plus grand qu'un rapport L4/W13 d'une longueur L4 dans la direction axiale du pneumatique de chacune des rainures latérales médianes extérieures (40) et d'une largeur W13 dans la direction axiale du pneumatique de la région en relief médiane extérieure (19),
une profondeur de rainure (d6) de chacune des rainures latérales médianes intérieures (36) plus grand qu'une profondeur de rainure (d7) de chacune des rainures latérales médianes extérieures (40), et
une largeur de rainure W11 de chacune des rainures latérales médianes intérieures (36) n'est pas inférieure à une largeur de rainure W14 de chacune des rainures latérales médianes extérieures (40).

**8.** Bandage radial pneumatique (1) selon la revendication 7, dans lequel les rainures latérales médianes intérieures (36) s'étendent depuis le bord sur le côté du bord de bande de roulement intérieur (T1) de la région en relief médiane intérieure (20) et se terminent à l'intérieur de la région en relief médiane intérieure (20), et
les rainures latérales médianes extérieures (40) s'étendent depuis le bord sur le côté du bord de bande de roulement intérieur (Ti) de la région en relief médiane extérieure (19) et se terminent à l'intérieur de la région en relief médiane extérieure (19).

**9.** Bandage radial pneumatique (1) selon l'une quelconque des revendications 1 à 7, dans lequel
la région en relief médiane est dotée d'une pluralité de rainures latérales médianes s'étendant depuis un bord de celle-ci sur un côté du bord de bande de roulement intérieur (Ti) vers le bord de bande de roulement extérieur (To) et se terminant à l'intérieur de la région en relief médiane, et d'une pluralité de fentes médianes (44) traversant complètement la région en relief médiane.

**10.** Bandage radial pneumatique (1) selon l'une quelconque des revendications 1 à 9, dans lequel

la région en relief médiane inclut une région en relief médiane intérieure (20) située sur un côté du bord de bande de roulement intérieur (Ti) et une région en relief médiane extérieure (19) située sur un côté du bord de bande de roulement extérieur (To) de la région en relief médiane intérieure,
les rainures latérales médianes incluent une pluralité de rainures latérales médianes intérieures (36) prévues dans la région en relief médiane intérieure (20) et une pluralité de rainures latérales médianes extérieures (40) prévues dans la région en relief médiane extérieure (19),
un rapport (L3/W10) d'une longueur (L3) dans la direction axiale du pneumatique de chacune des rainures latérales médianes intérieures (36) et d'une largeur (W10) dans la direction axiale du pneumatique de la région en relief médiane intérieure (20) est plus grand qu'un rapport (L4/W13) d'une longueur (L4) dans la direction axiale du pneumatique de chacune des rainures latérales médianes extérieures (40) et d'une largeur (W13) dans la direction axiale du pneumatique de la région en relief médiane extérieure (19).

**11.** Bandage radial pneumatique (1) selon l'une quelconque des revendications 1 à 10, dans lequel

les régions en relief circonférentielles incluent une région en relief médiane intérieure (20) adjacente à la région en relief d'épaulement intérieure (17),
la région en relief d'épaulement intérieure (17) est dotée d'une pluralité de rainures latérales d'épaulement intérieures (21) s'étendant axialement vers l'intérieur depuis le bord de bande de roulement intérieur (Ti) et se terminant à l'intérieur de la région en relief d'épaulement intérieure (17),
la région en relief médiane intérieure (20) est dotée d'une pluralité de rainures latérales médianes intérieures (36) s'étendant depuis un bord de celle-ci sur un côté du bord de bande de roulement intérieur (Ti) vers le bord de bande de roulement extérieur (To) et se terminant à l'intérieur de la région en relief médiane intérieure (20), et
un nombre (N1) des rainures latérales d'épaulement intérieures (21) est plus grand qu'un nombre (N3) des rainures latérales médianes intérieures (36).

**12.** Bandage radial pneumatique (1) selon la revendication 11, dans lequel le nombre (N3) des rainures latérales médianes intérieures (36) est dans la plage allant de 0,70 à 0,80 fois le nombre (N1) des rainures latérales d'épaulement intérieures (21).

**13.** Bandage radial pneumatique (1) selon l'une quelconque des revendications 1 à 12, dans lequel

les régions en relief circonférentielles incluent une région en relief médiane extérieure (17) adjacente à la région en relief d'épaulement extérieure (16),
la région en relief d'épaulement extérieure (16) est dotée d'une pluralité de rainures latérales d'épaulement extérieures (28) s'étendant axialement vers l'intérieur depuis le bord de bande de roulement extérieur (To) et se terminant à l'intérieur de la région en relief d'épaulement extérieure (16),
la région en relief médiane extérieure (19) est dotée d'une pluralité de rainures latérales médianes extérieures (40) s'étendant depuis un bord de celle-ci sur un côté du bord de bande de roulement intérieur (Ti) vers le bord de bande de roulement extérieur (To) et se terminant à l'intérieur de la région en relief médiane extérieure (40).

**14.** Bandage radial pneumatique (1) selon la revendication 13, dans lequel une longueur (Sbo) dans la direction axiale du pneumatique de chacune des rainures latérales d'épaulement extérieures (28) est dans la plage allant de 0,70 à 0,80 fois une largeur (W7) dans la direction axiale du pneumatique de la région en relief d'épaulement extérieure (16).

FIG.1

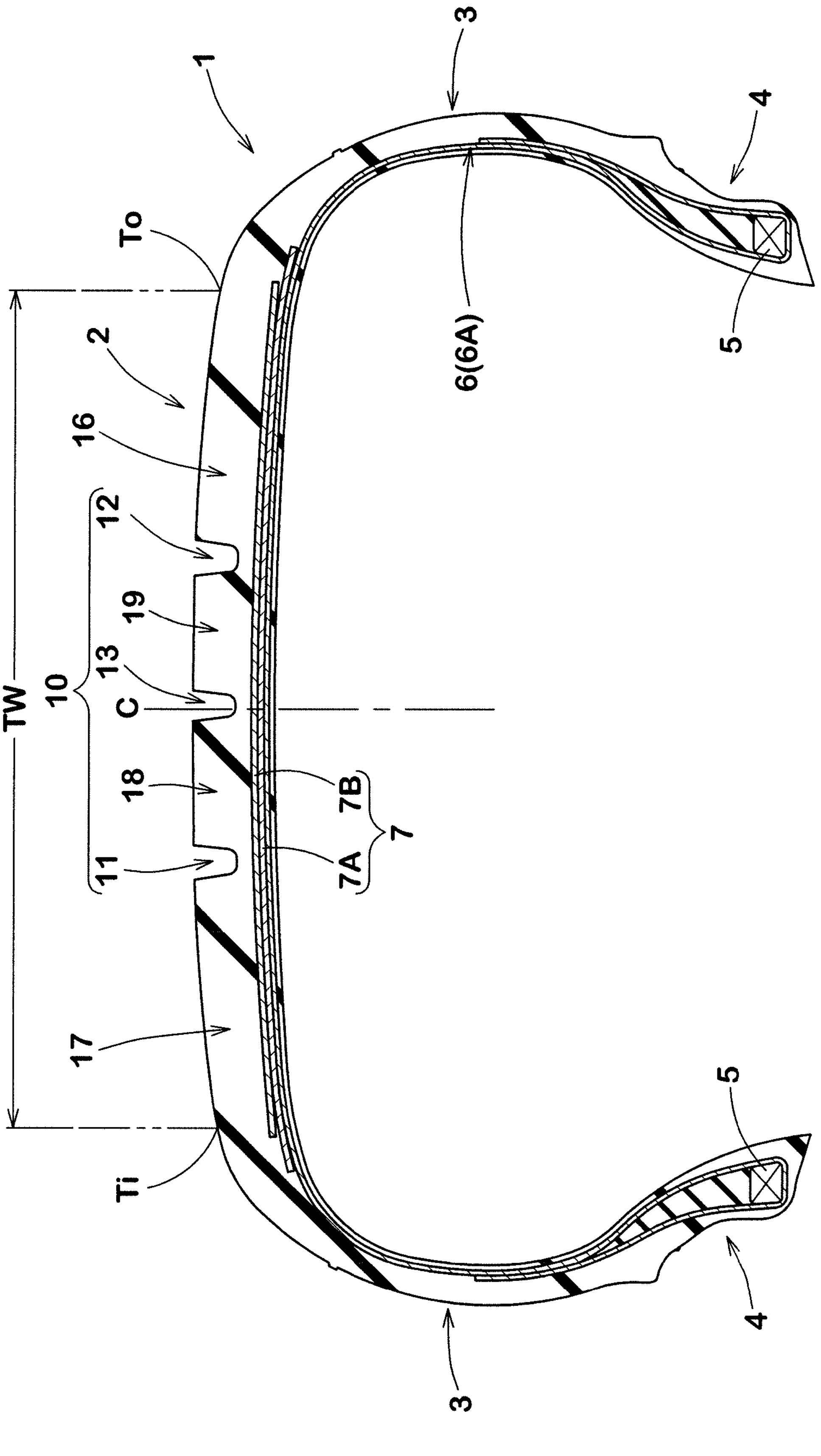

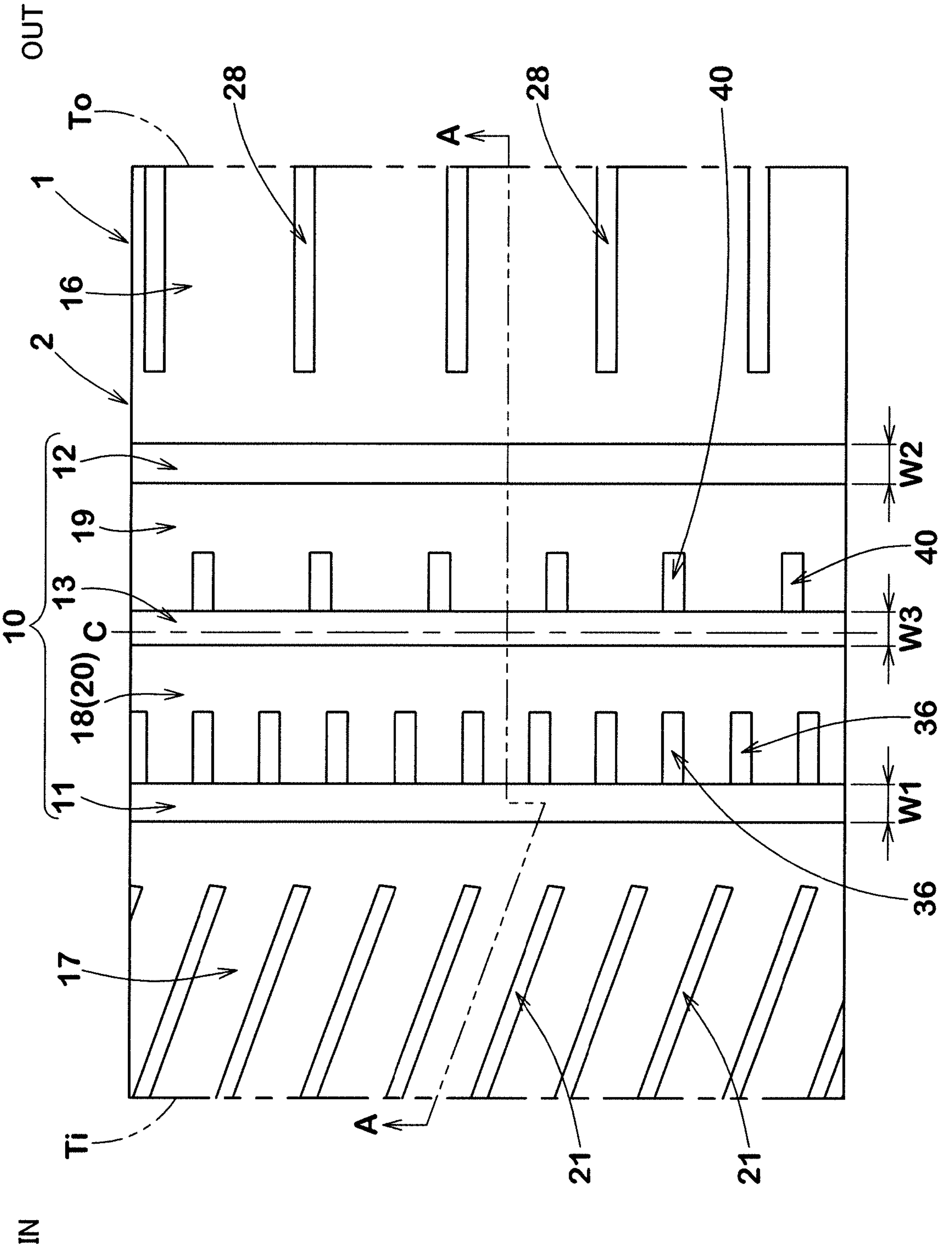
OUT
IN
To
Ti
1
2
16
28
28
40
40
10
12
19
13
C
18(20)
11
17
36
36
21
21
A
A
W1
W2
W3

FIG.2

FIG.3

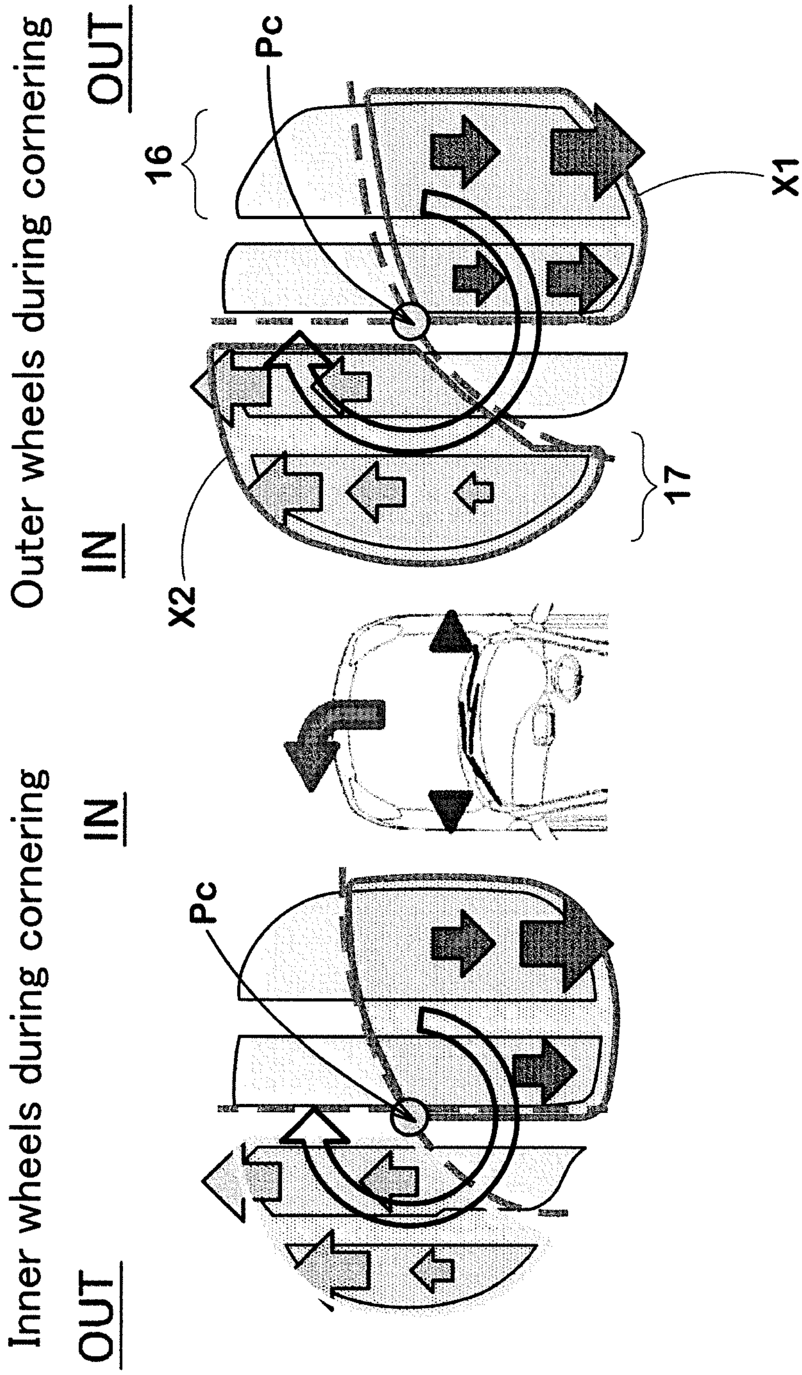
Inner wheels during cornering
OUT
IN
Pc
Outer wheels during cornering
IN
OUT
Pc
16
17
X1
X2

FIG.4A

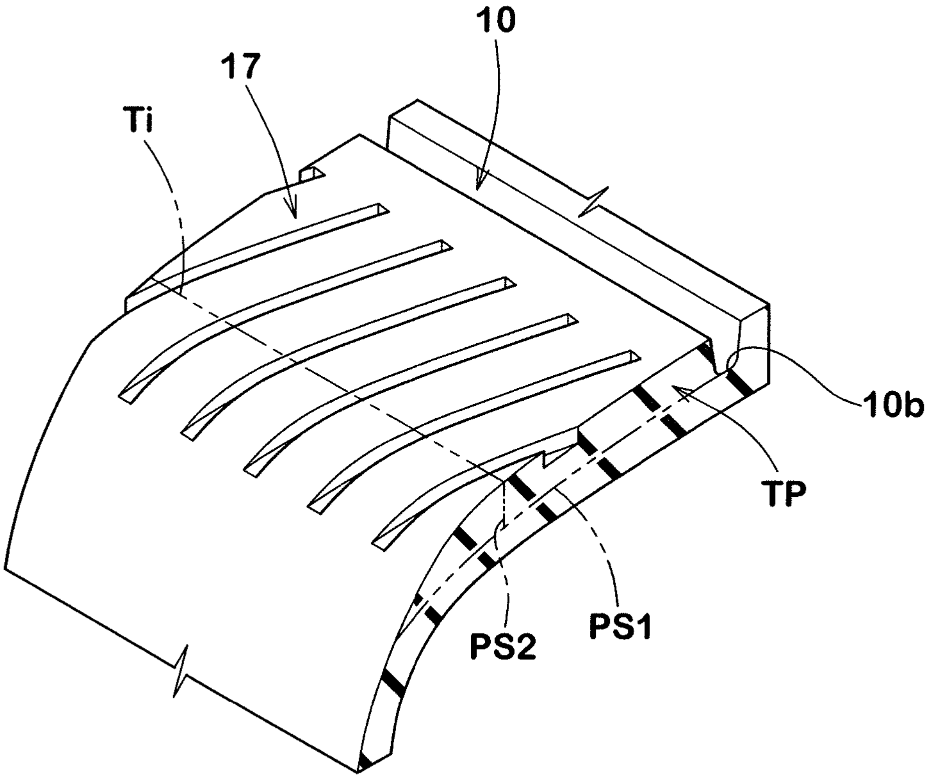


FIG.4B

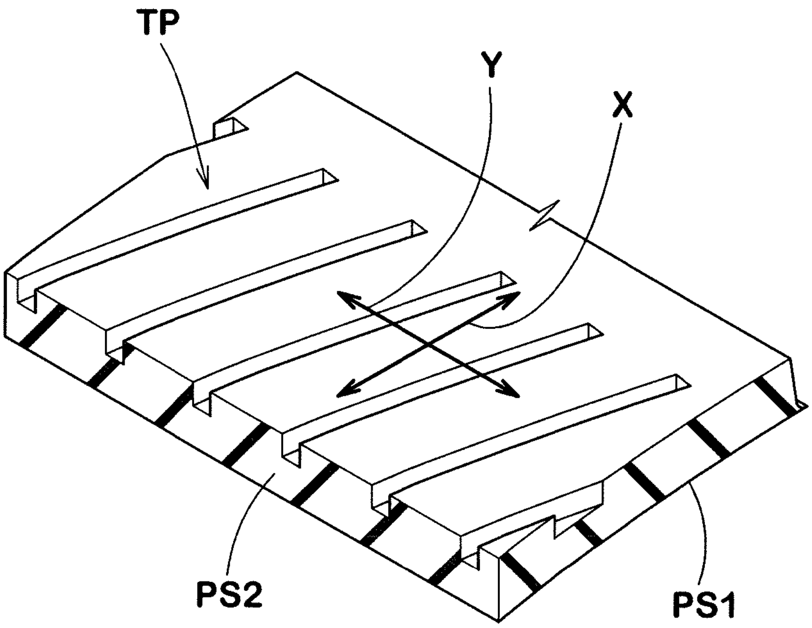

FIG.5

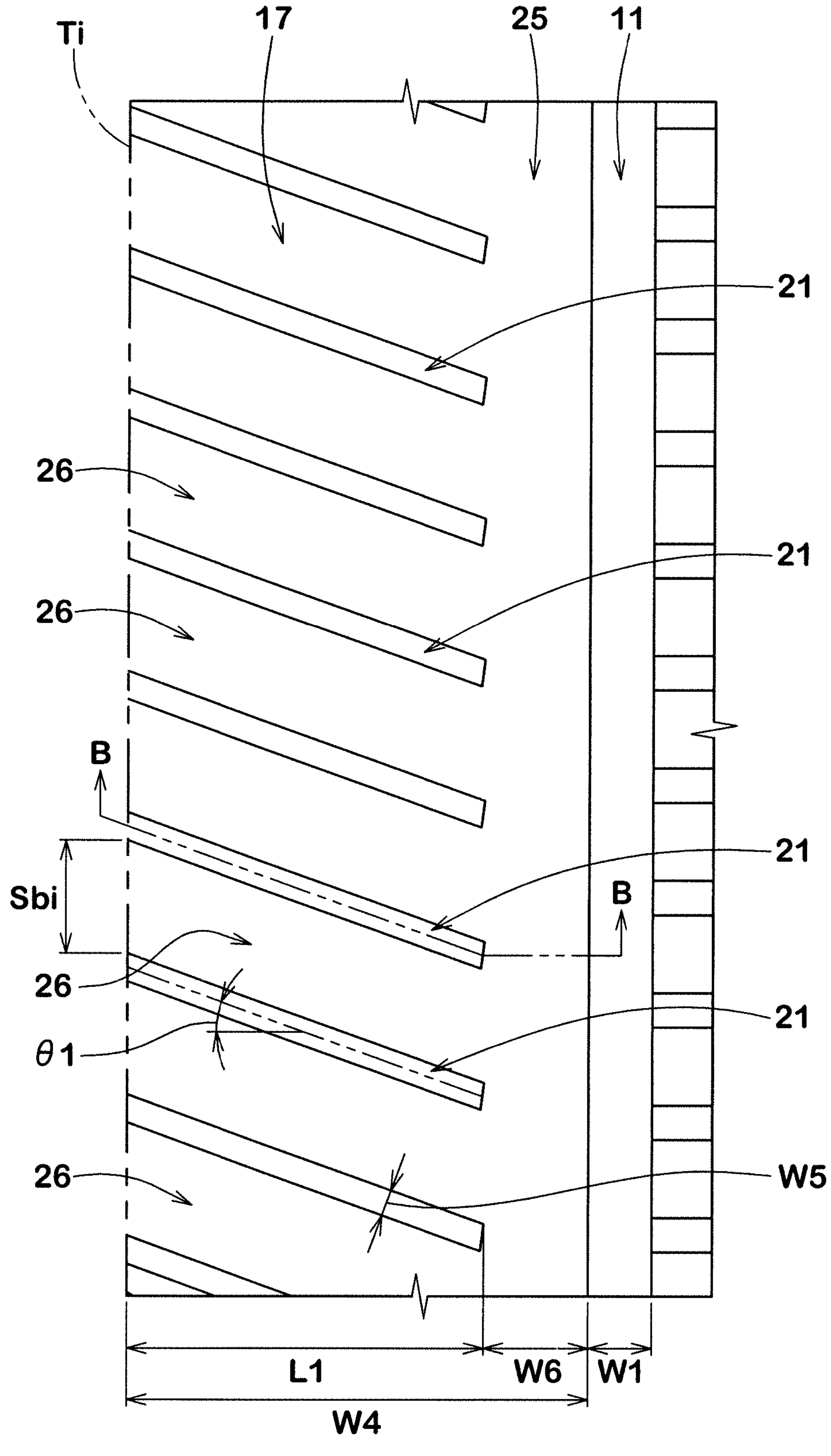

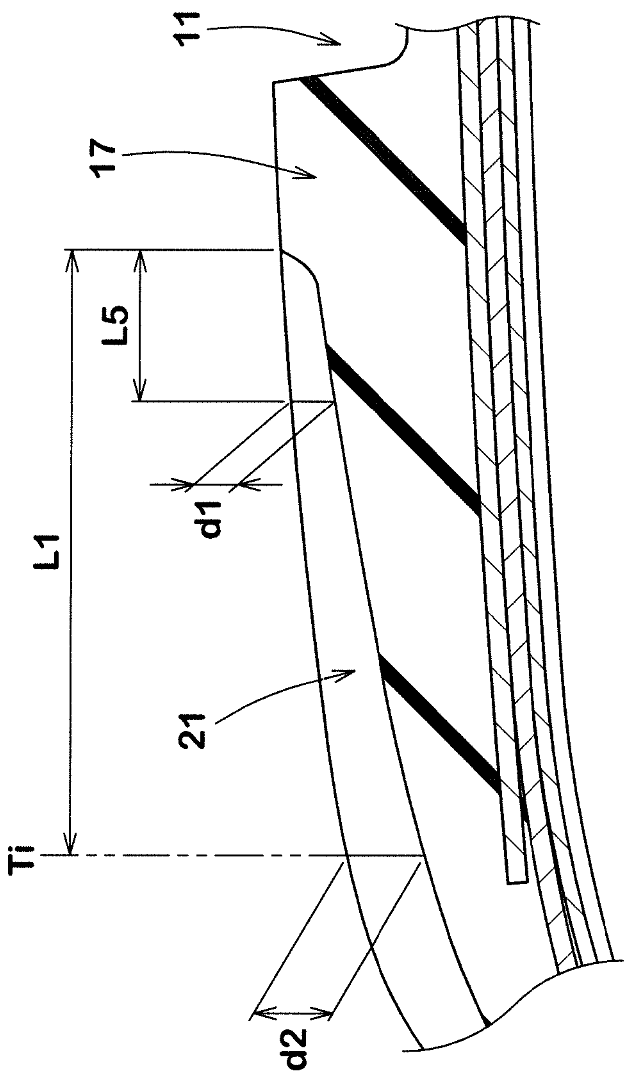


FIG.6

FIG.7

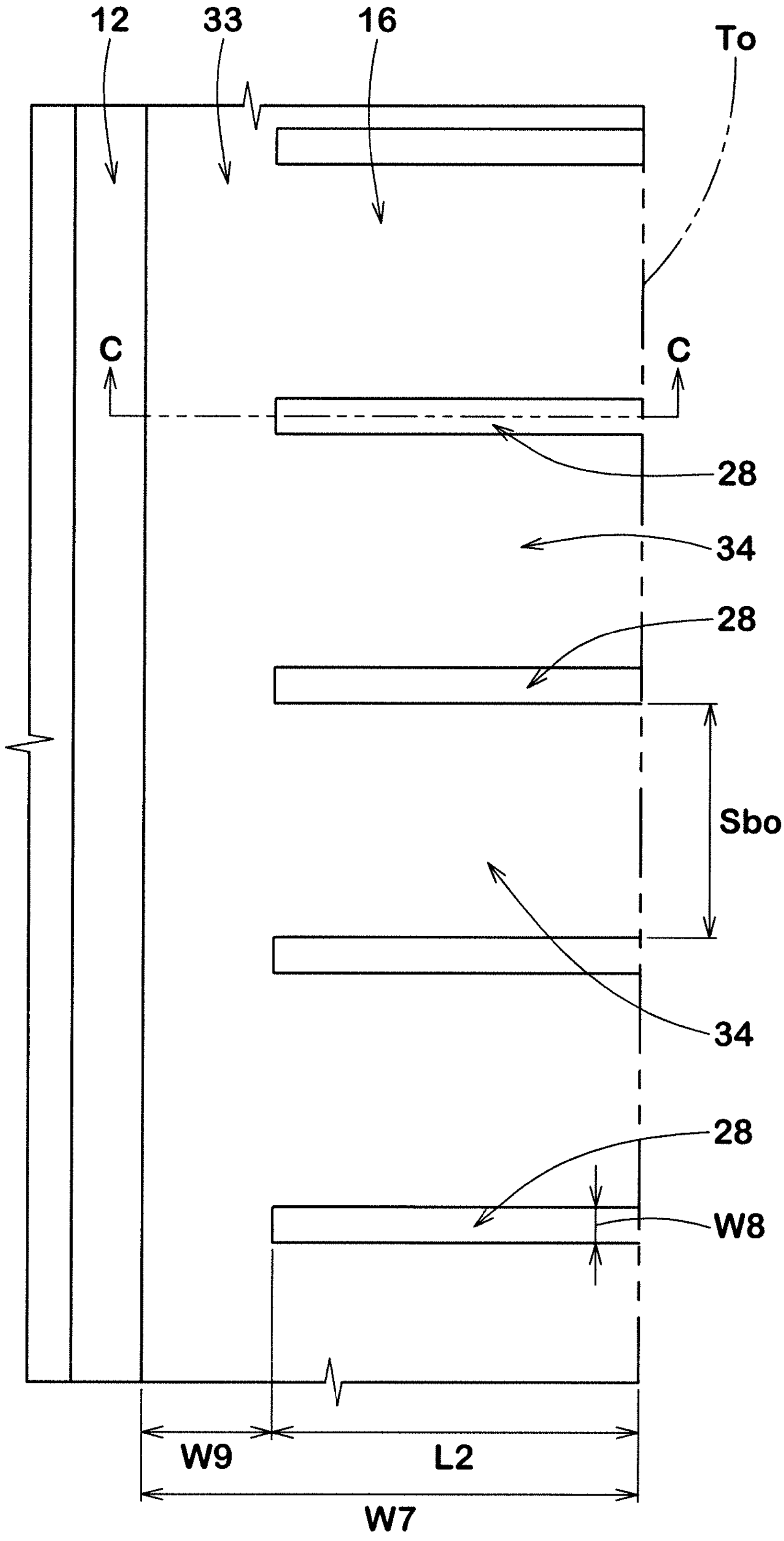

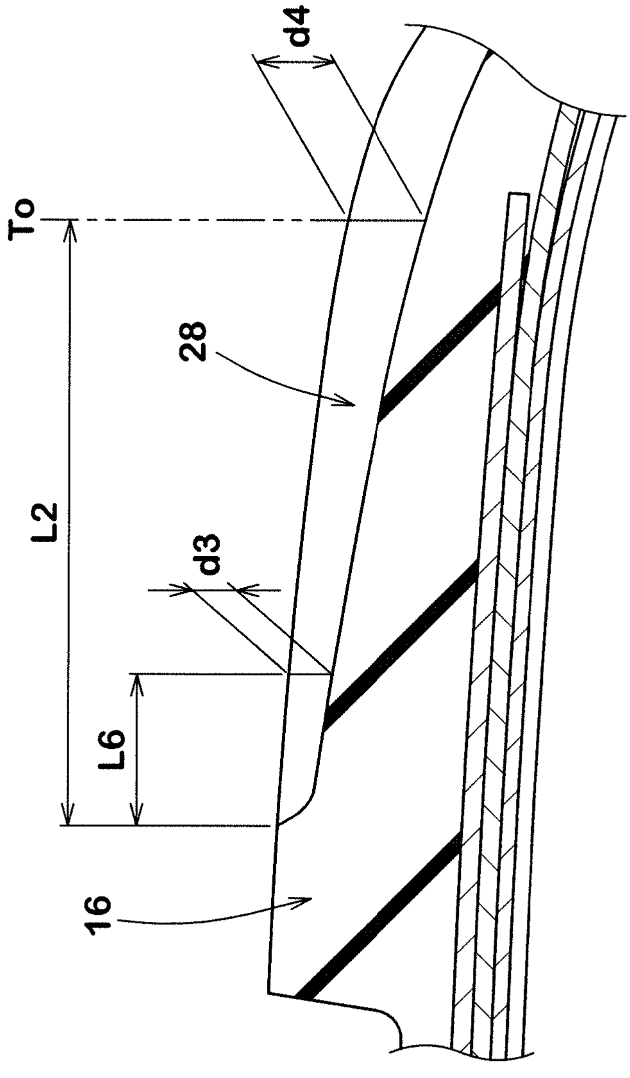


FIG.8

FIG.9

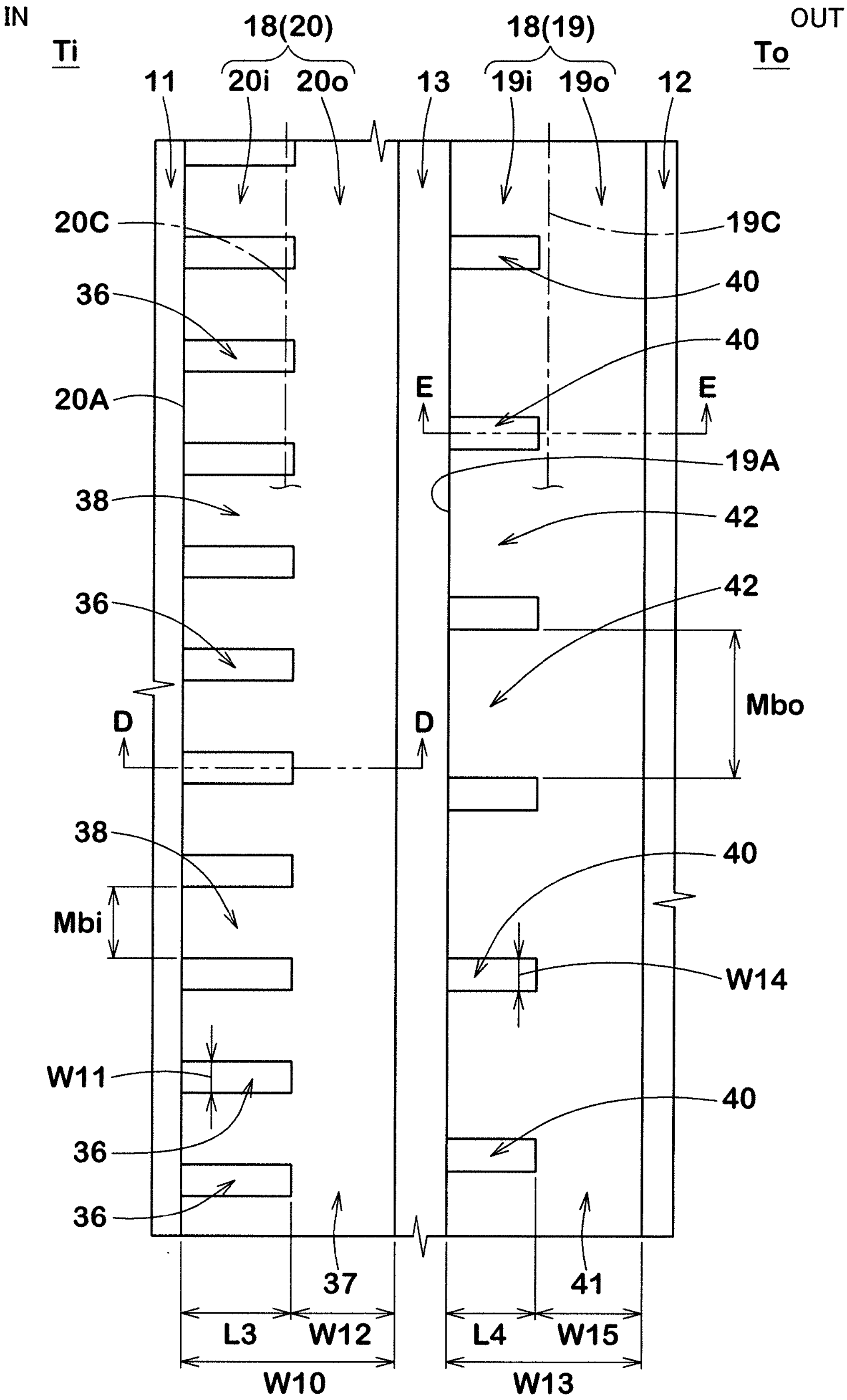
IN
Ti
OUT
To
18(20)
20i
20o
18(19)
19i
19o
11
13
12
20C
19C
36
40
40
20A
E
E
19A
38
42
42
36
Mbo
D
D
38
40
Mbi
W14
W11
36
40
36
37
41
L3
W12
L4
W15
W10
W13

FIG.10A

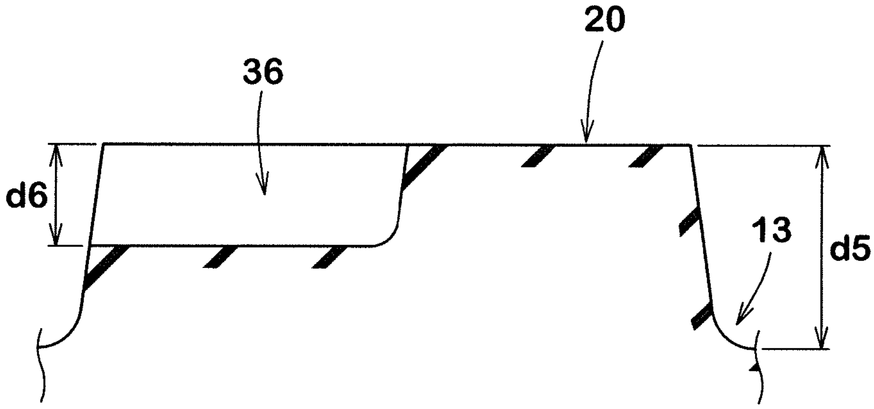


FIG.10B

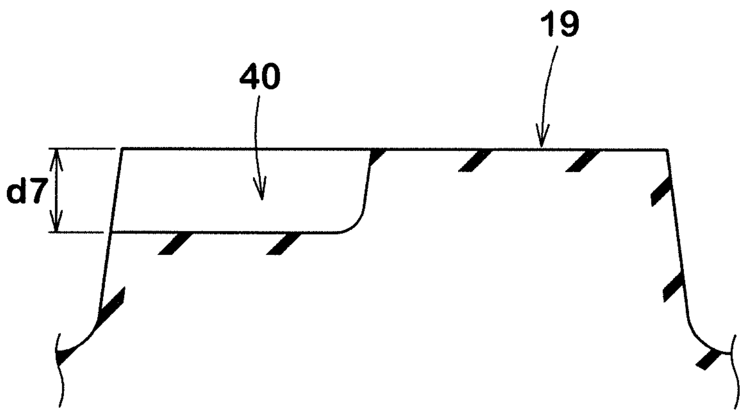

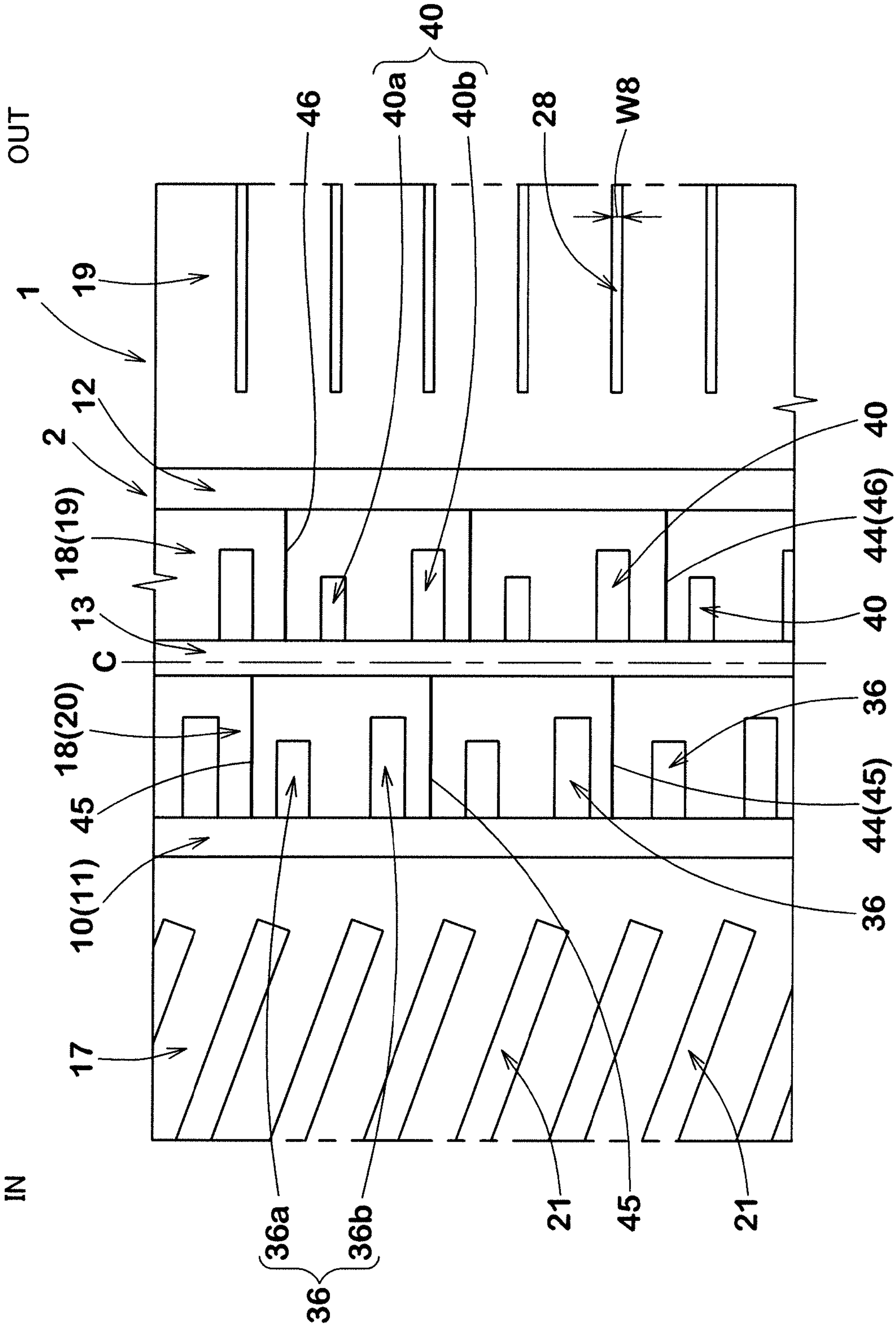
OUT
IN
1
2
12
13
C
17
18(19)
18(20)
19
10(11)
45
46
40
40a
40b
28
W8
44(46)
44(45)
36
36a
36b
21


FIG.11

FIG.12

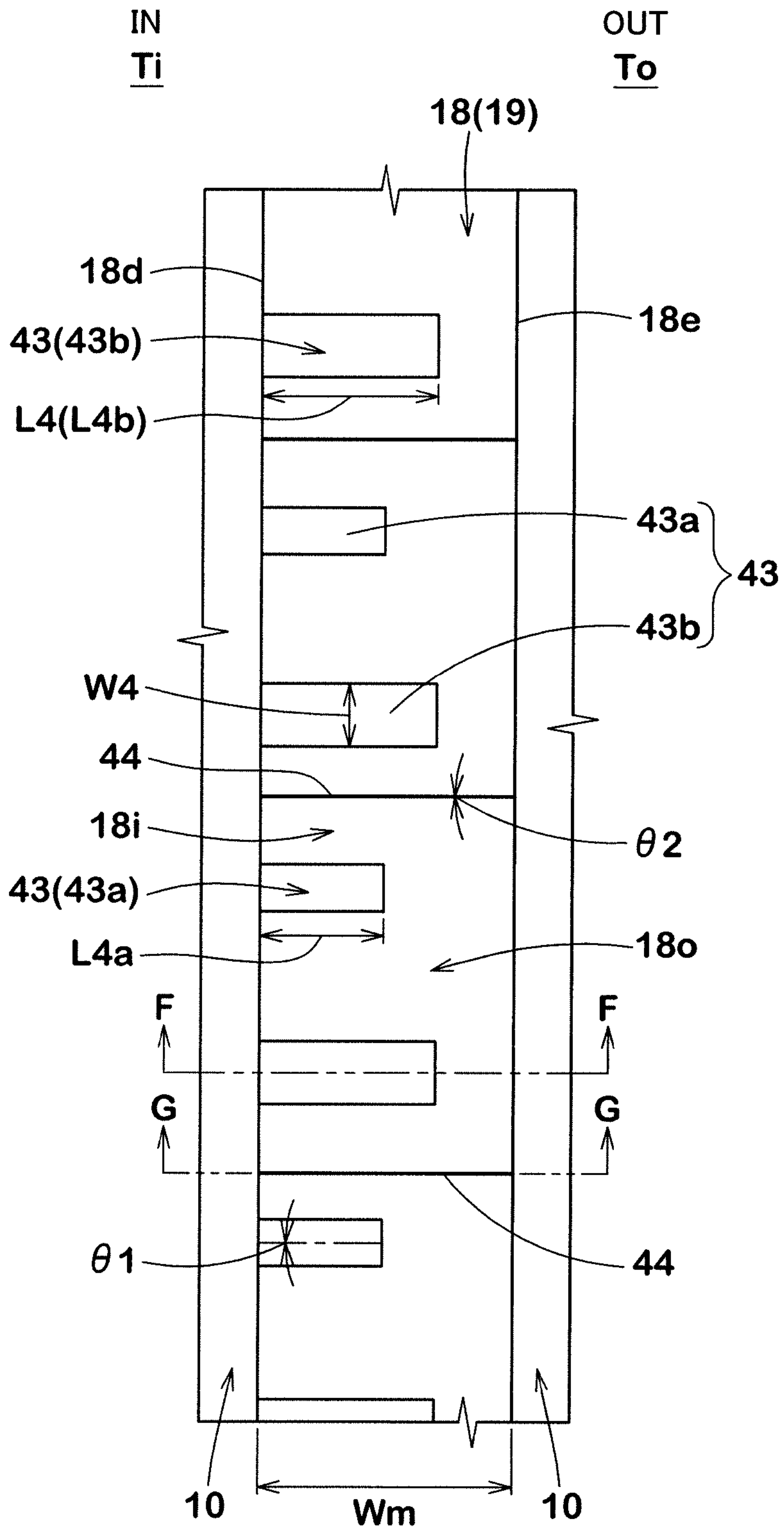
IN
Ti
OUT
To
18(19)
18d
43(43b)
L4(L4b)
18e
43a
43
43b
W4
44
18i
θ2
43(43a)
L4a
18o
F
F
G
G
θ1
44
10
Wm
10

FIG.13A

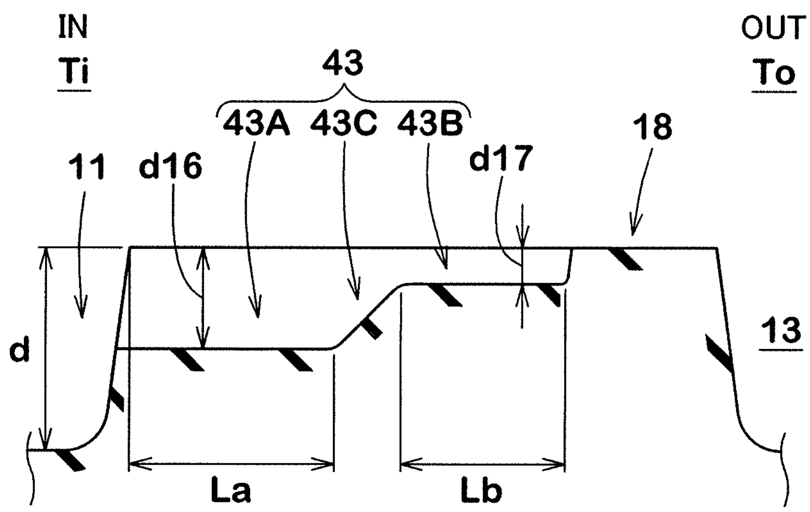


FIG.13B

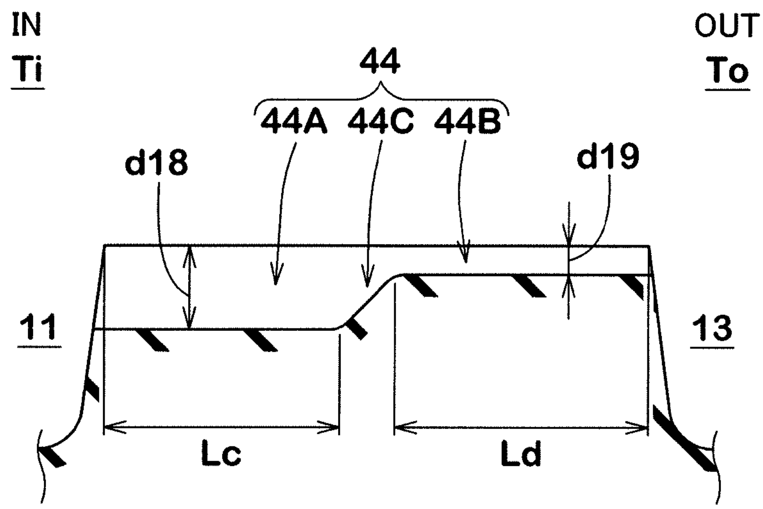

FIG.14

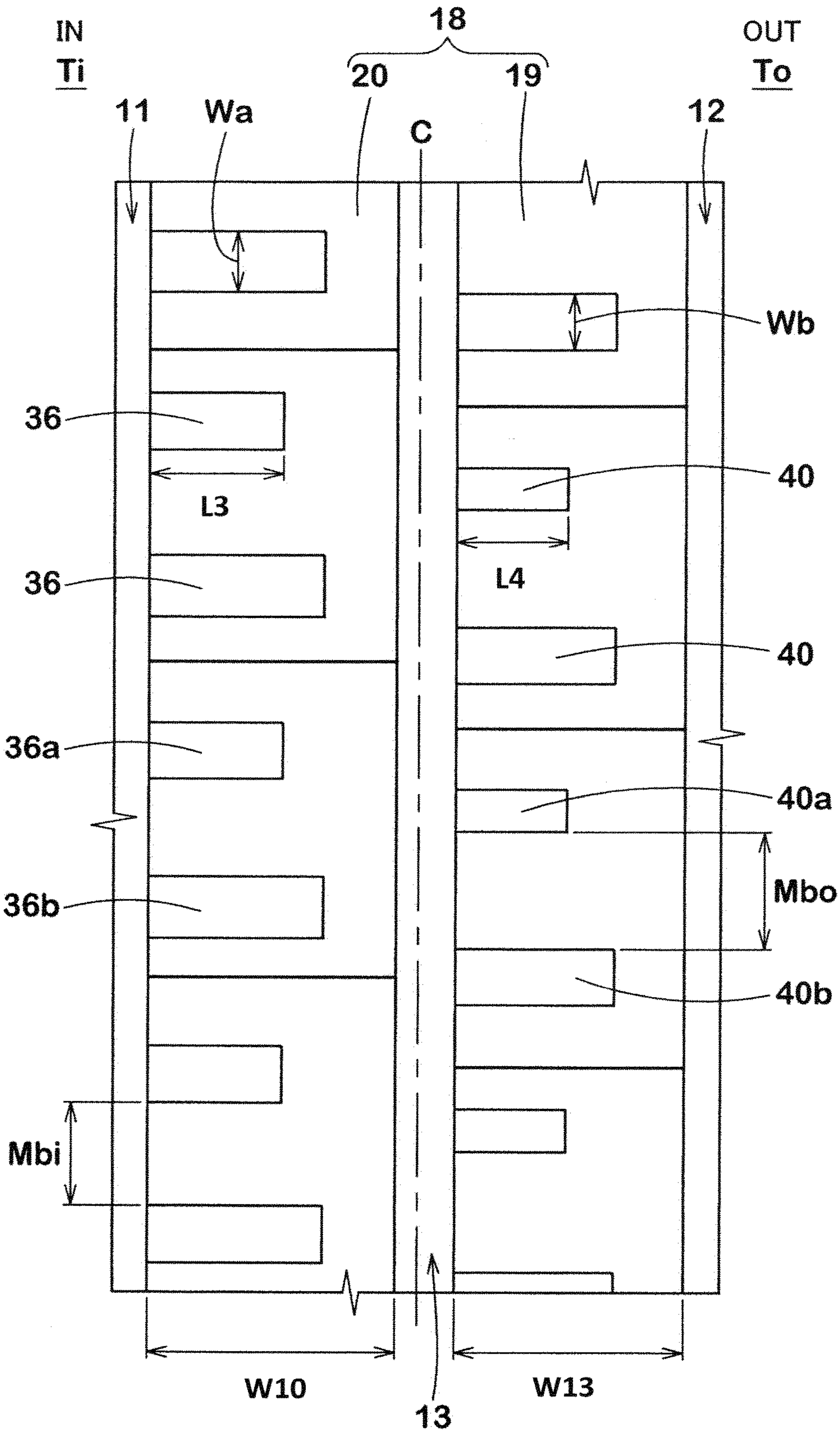

IN
Ti
18
20
19
OUT
To
11
Wa
C
12
Wb
36
L3
40
L4
36
40
36a
40a
Mbo
36b
40b
Mbi
W10
13
W13

FIG.15

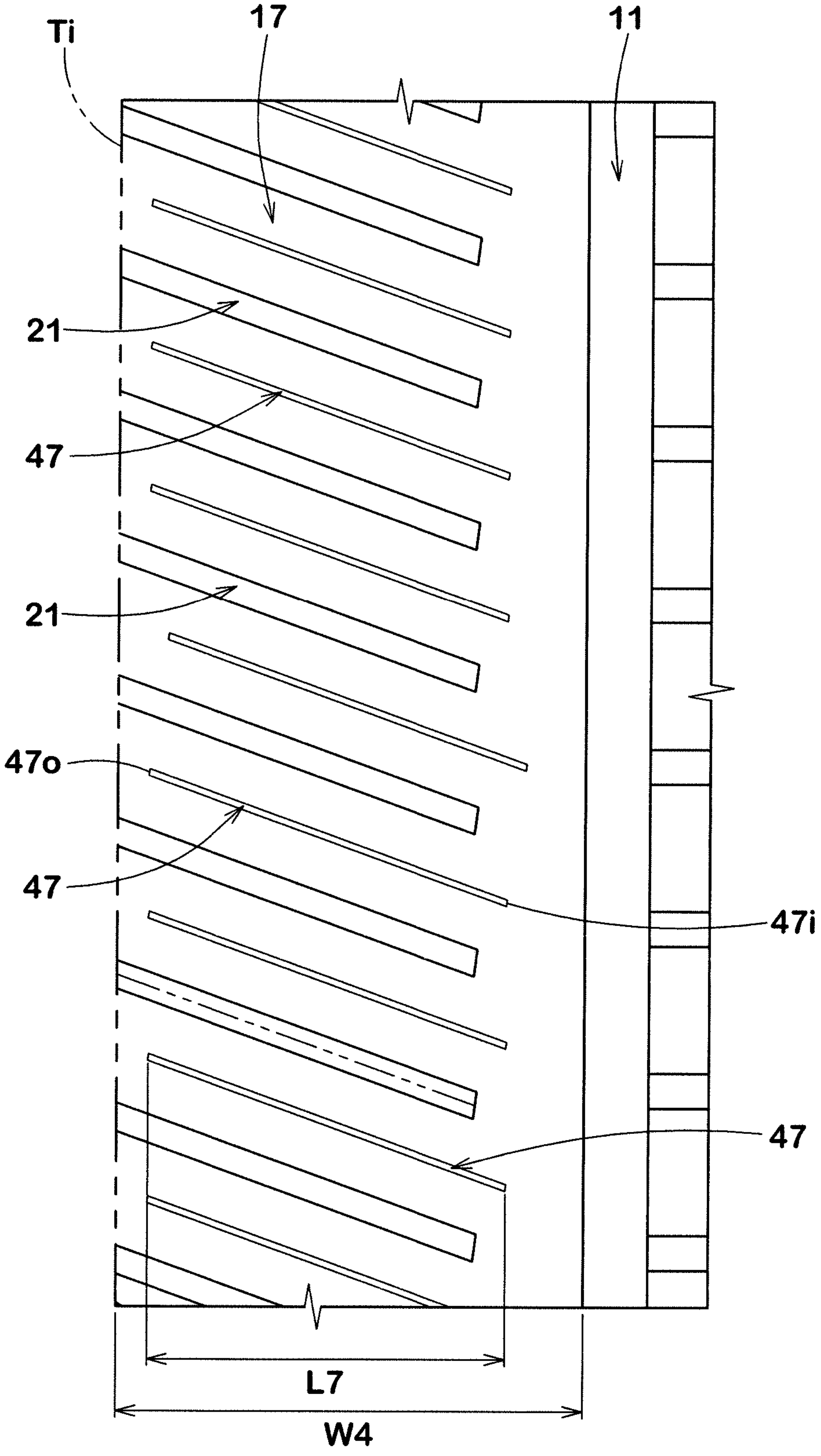

FIG.16

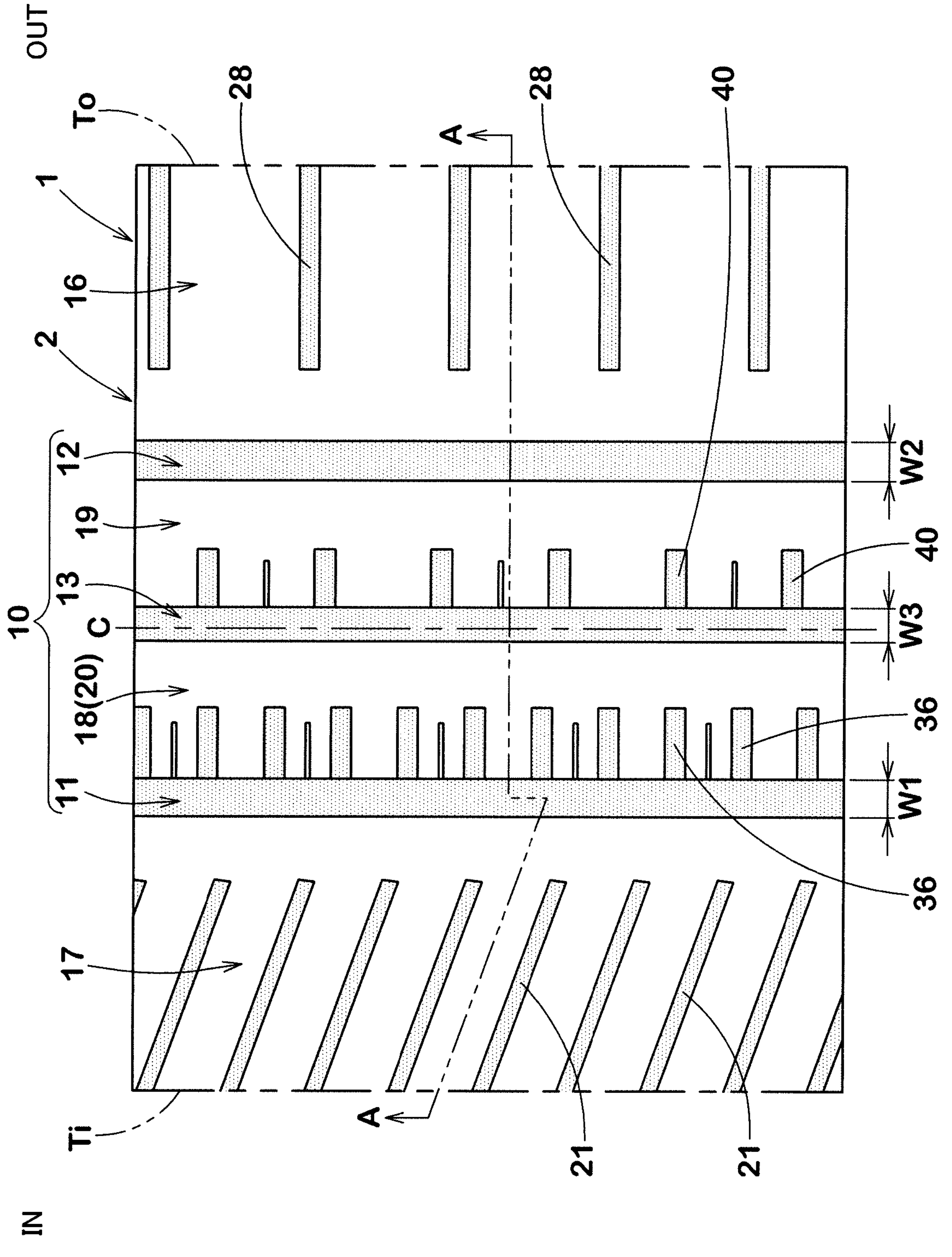
OUT
IN
To
Ti
1
2
16
28
28
40
40
10
12
19
13
C
18(20)
11
17
A
A
W1
W2
W3
36
36
21
21

FIG.17

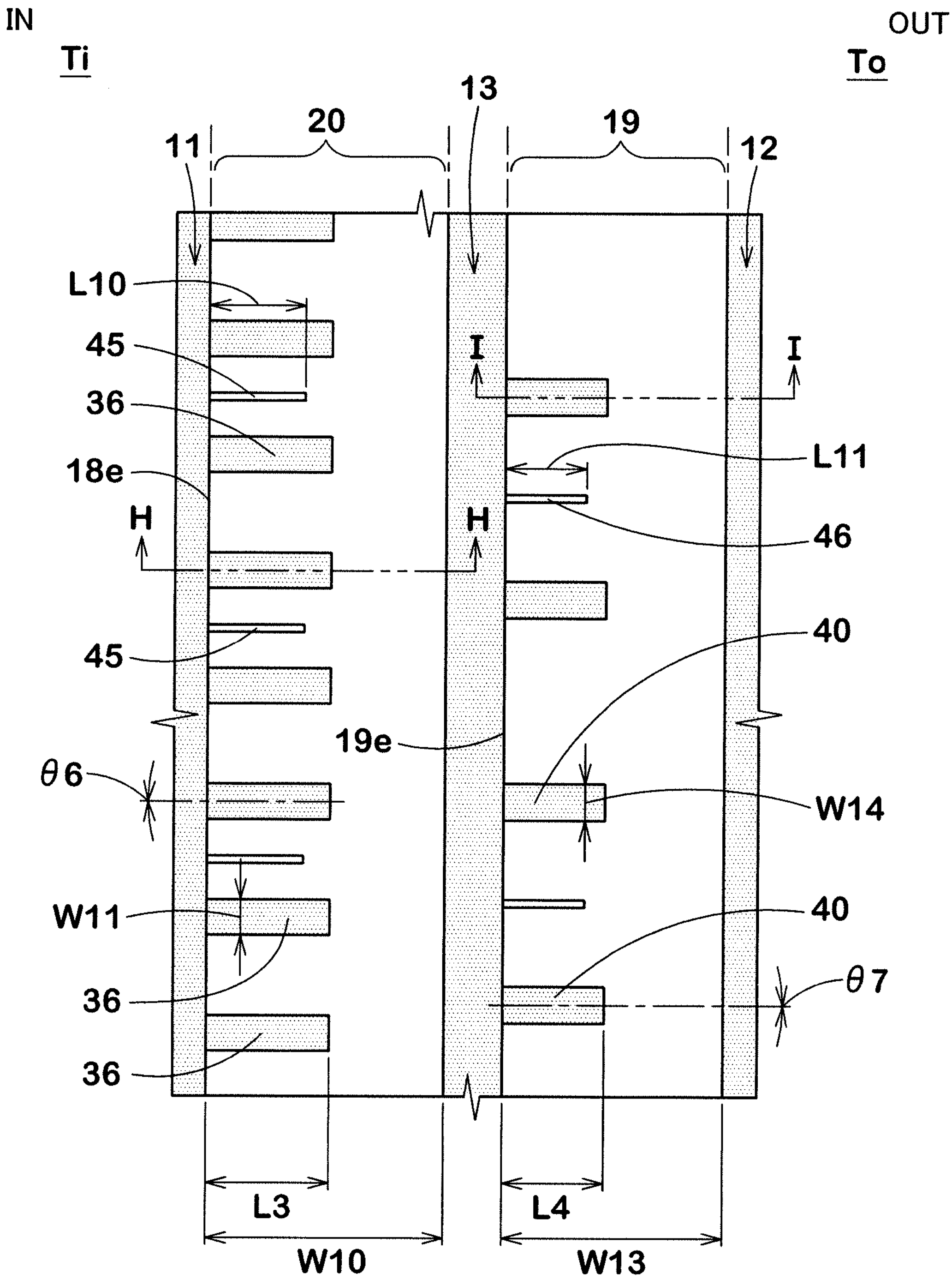
IN
Ti
OUT
To
13
20
19
11
12
L10
45
36
18e
H
H
I
I
L11
46
45
40
19e
θ6
W14
W11
40
θ7
36
36
L3
L4
W10
W13

FIG.18A

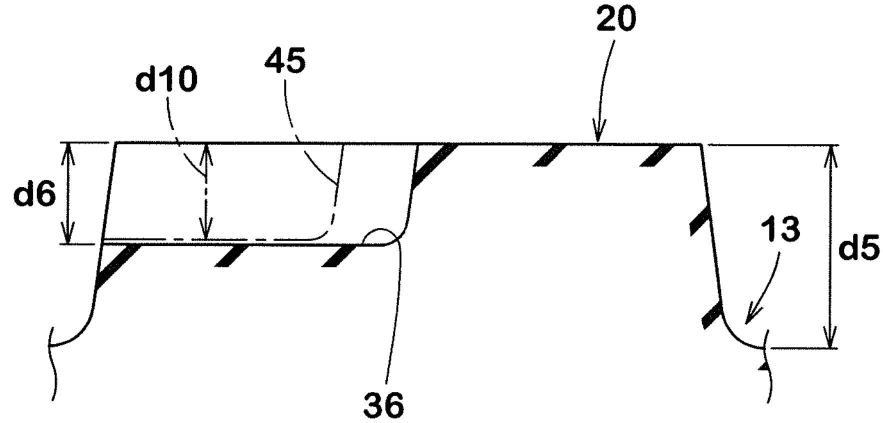


FIG.18B

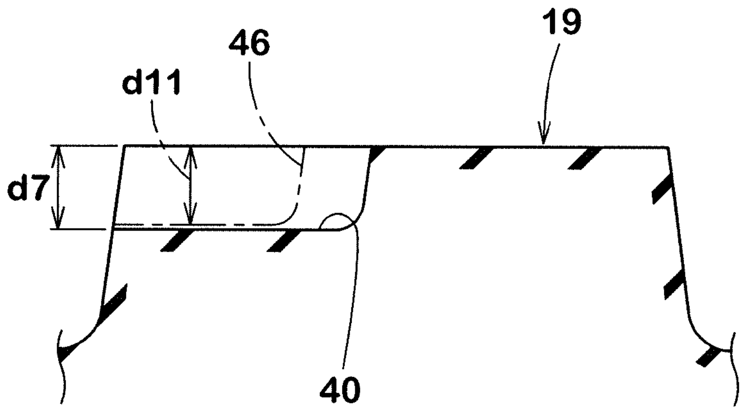

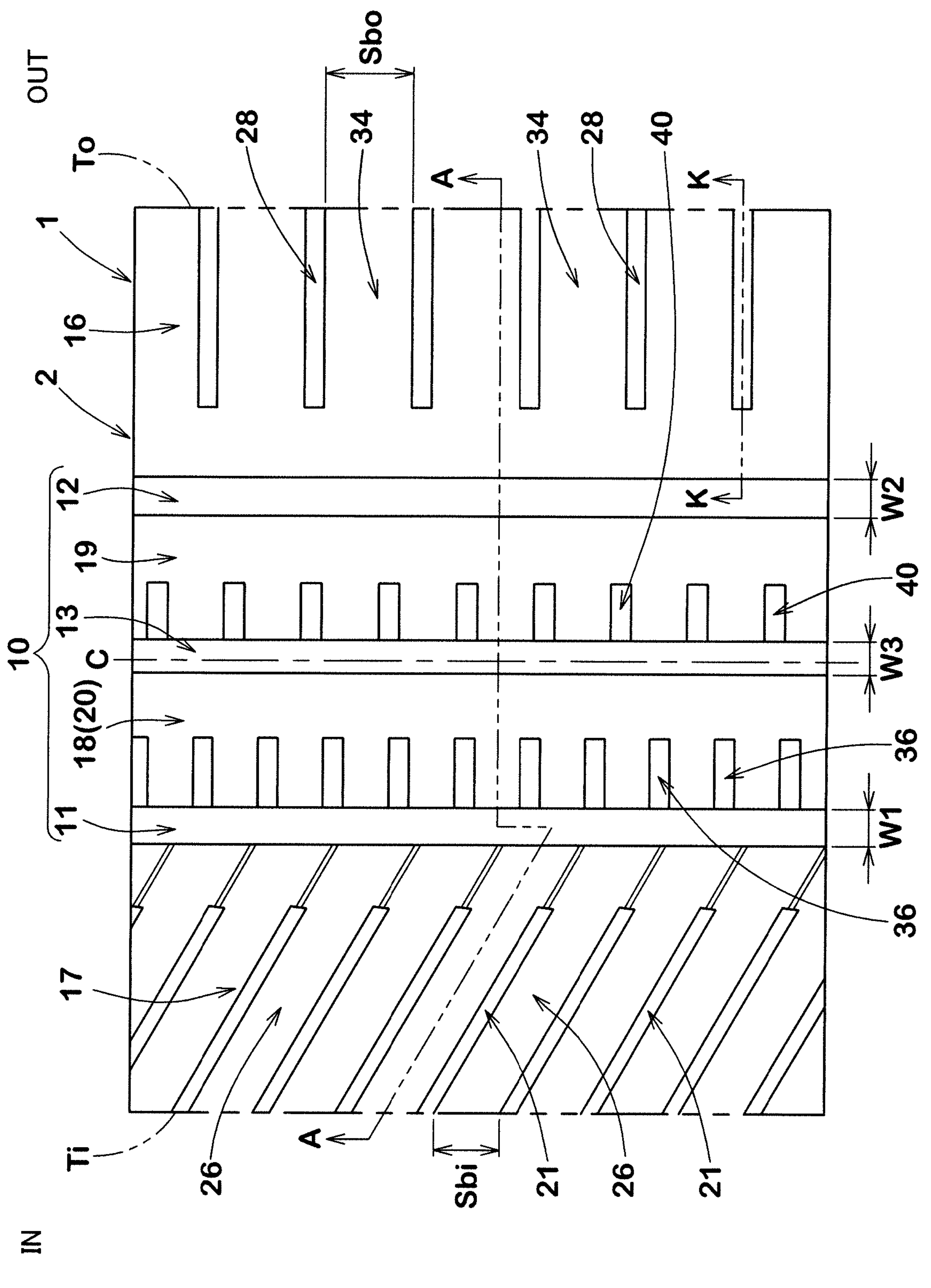
OUT
IN
1
2
10
11
12
13
16
17
18(20)
19
21
26
28
34
36
40
To
Ti
Sbo
Sbi
A
K
C
W1
W2
W3

FIG.19

FIG.20

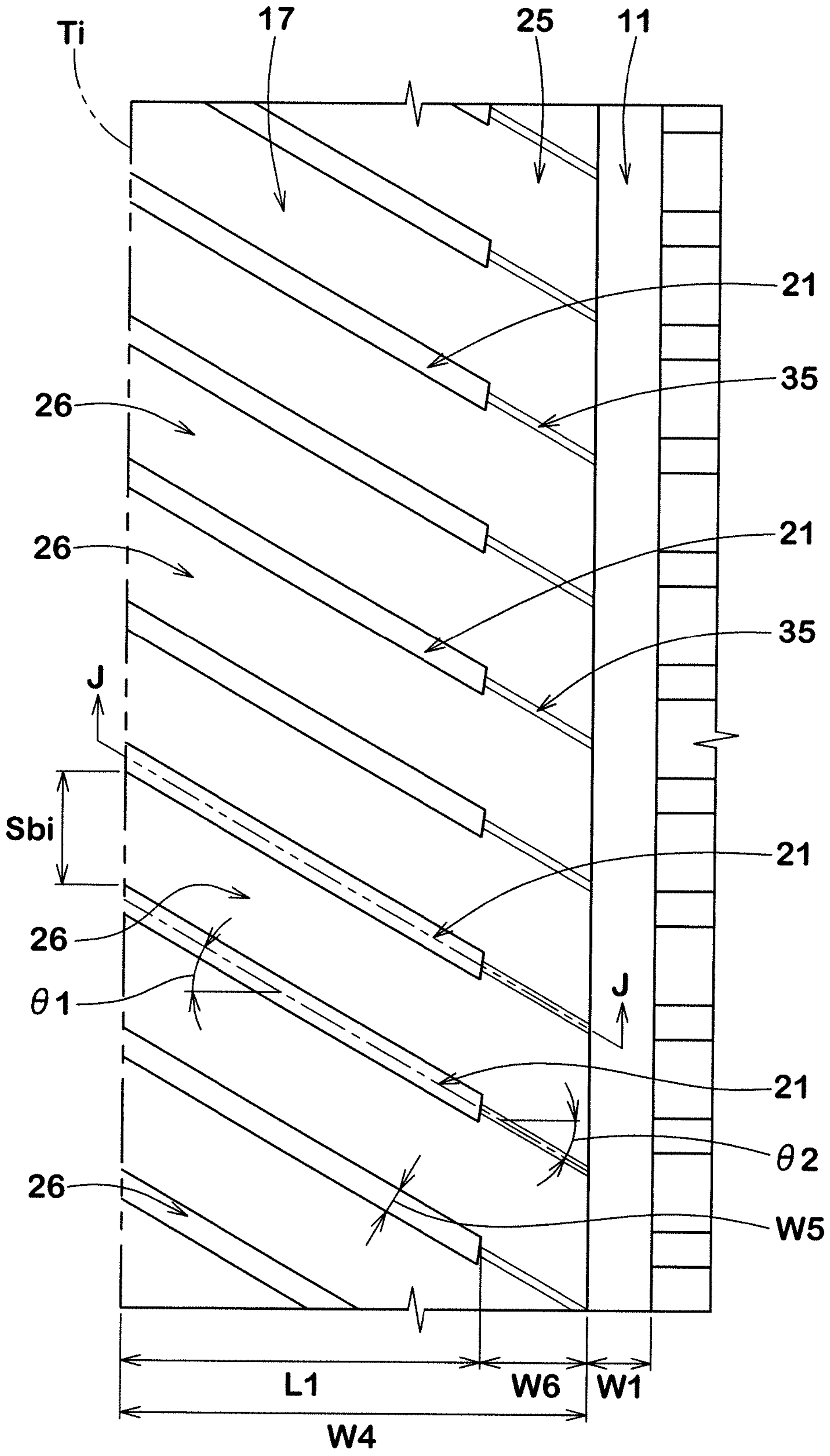

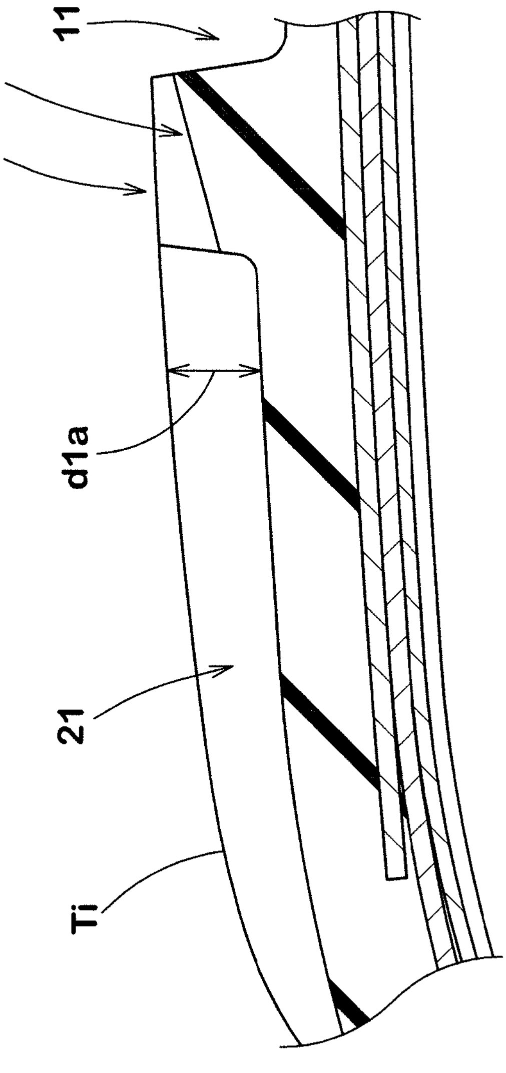


FIG.21

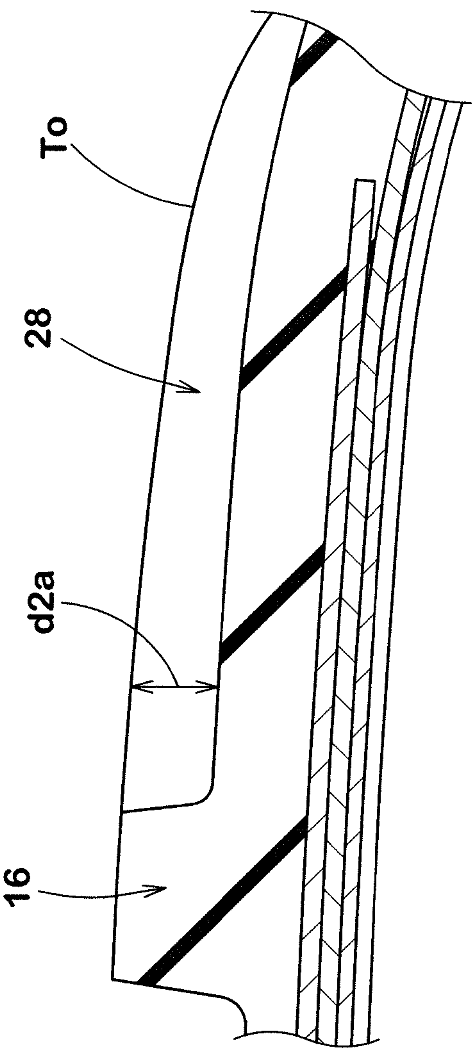


FIG.22

FIG.23

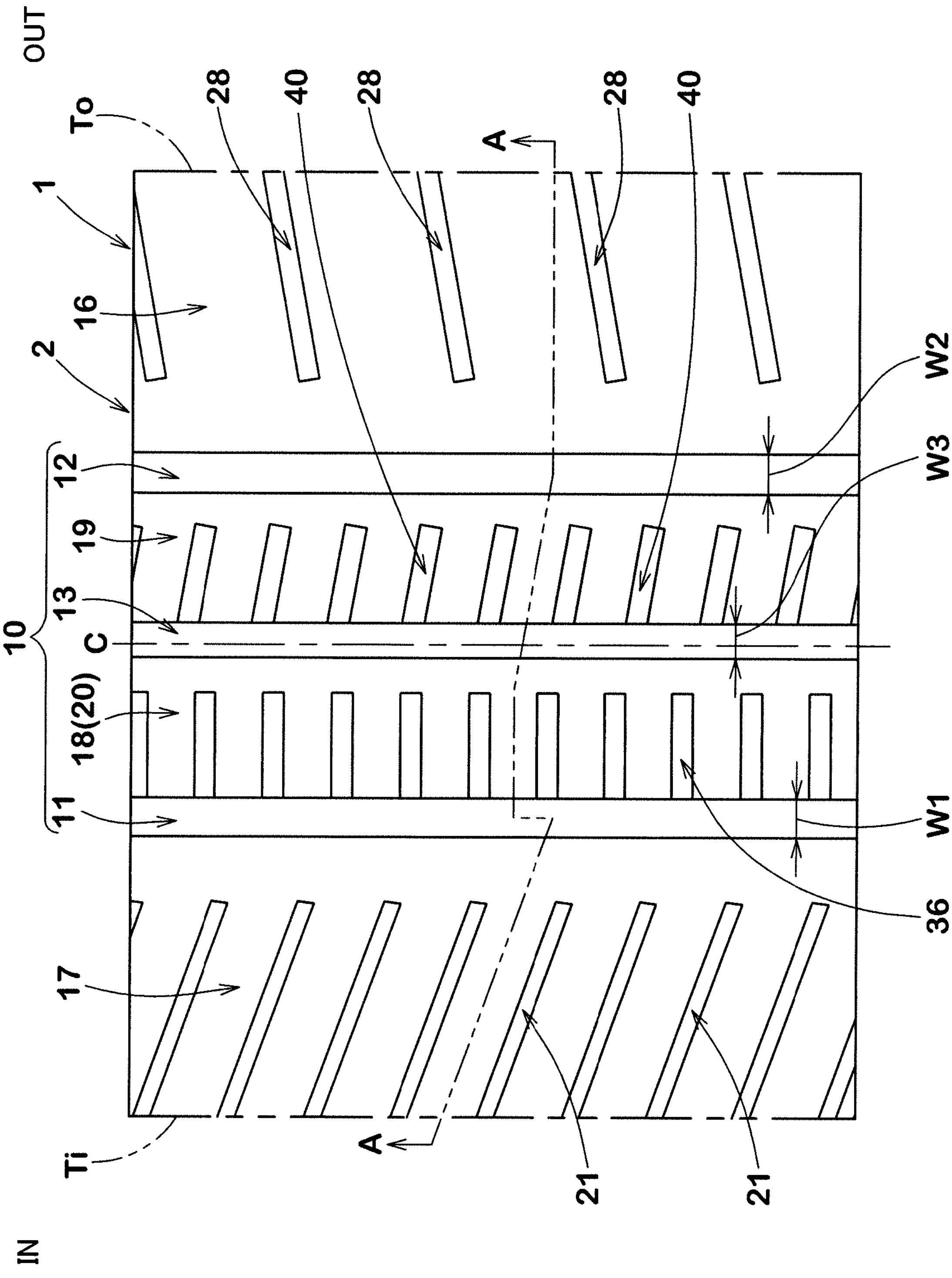
OUT
IN
To
Ti
1
2
16
28
40
28
28
40
A
A
12
19
13
C
10
18(20)
11
17
21
21
36
W1
W2
W3

FIG.24

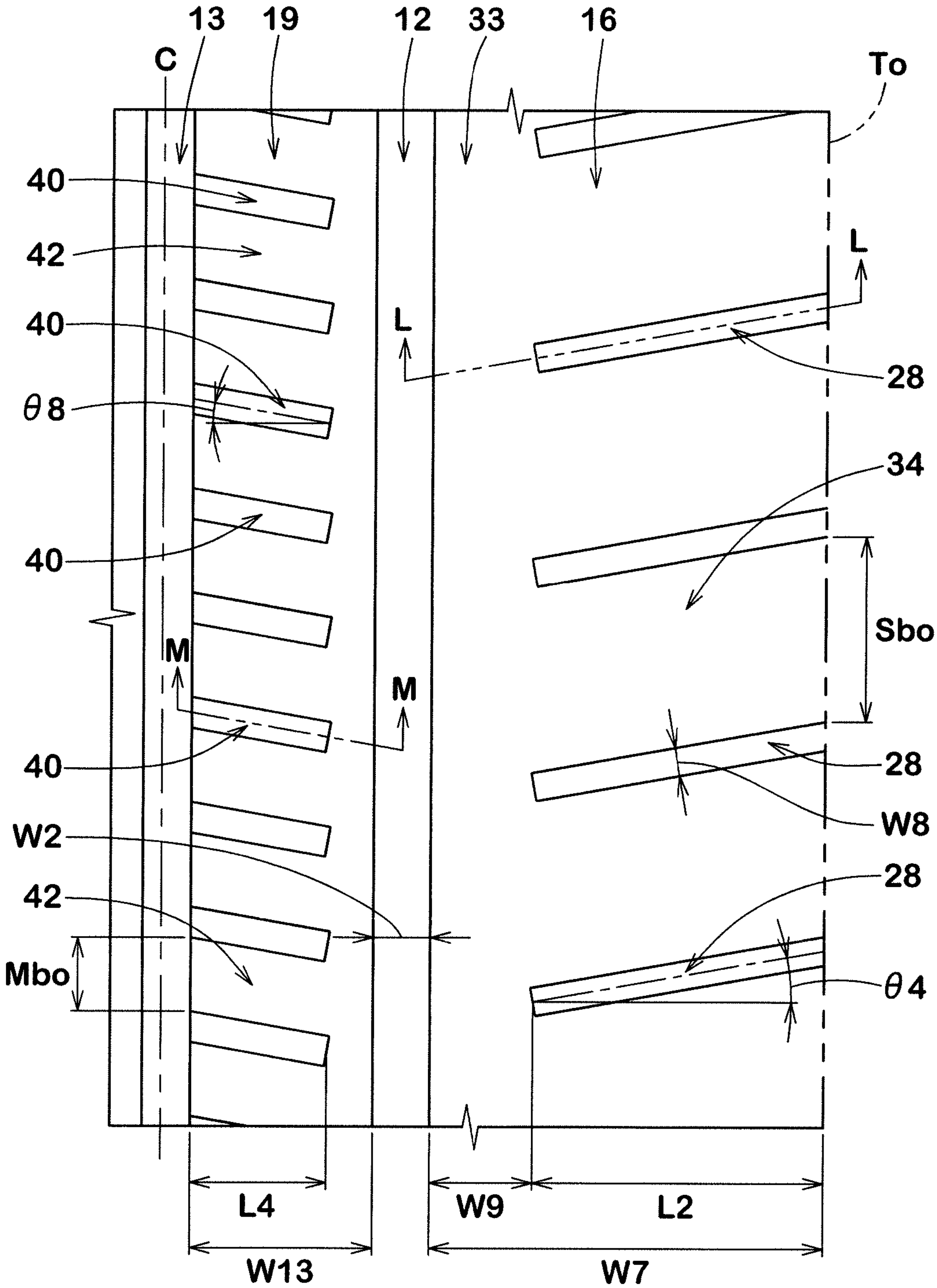
13
19
12
33
16
C
To
40
42
40
θ8
L
L
28
34
40
Sbo
M
M
40
28
W8
W2
42
28
Mbo
θ4
L4
W9
L2
W13
W7

FIG.25A

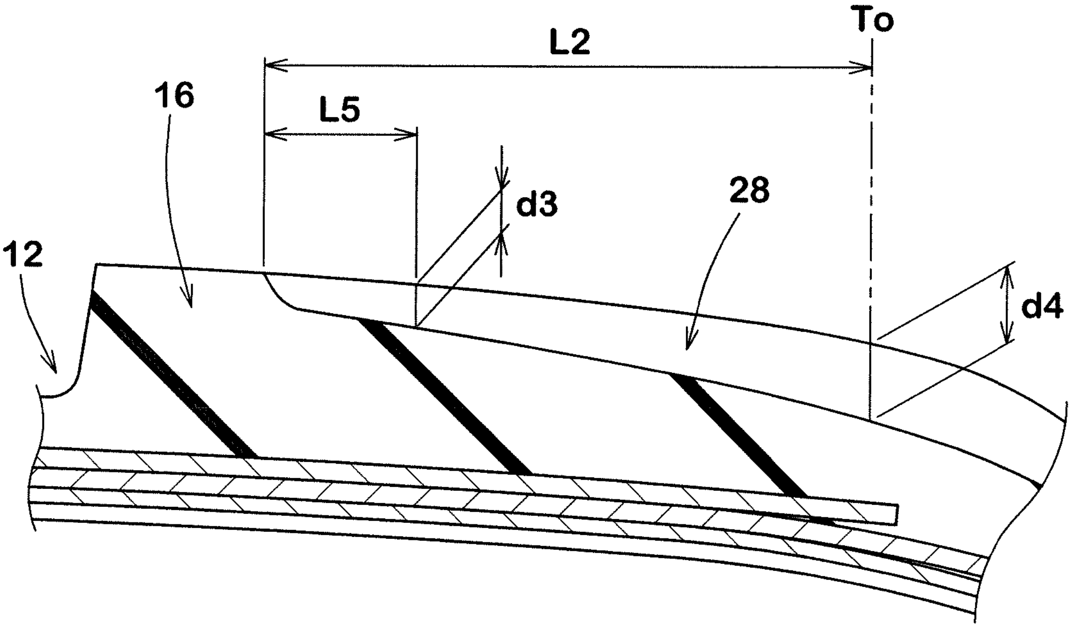


FIG.25B

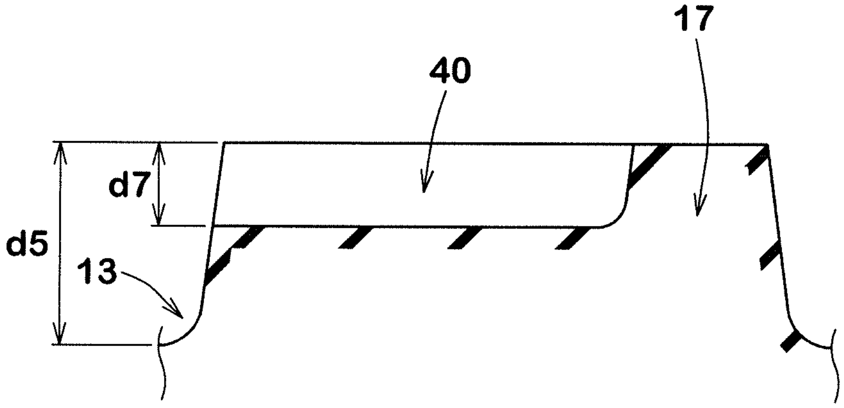

FIG.26

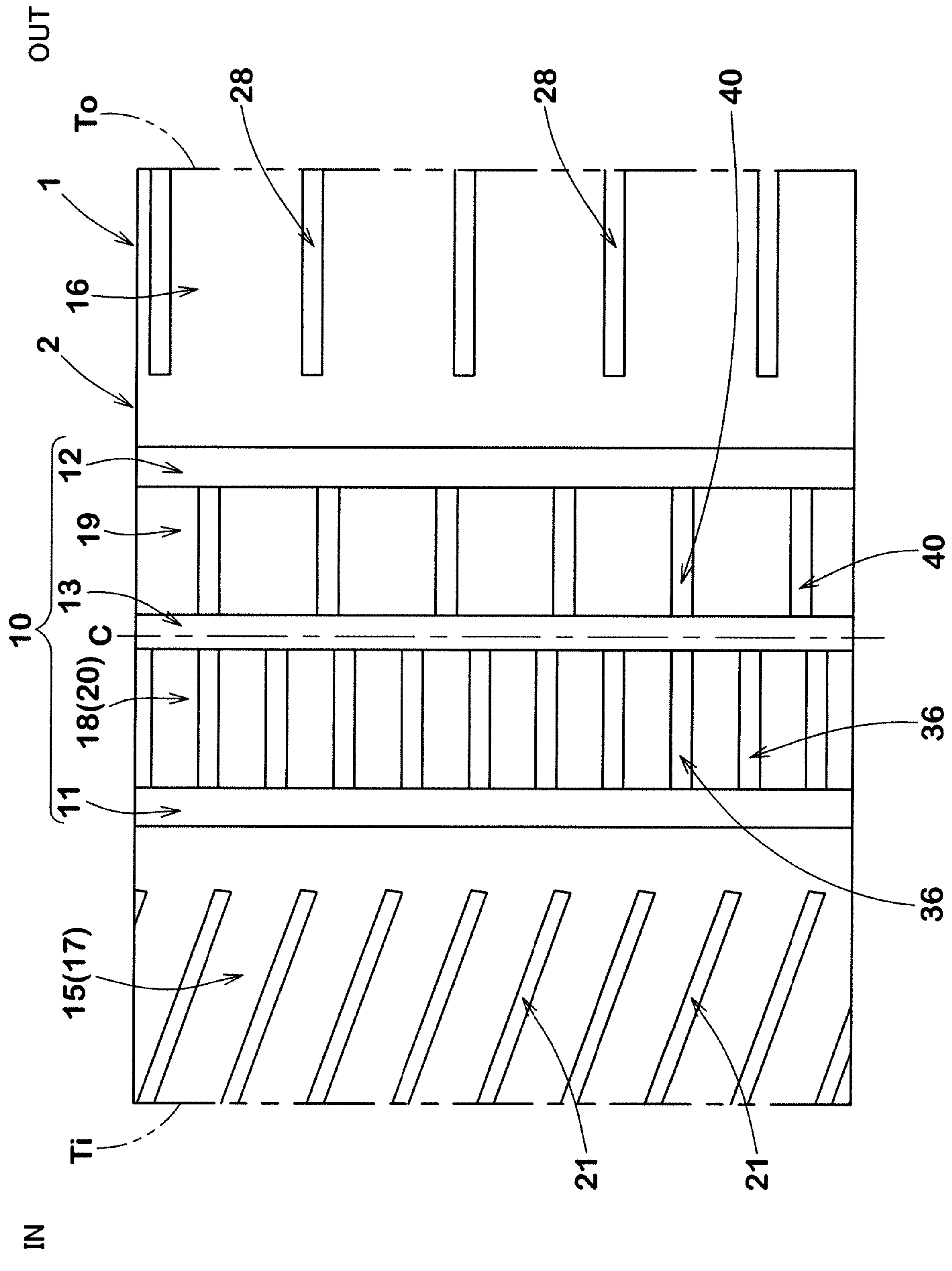

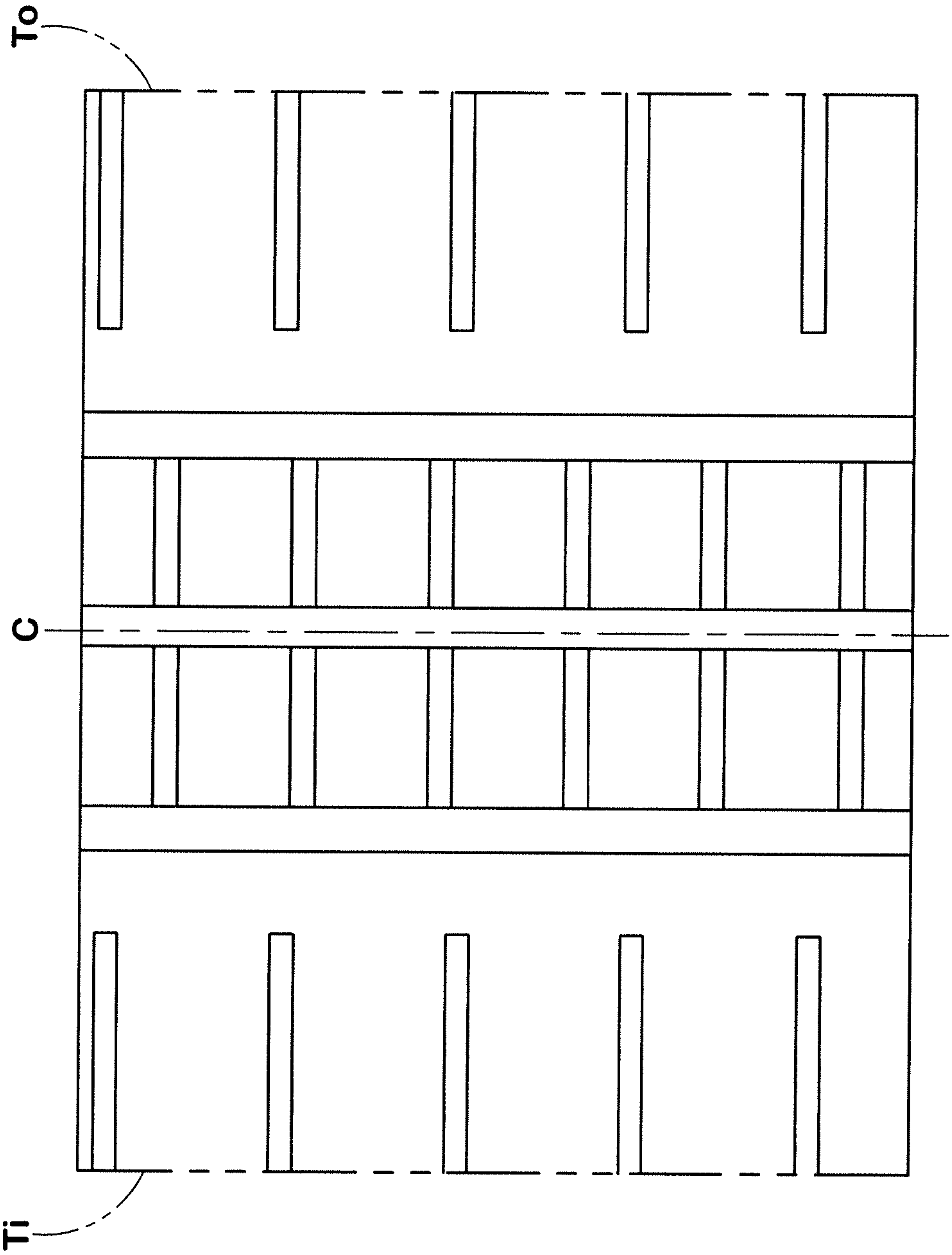


FIG.27

FIG.28

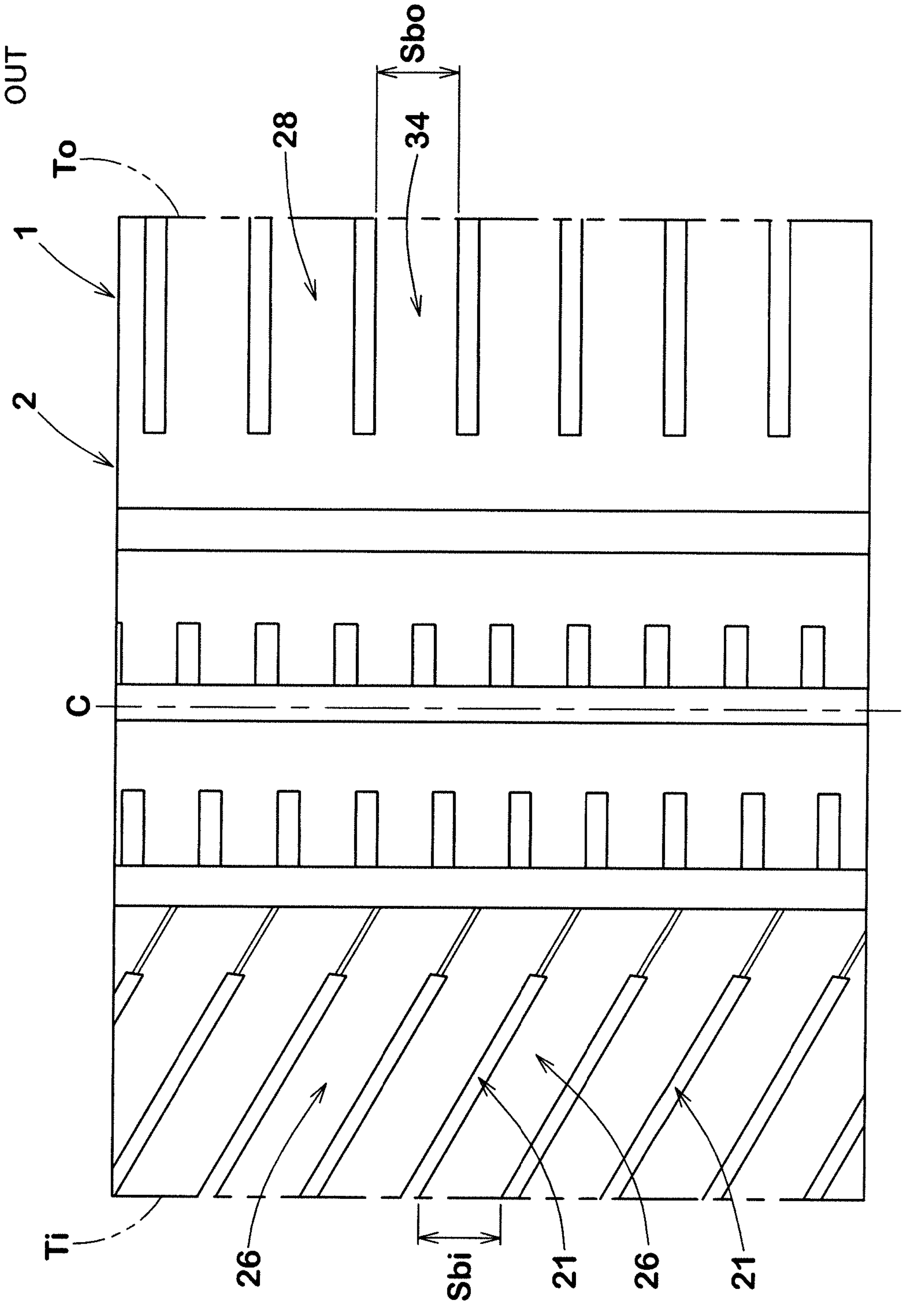

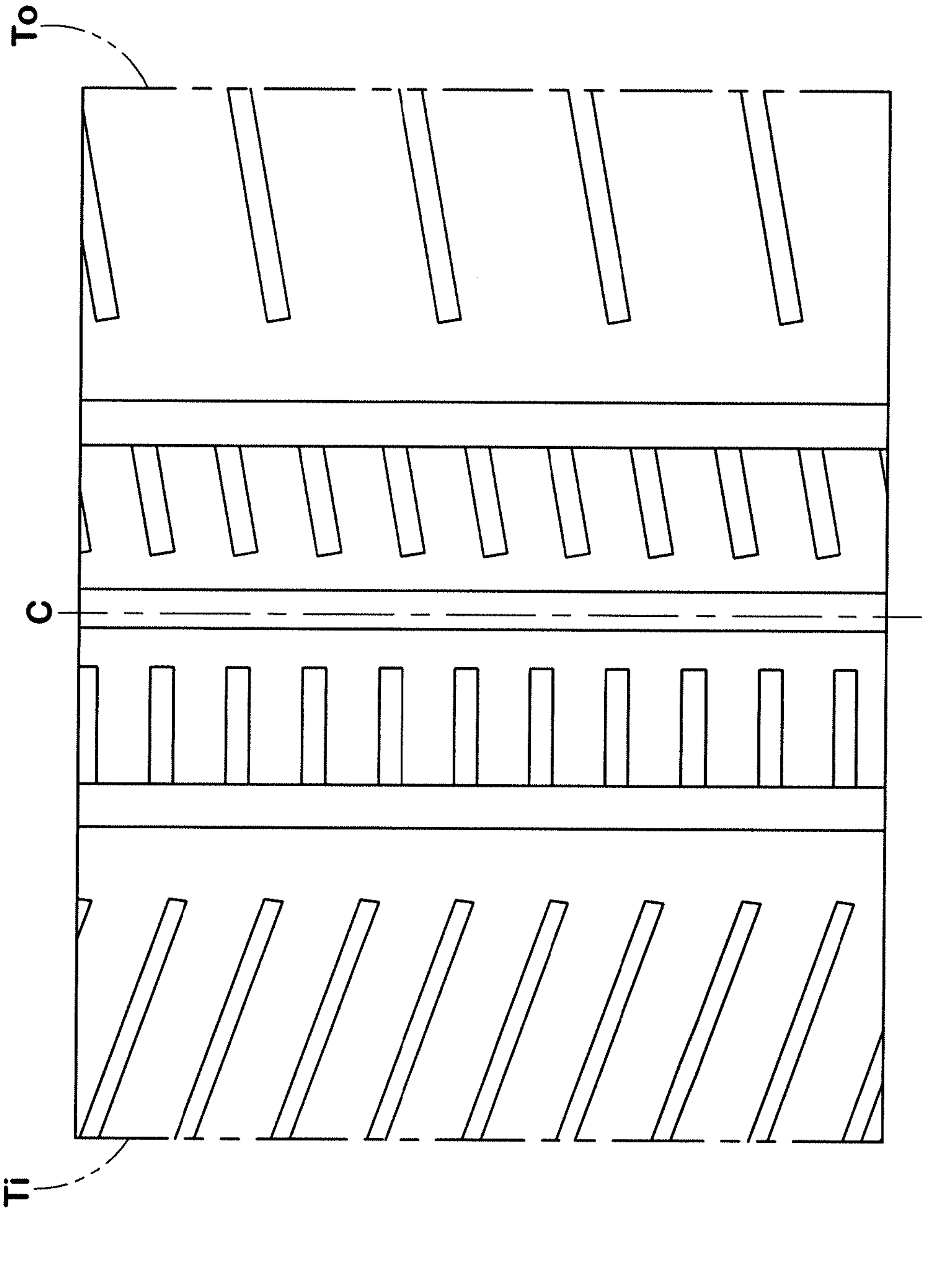


FIG.29

FIG.30

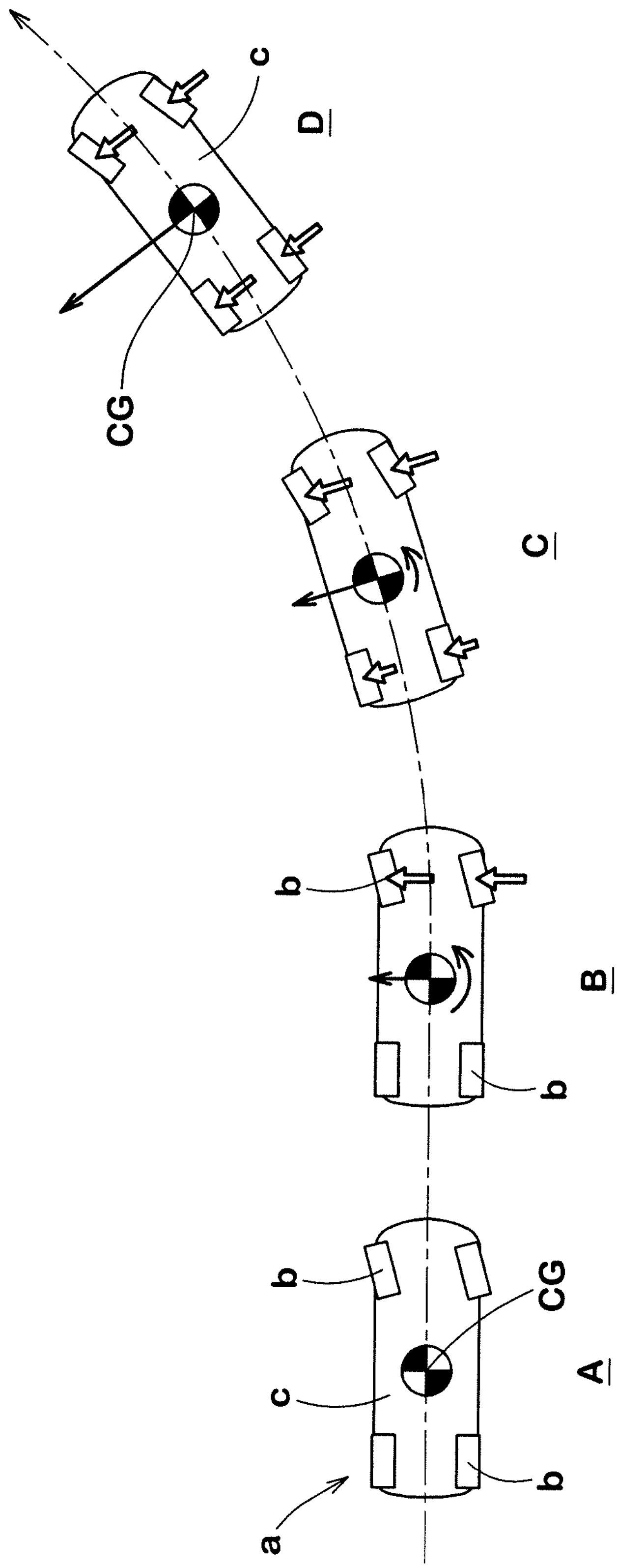

FIG.31

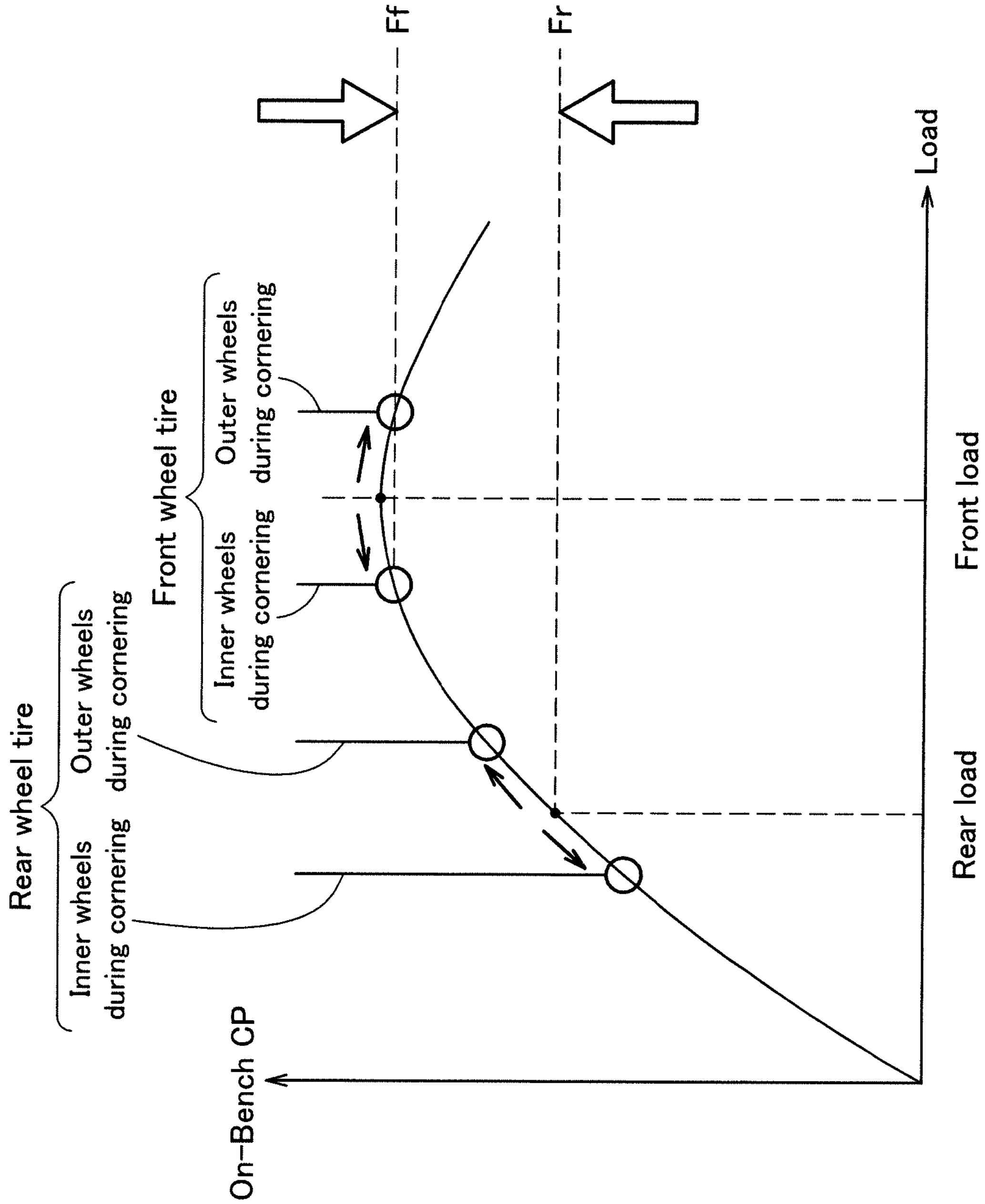

On-Bench CP
Load
Rear load
Front load
Ff
Fr
Rear wheel tire
Inner wheels during cornering
Outer wheels during cornering
Front wheel tire
Inner wheels during cornering
Outer wheels during cornering

FIG.32

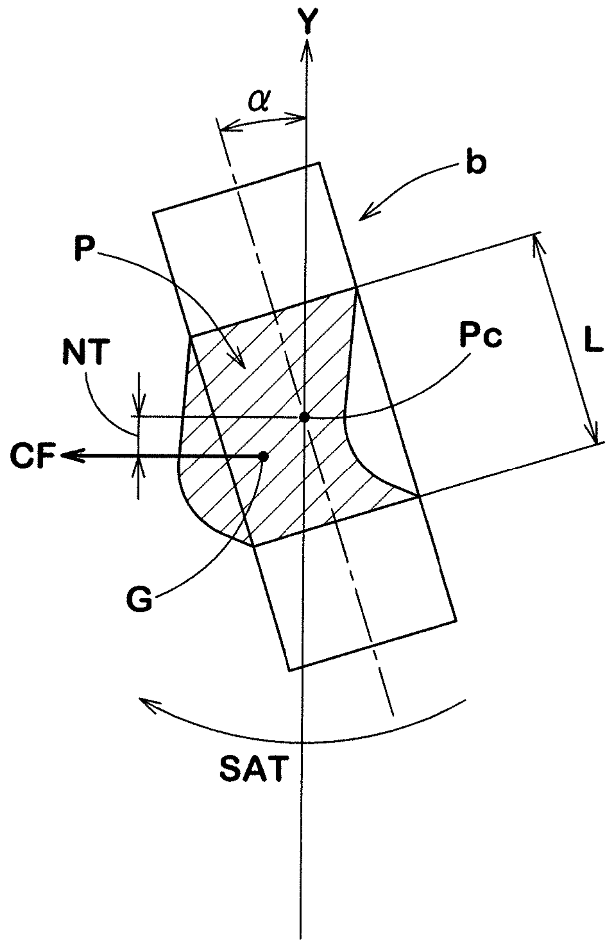

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016318349 A1
- US 2012060987 A1
- EP 2907677 A2
- EP 2732981 A2
- US 2014238566 A1